# EUROPEAN PATENT APPLICATION

(11) **EP 4 637 089 A1**
(43) Date of publication of application: **22.10.2025**
(21) Application number: 23901996.1
(22) Date of filing: 06.05.2023
(51) Int. Cl.: H04L 27/00, H04W 72/231

(54) **DOWNLINK CONTROL INFORMATION DECODING METHOD AND APPARATUS, AND DOWNLINK CONTROL INFORMATION GENERATING METHOD AND APPARATUS**

(30) Priority: 15.12.2022 WO PCT/CN2022/139406
(71) Applicant: Beijing Xiaomi Mobile Software Co., Ltd., Beijing 100085 (CN)
(72) Inventor: WANG, Lei, Beijing 100085 (CN)
(74) Representative: Stöckeler, Ferdinand
(86) International application number: PCT/CN2023/092568
(87) International publication number: WO 2024/124783

(57) **Abstract**

The present disclosure relates to the technical field of communications, and specifically relates to a downlink control information (DCI) decoding method and apparatus, and a DCI generating method and apparatus. The DCI decoding method comprises: determining the number of bits occupied by an information field in DCI for scheduling a plurality of cells; and decoding the DCI according to the number of bits. According to the present disclosure, when a network device schedules a plurality of cells by means of MC-DCI, a terminal can accurately determine information indicated by an information field in the MC-DCI for each scheduled cell, so as to perform data transmission on each scheduled cell according to the indicated information.

## Description

The present disclosure claims priority to Chinese patent application PCT/CN2022/139406, filed on December 15, 2022. The entire contents of all the aforementioned patent applications are incorporated herein by reference.

### FIELD

The present disclosure relates to the field of communication technologies, and specifically, to a method for decoding downlink control information, a method for generating downlink control information, an apparatus for decoding downlink control information, an apparatus for decoding downlink control information, a system for processing downlink control information, a communication apparatus, and a computer-readable storage medium.

### BACKGROUND

In related art, a downlink control information (DCI) in a scheduling cell is only allowed to schedule data of one cell, such as scheduling a Physical Uplink Shared Channel (PUSCH) or a Physical Downlink Shared Channel (PDSCH). With gradual increase in fragmentation of frequency resources, the demand for simultaneously scheduling data of multiple cells is increasing.

### SUMMARY

In view of this, embodiments of the present disclosure provide a method for decoding downlink control information, a method for generating downlink control information, an apparatus for decoding downlink control information, an apparatus for decoding downlink control information, a system for processing downlink control information, a communication apparatus, and a computer-readable storage medium, to solve technical problems in related art.

According to a first aspect of the embodiments of the present disclosure, a method for decoding downlink control information is provided, performed by a terminal, where the method includes: determining a quantity of bits occupied by an information field in downlink control information used to schedule multiple cells; and decoding the downlink control information according to the quantity of the bits.

According to a second aspect of the embodiments of the present disclosure, a method for generating downlink control information is provided, performed by a network device, where the method includes: determining a quantity of bits occupied by an information field in downlink control information used to schedule multiple cells; generating the downlink control information according to the quantity of the bits; and sending the downlink control information to a terminal.

According to a third aspect of the embodiments of the present disclosure, an apparatus for decoding downlink control information is provided, where the apparatus includes: a processing module, configured to determine a quantity of bits occupied by an information field in downlink control information used to schedule multiple cells; and decode the downlink control information according to the quantity of the bits.

According to a fourth aspect of the embodiments of the present disclosure, an apparatus for decoding downlink control information is provided, where the apparatus includes: a processing module, configured to determine a quantity of bits occupied by an information field in downlink control information used to schedule multiple cells; generate the downlink control information according to the quantity of the bits; and a sending module, configured to send the downlink control information to a terminal.

According to a fifth aspect of the embodiments of the present disclosure, a system for processing downlink control information is provided, including a terminal and a network device, where the terminal is configured to implement the method for decoding downlink control information described above, and the network device is configured to implement the method for generating downlink control information described above.

According to a sixth aspect of the embodiments of the present disclosure, a communication apparatus is provided, including: a processor; a memory configured to store a computer program; where when the computer program is executed by the processor, the method for decoding downlink control information described above is implemented.

According to a seventh aspect of the embodiments of the present disclosure, a communication apparatus is provided, including: a processor; a memory configured to store a computer program; where when the computer program is executed by the processor, the method for generating downlink control information described above is implemented.

According to an eighth aspect of the embodiments of the present disclosure, a computer-readable storage medium is provided, configured to store a computer program, where when the computer program is executed by a processor, the method for decoding downlink control information described above is implemented.

According to a ninth aspect of the embodiments of the present disclosure, a computer-readable storage medium is provided, configured to store a computer program, where when the computer program is executed by a processor, the method for generating downlink control information described above is implemented.

According to the embodiments of the present disclosure, the terminal can accurately determine the quantity of bits occupied by the information field in the multi-cell scheduling downlink control information (MC-DCI), so that the quantity of bits occupied by the information field in the MC-DCI determined by the terminal matches the situation where the network device uses the corresponding quantity of bits in the MC-DCI as the information field to indicate the cells, thereby accurately decoding the MC-DCI and the information field in the MC-DCI according to the quantity of bits occupied by the information field, accurately determining the information indicated by the information field in the MC-DCI for each scheduled cell when the network device schedules multiple cells through the MC-DCI, and thus performing data transmission on each scheduled cell according to the indicated information.

### BRIEF DESCRIPTION OF THE DRAWINGS

To describe the technical solutions in the embodiments of the present disclosure more clearly, the following briefly introduces the accompanying drawings required for describing the embodiments. Apparently, the accompanying drawings in the following description show merely some embodiments of the present disclosure, and a person of ordinary skill in the art may still derive other drawings from these accompanying drawings without creative efforts.
FIG. 1 is a schematic flowchart of a method for decoding downlink control information according to an embodiment of the present disclosure.
FIG. 2A is a schematic diagram of an association relationship between a value of an information field and indicated information according to an embodiment of the present disclosure.
FIG. 2B is a schematic diagram of another association relationship between a value of an information field and indicated information according to an embodiment of the present disclosure.
FIG. 3 is a schematic flowchart of another method for decoding downlink control information according to an embodiment of the present disclosure.
FIG. 4 is a schematic flowchart of yet another method for decoding downlink control information according to an embodiment of the present disclosure.
FIG. 5 is a schematic flowchart of yet another method for decoding downlink control information according to an embodiment of the present disclosure.
FIG. 6 is a schematic flowchart of yet another method for decoding downlink control information according to an embodiment of the present disclosure.
FIG. 7A is a schematic flowchart of yet another method for decoding downlink control information according to an embodiment of the present disclosure.
FIG. 7B is a schematic flowchart of yet another method for decoding downlink control information according to an embodiment of the present disclosure.
FIG. 7C is a schematic diagram of bits occupied by an information field according to an embodiment of the present disclosure.
FIG. 8 is a schematic flowchart of yet another method for decoding downlink control information according to an embodiment of the present disclosure.
FIG. 9 is a schematic flowchart of yet another method for decoding downlink control information according to an embodiment of the present disclosure.
FIG. 10 is a schematic diagram of reserved bits according to an embodiment of the present disclosure.
FIG. 11 is a schematic diagram of another reserved bits according to an embodiment of the present disclosure.
FIG. 12 is a schematic diagram of yet another reserved bits according to an embodiment of the present disclosure.
FIG. 13 is a schematic diagram of yet another reserved bits according to an embodiment of the present disclosure.
FIG. 14 is a schematic flowchart of yet another method for decoding downlink control information according to an embodiment of the present disclosure.
FIG. 15 is a schematic diagram of yet another reserved bits according to an embodiment of the present disclosure.
FIG. 16 is a schematic diagram of yet another reserved bits according to an embodiment of the present disclosure.
FIG. 17 is a schematic flowchart of a method for generating downlink control information according to an embodiment of the present disclosure.
FIG. 18 is a schematic block diagram of an apparatus for decoding downlink control information according to an embodiment of the present disclosure.
FIG. 19 is a schematic block diagram of an apparatus for generating downlink control information according to an embodiment of the present disclosure.
FIG. 20 is a schematic block diagram of an apparatus for downlink control information generation according to an embodiment of the present disclosure.
FIG. 21 is a schematic block diagram of an apparatus for downlink control information decoding according to an embodiment of the present disclosure.

### DETAILED DESCRIPTION

The following clearly and completely describes the technical solutions in the embodiments of the present disclosure with reference to the accompanying drawings in the embodiments of the present disclosure. Apparently, the described embodiments are merely some rather than all of the embodiments of the present disclosure. All other embodiments obtained by a person of ordinary skill in the art based on the embodiments of the present disclosure without creative efforts shall fall within the protection scope of the present disclosure.

The terms used in the embodiments of the present disclosure are merely for the purpose of describing specific embodiments and are not intended to limit the present disclosure. The singular forms "a" and "the" used in the embodiments of the present disclosure and the appended claims are also intended to include plural forms, unless the context clearly indicates otherwise. It should also be understood that the term "and/or" used herein refers to and includes any or all possible combinations of one or more associated listed items.

It should be understood that although the terms "first," "second," "third," and the like may be used in the embodiments of the present disclosure to describe various information, the information should not be limited by these terms. These terms are only used to distinguish the same type of information from each other. For example, without departing from the scope of the embodiments of the present disclosure, first information may also be referred to as second information, and similarly, second information may also be referred to as first information. Depending on the context, the word "if" as used herein may be interpreted as "when," "while," or "in response to determining."

For the sake of brevity and ease of understanding, the terms "greater than" or "less than," "higher than" or "lower than" are used herein to characterize size relationships. However, those skilled in the art may understand that the term "greater than" also encompasses the meaning of "greater than or equal to," and "less than" also encompasses the meaning of "less than or equal to"; the term "higher than" encompasses the meaning of "higher than or equal to," and "lower than" also encompasses the meaning of "lower than or equal to."

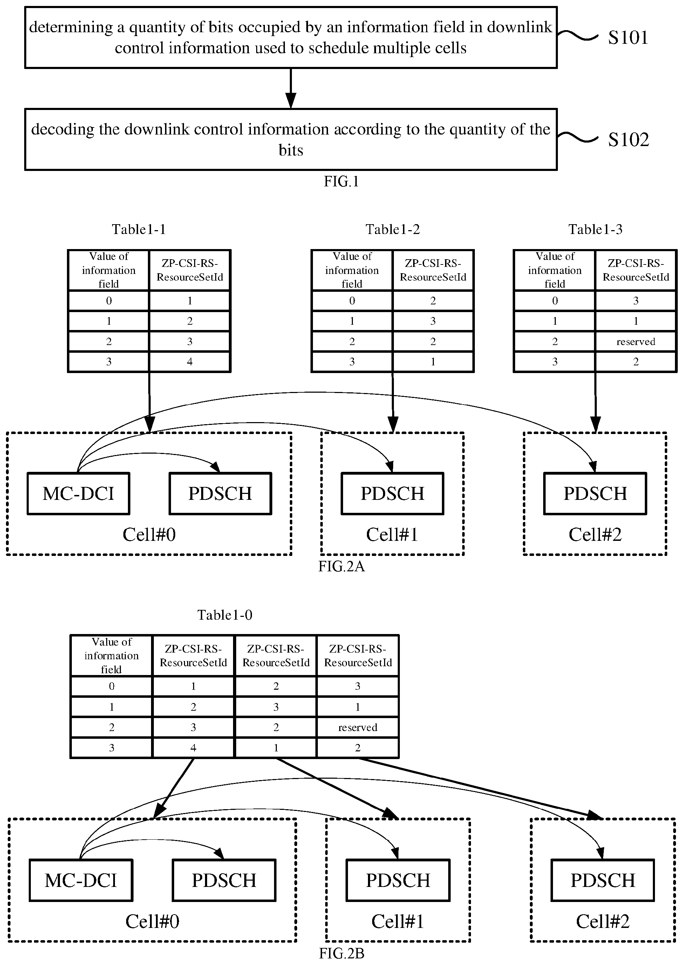

FIG. 1 is a schematic flowchart of a method for decoding downlink control information according to an embodiment of the present disclosure. The method for decoding downlink control information shown in this embodiment may be performed by a terminal, where the terminal includes, but is not limited to, communication devices such as mobile phones, tablet computers, wearable devices, sensors, and Internet of Things (IoT) devices. The terminal may communicate with a network device, where the network device includes, but is not limited to, network devices in communication systems such as 4G, 5G, and 6G, for example, base stations, core networks, and the like.

As shown in FIG. 1, the method for decoding downlink control information may include the following steps:
In step S101, determining a quantity of bits occupied by an information field in downlink control information used to schedule multiple cells;
In step S102, decoding the downlink control information according to the quantity of the bits.

The embodiments of the present disclosure propose downlink control information used to schedule multiple cells, which may also be referred to as multi-cell scheduling downlink control information, for example, written as Multi-cell scheduling DCI, abbreviated as MC-DCI. For convenience of illustration, some downlink control info801rmation used to schedule multiple cells is referred to as MC-DCI below.

The MC-DCI may be used to schedule multiple cells, specifically, it may be used to schedule data of multiple cells, for example, scheduling PUSCH, PDSCH, etc. of one or more cells in multiple cells, thereby realizing scheduling of multiple cells through one DCI.

In an embodiment, the cell where the terminal receives the MC-DCI may be referred to as a scheduling cell, and the cells scheduled by the MC-DCI may be referred to as scheduled cells, which are all or part of the cells that the MC-DCI can schedule.

It should be noted that, in all embodiments of the present disclosure, regarding the cells that the MC-DCI can schedule, it may be determined according to the cell set corresponding to the MC-DCI, for example, first determine the cell set corresponding to the MC-DCI, and then determine the cells in the cell set as the cells that the MC-DCI can schedule. where, the cell set may be a set composed of cells with the same configuration parameters (such as set identifiers, resources, indexes, etc.), or may be any cell group that the MC-DCI can schedule, or may be the union of cells in each cell group that the MC-DCI can schedule, where the cell groups that the MC-DCI can schedule may be configured through signaling.

Alternatively, the cells that the MC-DCI can schedule may be determined according to the configuration signaling of the network device, or the cells that the MC-DCI can schedule may be determined according to the capability of the terminal.

In addition, the terminal may first determine the cells that the MC-DCI can schedule, and then determine the set of all cells that the MC-DCI can schedule as the cell set corresponding to the MC-DCI.

The MC-DCI is provided with multiple information fields (fields, which may also be referred to as domains) for indicating various types of information, for example, a Bandwidth Part Indicator (BWP indicator) information field, which may be used to indicate the BWP where the data is transmitted, for example, a Frequency Domain Resource Assignment (FDRA) information field, which may be used to indicate the frequency domain resources used for data transmission. When scheduling multiple cells through the MC-DCI, the information of the scheduled cells may be indicated through the information fields in the MC-DCI, for example, the BWP indicator information field may indicate the BWP where the data is transmitted in the scheduled cells (for example, indicating the BWP id).

The MC-DCI schedules one or more cells among the cells it can schedule. Considering that the one or more cells scheduled by the MC-DCI each time may be different, this leads to changes in the cells that need to be indicated by the information fields in the MC-DCI, thereby causing changes in the information fields in the MC-DCI. In order to accurately decode the MC-DCI and the information fields in the MC-DCI, at least the quantity of bits occupied by the information fields in the MC-DCI needs to be determined.

According to the embodiments of the present disclosure, the terminal can accurately determine the quantity of bits occupied by the information fields in the MC-DCI, so that the quantity of bits occupied by the information fields in the MC-DCI determined by the terminal matches the situation where the network device uses the corresponding quantity of bits in the MC-DCI as the information fields to indicate the cells, thereby accurately decoding the MC-DCI and the information fields in the MC-DCI according to the quantity of bits occupied by the information fields, accurately determining the information indicated by the information fields in the MC-DCI for each scheduled cell when the network device schedules multiple cells through the MC-DCI, and thus performing data transmission on each scheduled cell according to the indicated information.

In an embodiment, the method further includes:
determining a type of the information field.

In an embodiment, the type includes at least one of the following:
a first type, where the downlink control information includes a first information field, and the first information field of the first type is used to indicate first information of all cells scheduled by the downlink control information;
a second type, where the downlink control information includes a second information field, and the second information field of the second type is used to indicate an index of a combination of second information of at least one scheduled cell;
a third type, where the downlink control information includes at least one third information field, and each third information field of the at least one third information field indicates third information of a single scheduled cell;
a fourth type, where the information field of the fourth type may be determined as the first type, the second type, or the third type through predefined or configured methods.

In an embodiment, the information fields in the MC-DCI may be divided into several types based on the manner of indicating the information of the scheduled cells, including but not limited to the above three types.

The first type may also be referred to as Type1-A, the second type may also be referred to as Type1-B, the third type may also be referred to as Type2, and the fourth type may be referred to as Type3.

In an embodiment, the information field of the first type includes at least one of the following: a BWP indicator information field, a Virtual Resource Block to Physical Resource Block mapping (VRB-to-PRB mapping) information field, a Physical Resource Block bundling size indicator (PRB bundling size indicator) information field, a Demodulation Reference Signal sequence initialization (DMRS sequence initialization) information field, an Antenna ports information field, a Precoding information and number of layers information field, a Sounding Reference Signal resource indicator (SRS resource indicator) information field, a Frequency hopping flag information field, or an Open-loop power control parameter set indication information field.

For example, the type of the Antenna ports information field is the fourth type, and the network device may predefine or configure the Antenna ports information field as the first type of information field, or predefine or configure it as the third type of information field.

Taking the first information field of the first type as an example, the first information of all cells currently scheduled by the MC-DCI may be indicated through one first information field.

For example, the first information field is the BWP indicator information field, indicating that the BWP id is 1, that is, indicating BWP id=1. If the cells currently scheduled by the MC-DCI include Cell#2 and Cell#3, and Cell#2 and Cell#3 are configured with at least one BWP, then the network device may indicate through the BWP indicator information field in the MC-DCI that the BWP to be used for communication on Cell#2 and Cell#3 is the BWP with id=1. The terminal may determine according to the BWP indicator information field in the MC-DCI that the BWP with id=1 needs to be used for communication on Cell#2 and Cell#3. If Cell#2 and Cell#3 are currently communicating on other BWPs corresponding to BWP id (for example, the BWP with id=2), it may be determined that Cell#2 and Cell#3 need to perform BWP switching and switch to the BWP with id=1.

In an embodiment, the information field of the second type includes at least one of the following: a Zero Power Channel State Information Reference Signal trigger (ZP CSI-RS trigger) information field, a Rate matching indicator information field, a Transmission Configuration Indication (TCI) information field, a Sounding Reference Signal request (SRS request) information field, or a Sounding Reference Signal offset indicator (SRS offset indicator) information field.

Taking the second information field of the second type as an example, the index of the combination of the second information of all cells currently scheduled by the MC-DCI may be indicated through one second information field.

FIG. 2A is a schematic diagram of an association relationship between a value of an information field and indicated information according to an embodiment of the present disclosure.

In an embodiment, the association relationship between the value of the second information field corresponding to each cell and the indicated information may be determined. According to the association relationship, the second information indicated by the value of the second information field for the cell may be determined. Then, for multiple cells, the second information indicated by the value of the second information field for the multiple cells respectively may be determined, that is, the value of the second information field may indicate multiple pieces of second information, and the indicated multiple pieces of second information may be used as a combination of second information, and the value of the second information field may be used as the index of the combination of second information.

For example, as shown in FIG. 2A, the scheduling cell is Cell#0, and the scheduled cells include Cell#0, Cell#1, and Cell#2. The MC-DCI received by the terminal on Cell#0 may schedule Cell#0, and may also schedule Cell#1 and Cell#2, that is, the scheduled cells may include the scheduling cell.

The terminal may receive the association relationship between the value of the information field corresponding to Cell#0 and the indicated information on Cell#0, for example, it may be characterized in the form of a table Table1-1. Based on Table1-1, for Cell#0, when the value of the ZP CSI-RS trigger information field is 0, it is used to indicate that the Zero Power Channel State Information Reference Signal Resource Set Identifier (ZP-CSI-RS ResourceSetID) is 1; when the value is 1, it is used to indicate that the ZP-CSI-RS ResourceSetID is 2; when the value is 2, it is used to indicate that the ZP-CSI-RS ResourceSetID is 3; and when the value is 3, it is used to indicate that the ZP-CSI-RS ResourceSetID is 4.

The terminal may receive the association relationship between the value of the information field corresponding to Cell#1 and the indicated information on Cell#1, for example, it may be characterized in the form of a table Table1-2. Based on Table1-2, for Cell#1, when the value of the ZP CSI-RS trigger information field is 0, it is used to indicate that the ZP-CSI-RS ResourceSetID is 2; when the value is 1, it is used to indicate that the ZP-CSI-RS ResourceSetID is 3; when the value is 2, it is used to indicate that the ZP-CSI-RS ResourceSetID is 2; and when the value is 3, it is used to indicate that the ZP-CSI-RS ResourceSetID is 1.

The terminal may receive the association relationship between the value of the information field corresponding to Cell#2 and the indicated information on Cell#2, for example, it may be characterized in the form of a table Table1-3. Based on Table1-3, for Cell#2, when the value of the ZP CSI-RS trigger information field is 0, it is used to indicate that the ZP-CSI-RS ResourceSetID is 3; when the value is 1, it is used to indicate that the ZP-CSI-RS ResourceSetID is 1; when the value is 2, it is used to indicate that the ZP-CSI-RS ResourceSetID is reserved; and when the value is 3, it is used to indicate that the ZP-CSI-RS ResourceSetID is 2.
where, the association relationship between the value of the information field and the indicated information may be carried in a Radio Resource Control (RRC) signaling and sent to the terminal, for example, the RRC signaling received on Cell#0 carries Table1-1, the RRC signaling received on Cell#1 carries Table1-2, and the RRC signaling received on Cell#2 carries Table1-3.

For example, if the value of the ZP CSI-RS trigger information field in the MC-DCI received by the terminal on Cell#0 is 1, then according to the above Table1-1, Table1-2, and Table1-3, it may be determined that the information combination corresponding to index 1 is 2, 3, 1, that is, for Cell#0, the information indicated by the ZP CSI-RS trigger information field is that the ZP-CSI-RS ResourceSetID is 2; for Cell#1, the information indicated by the ZP CSI-RS trigger information field is that the ZP-CSI-RS ResourceSetID is 3; and for Cell#2, the information indicated by the ZP CSI-RS trigger information field is that the ZP-CSI-RS ResourceSetID is 1.

FIG. 2B is a schematic diagram of another association relationship between a value of an information field and indicated information according to an embodiment of the present disclosure.

It should be understood that the association relationship between the value of the information field corresponding to each cell and the indicated information may be configured on each cell respectively, for example, as shown in the embodiment of FIG. 2A, Table1-1 is configured on Cell#0, Table1-2 is configured on Cell#1, and Table1-3 is configured on Cell#3.

Alternatively, the association relationship between the value of the information field corresponding to each cell and the indicated information may also be configured on one cell, for example, the above Table1-1, Table1-2, and Table1-3 may be integrated into a table Table1-0 and configured to the terminal on Cell#0, for example, as shown in FIG. 2B, where the correspondence between the information indicated by the value of the information field in each column of the table and the cell may be determined according to protocol agreement, or may be configured by the network device.

For example, the correspondence can be established by aligning the information indicated by the values of each column of information field in the table with cell identifiers in ascending order. In this case, the first column "ZP-CSI-RS ResourceSetID" corresponds to Cell#0, the second column "ZP-CSI-RS ResourceSetID" corresponds to Cell#1, and the third column "ZP-CSI-RS ResourceSetID" corresponds to Cell#2.

For example, if the value of the ZP CSI-RS trigger information field in the MC-DCI received by the terminal on Cell#0 is 0, then according to the above Table1-0, it may be determined that the information combination corresponding to index 1 is 1, 2, 3, that is, for Cell#0, the information indicated by the ZP CSI-RS trigger information field is that the ZP-CSI-RS ResourceSetID is 1; for Cell#1, the information indicated by the ZP CSI-RS trigger information field is that the ZP-CSI-RS ResourceSetID is 2; and for Cell#2, the information indicated by the ZP CSI-RS trigger information field is that the ZP-CSI-RS ResourceSetID is 3.

In an embodiment, the information field of the third type includes at least one of the following: a Modulation and Coding Scheme (MCS) information field, a Hybrid Automatic Repeat reQuest process number (HARQ process number) information field, an FDRA information field, an Antenna ports information field, a Precoding information and number of layers information field, an SRS resource indicator information field, a Transmit power control command for scheduled PUSCH (TPC command for scheduled PUSCH) information field, a Phase-tracking reference signal-Demodulation reference signal association (PTRS-DMRS association) information field, or an SRS resource indicator information field.

Taking the third information field of the third type as an example, a single third information field may indicate the information of a single cell. Therefore, when scheduling at least one cell through the MC-DCI, the MC-DCI may include at least one third information field, where a single third information field indicates the information of a single scheduled cell.

When the MC-DCI schedules multiple cells, the MC-DCI may indicate the information of multiple scheduled cells through multiple third information fields. Therefore, it is necessary to determine the correspondence between the bits occupied by the at least one third information field and the identifiers of the at least one scheduled cell.

For example, the correspondence between the bits occupied by the at least one third information field and the identifiers of the at least one scheduled cell (the cells scheduled by the MC-DCI at the current time) may be corresponding the at least one scheduled cell to the bits occupied by the at least one third information field with cell identifiers in ascending order.

For example, the correspondence between the bits occupied by the at least one third information field and the identifiers of the at least one scheduled cell (the cells scheduled by the MC-DCI at the current time) may be corresponding the at least one scheduled cell to the bits occupied by the at least one third information field with cell identifiers in descending order.

According to the above embodiments, it can be seen that some information fields in the MC-DCI may belong to different types. For example, the Antenna ports information field can belong to both the first type and the third type. Therefore, it is necessary to determine the type of the information field, where the operation of determining the type of the information field can be performed when the information field can belong to multiple types.

In an embodiment, the method for determining the type of the information field includes at least one of the following:
determining the type of the information field according to the signaling of the scheduling cell;
determining the type of the information field according to the signaling of the reference cell;
determining the type of the information field according to the downlink control information.

In an embodiment, the signaling can be received by the scheduling cell, and the type of one or more information fields in the MC-DCI can be determined according to the received signaling.

In an embodiment, the signaling can be received by the reference cell, and the type of one or more information fields in the MC-DCI can be determined according to the received signaling.

In an embodiment, the reference cell includes at least one of the following:
a cell used to calculate the size (i.e., the quantity of bits occupied) of the downlink control information;
a cell used to calculate the blind detection resource (e.g., BD, CCE, where BD stands for Blind Detection, and CCE stands for Control Channel Element) of the downlink control information;
a cell configured with a search space corresponding to the downlink control information.

In an embodiment, the type of one or more information fields in the MC-DCI can be determined according to the MC-DCI. For example, when indicating the type of a certain information field, it can be indicated by the bits occupied by the information field. Taking the Antenna ports information field as an example, it can belong to two types, so only one bit is needed for indication. The bit used to indicate the type of the information field can be the Most Significant Bit (MSB) of the information field or the Least Significant Bit (LSB) of the information field. For example, when the bit used to indicate the type of the information field is 1, it can indicate that the Antenna ports information field belongs to the first type; when the bit used to indicate the type of the information field is 0, it can indicate that the Antenna ports information field belongs to the third type.

In an embodiment, the terminal can first determine whether the fourth information field in the MC-DCI can belong to multiple types according to the RRC signaling. When it is determined that the fourth information field in the MC-DCI can belong to multiple types, after receiving the MC-DCI, the specific type to which the fourth information field belongs can be determined according to the bits in the fourth information field.

For example, the RRC signaling can indicate the type to which the fourth information field in the MC-DCI belongs, such as the first type, the second type, the third type, or a dynamic type. When the terminal determines according to the RRC signaling that the fourth information field in the MC-DCI belongs to one of the first type, the second type, or the third type, it is not necessary to further determine the specific type to which the fourth information field belongs according to the MC-DCI. When the terminal determines according to the RRC signaling that the fourth information field in the MC-DCI belongs to the dynamic type, it is necessary to further determine the specific type to which the fourth information field belongs according to the MC-DCI, such as one of the first type, the second type, or the third type.

The following uses several embodiments to exemplify how to determine the quantity of bits occupied by the information field in the downlink control information used to schedule multiple cells in cases where the information field in the MC-DCI belongs to the first type, the second type, the third type, etc.

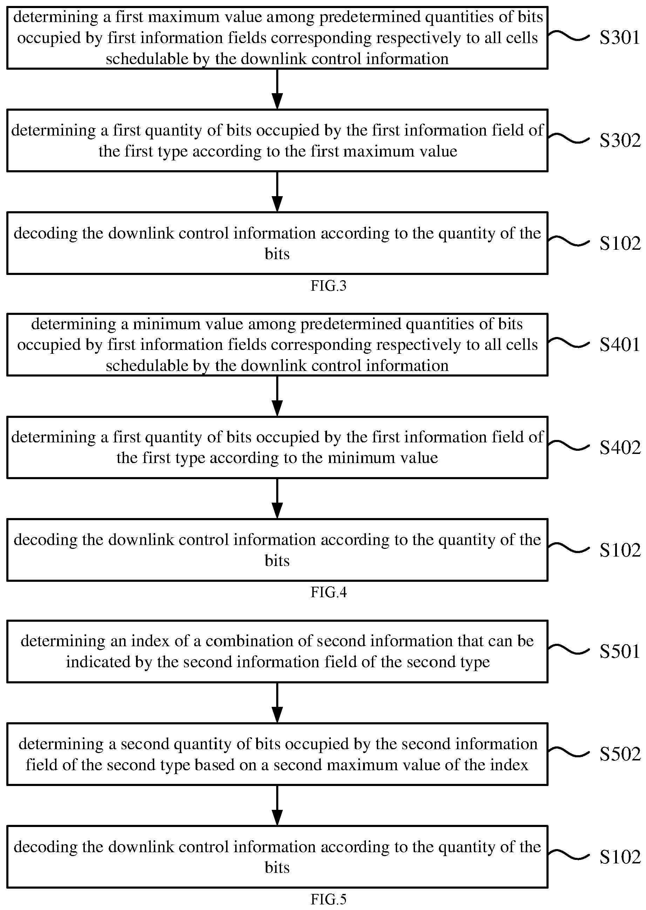

FIG. 3 is a schematic flowchart of another method for decoding downlink control information according to an embodiment of the present disclosure. As shown in FIG. 3, determining the quantity of bits occupied by the information field in the downlink control information used to schedule multiple cells includes:
In step S301, determining a first maximum value among predetermined quantities of bits occupied by first information fields corresponding respectively to all cells schedulable by the downlink control information;
In step S302, determining a first quantity of bits occupied by the first information field of the first type according to the first maximum value.

It should be noted that the embodiment shown in FIG. 3 can be implemented independently or in combination with at least one other embodiment of the present disclosure, which is not limited herein.

In an embodiment, for the cells that the MC-DCI can schedule, the terminal can determine the predetermined quantity of bits occupied by the first information field corresponding to the cell, for example, it can be determined according to the configuration signaling of the network device or according to predefined rules, such as according to the communication protocol 38.212[2], where the first maximum value refers to the maximum quantity among the predetermined quantities of bits occupied by first information fields corresponding respectively to all cells.

For example, the cells that the MC-DCI can schedule are Cell#1, Cell#2, Cell#3, and Cell#4, a total of 4 cells. Taking the Antenna ports information field as an example, the predetermined quantities of bits occupied by the Antenna ports information fields corresponding respectively to these 4 cells are shown in Table 1 below.

**Table 1**

| Cell Identifier | Predetermined quantity of bits occupied by the Antenna ports information field corresponding to cell |
|---|---|
| 1 | 4 |
| 2 | 6 |
| 3 | 4 |
| 4 | 5 |

It should be understood that each element in the tables shown in all embodiments of the present disclosure exists independently. These elements are exemplarily listed in the same table, but this does not mean that all elements in the table must exist simultaneously according to what is shown in the table. The value of each element does not depend on the value of any other element in the table. Therefore, those skilled in the art can understand that the value of each element in the table is an independent embodiment.

As shown in Table 1, for the cell with cell identifier 1, Cell#1, the predetermined quantity of bits occupied by the Antenna ports information field corresponding to it is 4; for the cell with cell identifier 2, Cell#2, the predetermined quantity of bits occupied by the Antenna ports information field corresponding to it is 6; for the cell with cell identifier 3, Cell#3, the predetermined quantity of bits occupied by the Antenna ports information field corresponding to it is 4; for the cell with cell identifier 4, Cell#4, the predetermined quantity of bits occupied by the Antenna ports information field corresponding to it is 5.

Further, the terminal can determine the first quantity of bits occupied by the first information field of the first type according to the first maximum value among the predetermined quantities of bits occupied by the first information fields corresponding respectively to all cells that the MC-DCI can schedule. For example, it can be determined that the first quantity of bits occupied by the first information field of the first type is equal to the first maximum value among the predetermined quantities of bits occupied by the first information fields corresponding respectively to all cells that the MC-DCI can schedule.

For example, the first information field is the Antenna ports information field. Based on Table 1 above, the quantity of bits occupied by the Antenna ports information field is equal to the first maximum value among the predetermined quantities of bits occupied by the Antenna ports information fields corresponding respectively to all cells that the MC-DCI can schedule, where the first maximum value among the predetermined quantities of bits occupied by the Antenna ports information field corresponding respectively to the 4 cells is 6, so the quantity of bits occupied by the Antenna ports information field is equal to 6.

It should be noted that the cells that the MC-DCI can schedule can be determined according to the cell set corresponding to the MC-DCI. For example, firstly the cell set corresponding to the MC-DCI is determine, and then determine that the cells in the cell set are the cells that the MC-DCI can schedule. The cell set can be a set composed of cells with the same configuration parameters (such as set identifiers, resources, indexes, etc.), or it can be any cell group that the MC-DCI can schedule, or it can be the union of cells in each cell group that the MC-DCI can schedule.

Alternatively, the cells that the MC-DCI can schedule can be determined according to the configuration signaling of the network device, or the cells that the MC-DCI can schedule can be determined according to the capability of the terminal.

In an embodiment, determining the quantity of bits occupied by the information field in the downlink control information used to schedule multiple cells includes:
determining a third maximum value among quantities of bits occupied by the first information fields corresponding respectively to all the cells schedulable by the downlink control information;
determining the first quantity of bits occupied by the first information field of the first type according to the third maximum value.

In an embodiment, for the cells that the MC-DCI can schedule, the terminal can determine the third maximum value among the quantities of bits that can be occupied by the first information field corresponding to the cell, where the third maximum value among the quantities of bits that can be occupied by the first information field corresponding to the cell can be determined according to existing mechanisms, such as according to the configuration signaling of the network device (e.g., RRC signaling) or according to predefined rules.

For example, the terminal determines according to the configuration signaling of the network device that the quantity of bits that can be occupied by the BWP indicator information field is 0, 1, and 2, where the maximum quantity of bits occupied is 2, that is, the third maximum value among the quantities of bits that can be occupied by the BWP indicator information field is 2, and then it can be determined that the first quantity of bits occupied by the BWP indicator information field is equal to 2. The terminal determines according to the configuration signaling of the network device that the quantity of bits that can be occupied by the BWP indicator information field can be applied to all cells.

FIG. 4 is a schematic flowchart of yet another method for decoding downlink control information according to an embodiment of the present disclosure. As shown in FIG. 4, determining the quantity of bits occupied by the information field in the downlink control information used to schedule multiple cells includes:

In step S401, determining a minimum value among predetermined quantities of bits occupied by first information fields corresponding respectively to all cells schedulable by the downlink control information;
In step S402, determining a first quantity of bits occupied by the first information field of the first type according to the minimum value.

It should be noted that the embodiment shown in FIG. 4 can be implemented independently or in combination with at least one other embodiment of the present disclosure, which is not limited herein.

In an embodiment, for the cells that the MC-DCI can schedule, the terminal can determine the predetermined quantity of bits occupied by the first information field corresponding to the cell, for example, it can be determined according to the configuration signaling of the network device or according to predefined rules, such as according to the communication protocol 38.212[2].

For example, the cells that the MC-DCI can schedule are Cell#1, Cell#2, Cell#3, and Cell#4, a total of 4 cells. Taking the Antenna ports information field as an example, the predetermined quantities of bits occupied by the Antenna ports information fields corresponding respectively to these 4 cells are shown in Table 1 above.

As shown in Table 1, for the cell with cell identifier 1, Cell#1, the predetermined quantity of bits occupied by the Antenna ports information field corresponding to it is 4; for the cell with cell identifier 2, Cell#2, the predetermined quantity of bits occupied by the Antenna ports information field corresponding to it is 6; for the cell with cell identifier 3, Cell#3, the predetermined quantity of bits occupied by the Antenna ports information field corresponding to it is 4; for the cell with cell identifier 4, Cell#4, the predetermined quantity of bits occupied by the Antenna ports information field corresponding to it is 5.

Further, the terminal can determine the first quantity of bits occupied by the first information field of the first type according to the minimum value. For example, it can be determined that the first quantity of bits occupied by the first information field of the first type is equal to the minimum value among the predetermined quantities of bits occupied by the first information fields corresponding respectively to all cells that the MC-DCI can schedule.

For example, the first information field is the Antenna ports information field. Based on Table 1 above, the quantity of bits occupied by the Antenna ports information field is equal to the minimum value among the predetermined quantities of bits occupied by the Antenna ports information fields corresponding respectively to the all cells that the MC-DCI can schedule, where the minimum value among the predetermined quantities of bits occupied by the Antenna ports information field corresponding respectively to the 4 cells is 4, so the quantity of bits occupied by the Antenna ports information field is equal to 4.

In an embodiment, determining the minimum value among the predetermined quantities of bits occupied by the first information fields corresponding respectively to all cells schedulable by the downlink control information includes: determining the minimum value among greater-than-0 predetermined quantities of bits occupied by the first information fields corresponding respectively to all cells schedulable by the downlink control information.

Since the quantity of bits occupied by the first information field corresponding to some cells can be equal to 0, in this case, determining the first quantity of bits occupied by the first information field of the first type as 0 may cause some problems, for example, the first information field may not be able to indicate information for some cells. Therefore, the minimum value among the greater-than-0 predetermined quantities of bits occupied by the first information field corresponding respectively to all cells that the MC-DCI can schedule can be determined, and then the first quantity of bits occupied by the first information field of the first type can be determined to be equal to the minimum value among the greater-than-0 predetermined quantities.

In an embodiment, decoding the downlink control information according to the quantity of bits includes:
in response to the first quantity of bits occupied by the first information field of the first type being less than a predetermined quantity of bits occupied by a first information field corresponding to a scheduled cell, decoding the first information field according to the first quantity to determine information indicated by the first information field for the scheduled cell; or
in response to the first quantity of bits occupied by the first information field of the first type being less than a predetermined quantity of bits occupied by a first information field corresponding to a scheduled cell, padding zeros to the first information field according to the difference between the predetermined quantity and the first quantity, and decoding the zero-padded first information field to determine information indicated by the first information field for the scheduled cell.

In an embodiment, when the first quantity of bits occupied by the first information field of the first type is less than the predetermined quantity of bits occupied by the first information field corresponding to the scheduled cell, the first information field can be directly decoded according to the first quantity to determine the information indicated by the first information field for the scheduled cell.

For example, based on Table 1 above, the cells that the MC-DCI can schedule include Cell#1, Cell#2, Cell#3, and Cell#4, the first quantity of bits occupied by the first information field of the first type is equal to 4, and the currently scheduled cells are Cell#2 and Cell#3, that is, the scheduled cells include Cell#2 and Cell#3. Then, for Cell#2, the predetermined quantity of bits occupied by the Antenna ports information field corresponding to it is 6, and for Cell#3, the predetermined quantity of bits occupied by the Antenna ports information field corresponding to it is 4.

It can be seen that the first quantity of bits occupied by the first information field of the first type is 4, which is less than the predetermined quantity of bits occupied by the Antenna ports information field corresponding to Cell#2, which is 6. Then, the 4 bits occupied by the first information field of the first type can be directly decoded to determine the information indicated by the Antenna ports information field for Cell#2.

In an embodiment, when the first quantity of bits occupied by the first information field of the first type is less than the predetermined quantity of bits occupied by the first information field corresponding to the scheduled cell, zeros can be padded to the first information field according to the difference between the predetermined quantity and the first quantity, where the position for padding zeros can be selected as needed, for example, zeros can be padded to the MSB or the LSB, and the zero-padded first information field can be decoded to determine the information indicated by the first information field for the scheduled cell.

1 For example, based on Table 1 above, the cells that the MC-DCI can schedule include Cell#1, Cell#2, Cell#3, and Cell#4, the first quantity of bits occupied by the first information field of the first type is equal to 4, and the currently scheduled cells are Cell#2 and Cell#3, that is, the scheduled cells include Cell#2 and Cell#3. Then, for Cell#2, the predetermined quantity of bits occupied by the Antenna ports information field corresponding to it is 6, and for Cell#3, the predetermined quantity of bits occupied by the Antenna ports information field corresponding to it is 4.

It can be seen that the first quantity of bits occupied by the first information field of the first type is 4, which is less than the predetermined quantity of bits occupied by the Antenna ports information field corresponding to Cell#2, which is 6. When the terminal decodes the Antenna ports information field corresponding to Cell#2, zeros can be padded to the Antenna ports information field according to the difference between the predetermined quantity and the first quantity (6-4=2). For example, taking padding zeros to the MSB as an example, 2 zeros can be padded prior to the 4 bits occupied by the first information field of the first type, and then the zero-padded Antenna ports information field can be decoded to determine the information indicated by the Antenna ports information field for Cell#2.

In an embodiment, decoding the downlink control information according to the quantity of bits includes at least one of the following:
in response to the first quantity of bits occupied by the first information field of the first type being greater than a predetermined quantity of bits occupied by a first information field corresponding to a scheduled cell, determining that the indicated value of the first information field is not applied to the scheduled cell;
in response to the first quantity of bits occupied by the first information field of the first type being greater than a predetermined quantity of bits occupied by a first information field corresponding to a scheduled cell, adjusting the indicated value of the first information field to a first value, where the first value is determined based on configuration signaling or predefined rules, and the first value is less than or equal to the maximum indicated value corresponding to the predetermined quantity of bits;
in response to the first quantity of bits occupied by the first information field of the first type being greater than a predetermined quantity of bits occupied by a first information field corresponding to a scheduled cell, not processing the downlink control information;
in response to the first quantity of bits occupied by the first information field of the first type being greater than a predetermined quantity of bits occupied by a first information field corresponding to a scheduled cell, not processing the first information field;
in response to the first quantity of bits occupied by the first information field of the first type being greater than a predetermined quantity of bits occupied by a first information field corresponding to a scheduled cell, determining the indicated value of the first information field for the scheduled cell according to the predetermined quantity of bits occupied by the first information field corresponding to the scheduled cell.

The first quantity of bits occupied by the first information field of the first type is the actual quantity of bits occupied by the first information field in the MC-DCI, which can be determined based on the embodiments shown above; the scheduled cell is the cell currently scheduled by the MC-DCI; the predetermined quantity of bits occupied by the first information field corresponding to the scheduled cell is not the actual quantity of bits occupied by the first information field in the MC-DCI, but a predetermined quantity, for example, it can be determined according to the configuration signaling of the network device or according to predefined rules, such as according to the communication protocol 38.212[2].

In an embodiment, based on Table 1 above, the cells that the MC-DCI can schedule include Cell#1, Cell#2, Cell#3, and Cell#4. If the currently scheduled cells are Cell#2 and Cell#3, that is, the scheduled cells include Cell#2 and Cell#3, then for Cell#2, the predetermined quantity of bits occupied by the Antenna ports information field corresponding to it is 6, and for Cell#3, the predetermined quantity of bits occupied by the Antenna ports information field corresponding to it is 4.

In the case where the first quantity of bits occupied by the Antenna ports information field in the MC-DCI is 6, since 6 is greater than the predetermined quantity of bits occupied by the Antenna ports information field corresponding to Cell#3, which is 4, the terminal cannot accurately determine the information indicated by the Antenna ports information field for Cell#3.

Therefore, in an embodiment, when the first quantity of bits occupied by the first information field of the first type is greater than the predetermined quantity of bits occupied by the first information field corresponding to the scheduled cell, the terminal can determine that the indicated value of the first information field is not applied to the scheduled cell.

For example, for the above Antenna ports information field, when the first quantity of bits occupied by the Antenna ports information field in the MC-DCI is 6, since 6 is greater than the predetermined quantity of bits occupied by the Antenna ports information field corresponding to Cell#3, which is 4, it can be determined that the Antenna ports information field is not applied to Cell#3, but can be applied to Cell#2.

In an embodiment, when the first quantity of bits occupied by the first information field of the first type is greater than the predetermined quantity of bits occupied by the first information field corresponding to the scheduled cell, the terminal can adjust the indicated value of the first information field to a first value. Since the first value is less than or equal to the maximum indicated value corresponding to the predetermined quantity of bits, the first value can be applied to the scheduled cell.

For example, for the above Antenna ports information field, when the first quantity of bits occupied by the Antenna ports information field in the MC-DCI is 6, since 6 is greater than the predetermined quantity of bits occupied by the Antenna ports information field corresponding to Cell#3, which is 4, the terminal can adjust the indicated value of the Antenna ports information field to a first value, where the first value is less than or equal to the maximum indicated value corresponding to 4 bits, which is 15. In this case, the terminal can accurately determine the information indicated by the first value for Cell#3, so the first value can be applied to Cell#3. where, the first value is determined based on configuration signaling or predefined rules, for example, it can be equal to the maximum indicated value corresponding to the predetermined quantity of bits occupied by the first information field corresponding to the scheduled cell. For example, in this embodiment, the first value can be equal to 15; for another example, it can also be equal to the minimum indicated value corresponding to the predetermined quantity of bits occupied by the first information field corresponding to the scheduled cell. For example, in this embodiment, the first value can be equal to 0.

In an embodiment, when the first quantity of bits occupied by the first information field of the first type is greater than the predetermined quantity of bits occupied by the first information field corresponding to the scheduled cell, the terminal may not process the MC-DCI. Not processing the MC-DCI includes: not performing blind detection on the MC-DCI; or performing blind detection on the MC-DCI but not decoding it; or performing blind detection and decoding on the MC-DCI but determining that the decoded result does not take effect, that is, it is not used to indicate the multiple scheduled cells.

For example, for the above Antenna ports information field, when the first quantity of bits occupied by the Antenna ports information field in the MC-DCI is 6, since 6 is greater than the predetermined quantity of bits occupied by the Antenna ports information field corresponding to Cell#3, which is 4, in this case, the terminal cannot accurately determine the information indicated by the 6-bit Antenna ports information field for Cell#3, so the MC-DCI may not be processed.

In an embodiment, when the first quantity of bits occupied by the first information field of the first type is greater than the predetermined quantity of bits occupied by the first information field corresponding to the scheduled cell, the terminal may not process the first information field. Not processing the first information field includes: not decoding the first information field; or decoding the first information field but determining that the decoded result does not take effect, that is, it is not used to indicate the multiple scheduled cells.

For example, for the above Antenna ports information field, when the first quantity of bits occupied by the Antenna ports information field in the MC-DCI is 6, since 6 is greater than the predetermined quantity of bits occupied by the Antenna ports information field corresponding to Cell#3, which is 4, in this case, the terminal cannot accurately determine the information indicated by the Antenna ports information field for Cell#3, so the terminal may not process the Antenna ports information field, but for other information fields in the MC-DCI, the terminal still processes them, for example, still decodes them, and the decoded results take effect.

In an embodiment, when the first quantity of bits occupied by the first information field of the first type is greater than the predetermined quantity of bits occupied by the first information field corresponding to the scheduled cell, the terminal can determine the indicated value of the first information field for the scheduled cell according to the predetermined quantity of bits occupied by the first information field corresponding to the scheduled cell. For example, the bits corresponding to the predetermined quantity of bits occupied by the first information field corresponding to the scheduled cell can be determined in the bits corresponding to the first information field, and then the information indicated by the first information field for the scheduled cell can be determined according to the indicated value of the determined bits.

Determining the bits corresponding to the predetermined quantity of bits occupied by the first information field corresponding to the scheduled cell in the bits corresponding to the first information field includes but is not limited to the following two methods: determining the predetermined quantity of bits occupied by the first information field corresponding to the scheduled cell from front to back in the corresponding bits in the first information field, that is, determining the predetermined quantity of bits occupied by the first information field corresponding to the scheduled cell, from the MSB (Most Significant Bit) in the first information field; determining the predetermined quantity of bits occupied by the first information field corresponding to the scheduled cell from back to front in the corresponding bits in the first information field, that is, determining the predetermined quantity of bits occupied by the first information field corresponding to the scheduled cell, from the LSB (Least Significant Bit) in the first information field

For example, in the case of the Antenna ports information field, when the Antenna ports information field occupies 6 bits in the MC-DCI, since 6 is greater than the predetermined quantity of bits (4) corresponding to the Antenna ports information field for Cell #3, the UE can determine the predetermined quantity of bits corresponding to the Antenna ports information field for Cell #3 within the Antenna ports information field-that is, determine 4 bits in the Antenna ports information field. Subsequently, it can determine the information indicated by the Antenna ports information field for Cell #3 based on the indicated value of the determined 4 bits.

For example, if the Antenna ports information field corresponds to the bits 101111, the first 4 bits (1011) may be determined from the MSB side, and the information indicated by the Antenna ports information field for Cell#3 may be determined based on 1011. Alternatively, the last 4 bits (1111) may be determined from the LSB side, and the information indicated by the Antenna ports information field for Cell#3 may be determined based on 1111.

In an embodiment, the terminal does not expect the first quantity of bits occupied by the first information field of the first type to be greater than the predetermined quantity of bits occupied by the first information field corresponding to any scheduled cell.

When the first quantity of bits occupied by the first information field of the first type is greater than the predetermined quantity of bits occupied by the corresponding first information field of the scheduled cell, the terminal may encounter issues in decoding the first information field. Therefore, the terminal may not expect the first quantity of bits occupied by the first information field of the first type to exceed the predetermined quantity of bits occupied by the corresponding first information field of the scheduled cell.

Correspondingly, the network device may not configure the first quantity of bits occupied by the first information field of the first type to be greater than the predetermined quantity of bits occupied by the first information field corresponding to any scheduled cell, that is, it may only configure the first quantity to be less than or equal to the predetermined quantity. This helps avoid issues in the terminal's decoding process of the first information field.

In an embodiment, regarding whether the first quantity of bits occupied by the first information field of the first type is greater than the predetermined quantity of bits occupied by the first information field corresponding to a scheduled cell, the terminal may determine this based on the information that can be indicated by the first information field corresponding to the scheduled cell and/or based on the predetermined quantity of bits occupied by the first information field corresponding to the scheduled cell.

Taking the BWP indicator information field as an example of the first information field, the cells that can be scheduled by the MC-DCI (i.e., the scheduled cells) include Cell#1, Cell#2, Cell#3, and Cell#4. The quantity nBWP of downlink bandwidth parts (DL BWP) configured for these 4 cells is shown in Table 2 below:

**Table 2**

| Cell | n_{BWP} |
|---|---|
| Cell#1 | 2 |
| Cell#2 | 1 |
| Cell#3 | 4 |
| Cell#4 | 3 |

According to Table 2, Cell#1 is configured with nBWP=2 DL BWPs, so the maximum quantity of BWPs that the BWP indicator information field can indicate for Cell#1 is 2;
Cell#2 is configured with nBWP=1 DL BWP, so the maximum quantity of BWPs that the BWP indicator information field can indicate for Cell#2 is 1;
Cell#3 is configured with nBWP=4 DL BWPs, so the maximum quantity of BWPs that the BWP indicator information field can indicate for Cell#3 is 4;
Cell#4 is configured with nBWP=3 DL BWPs, so the maximum quantity of BWPs that the BWP indicator information field can indicate for Cell#4 is 3.

When the MC-DCI currently schedules Cell#2 and Cell#3, if the BWP indicator information field occupies 2 bits (which can indicate a maximum of 4 BWPs), this is greater than the maximum quantity of BWPs (1) that the BWP indicator information field can indicate for Cell#2, but equal to the maximum quantity of BWPs (4) that it can indicate for Cell#3. Therefore, it can be determined that the first quantity of bits (2) occupied by the first-type BWP indicator information field is greater than the predetermined quantity (1) for Cell#2 but equal to the predetermined quantity (4) for Cell#3. Subsequent optional operations include determining that the BWP indicator information field is not applied to Cell#2 but can be applied to Cell#3.

Taking the VRB-to-PRB mapping information field as another example of the first information field, the cells that can be scheduled by the MC-DCI (i.e., the scheduled cells) include Cell#1, Cell#2, Cell#3, and Cell#4. The predetermined quantities of bits occupied by the VRB-to-PRB mapping information field for these 4 cells are shown in Table 3 below:

**Table 3**

| Cell identifier | VRB-to-PRB mapping |
|---|---|
| 1 | 0 |
| 2 | 1 |
| 3 | 0 |
| 4 | 1 |

According to Table 3, for Cell#1, the predetermined quantity of bits occupied by the VRB-to-PRB mapping information field is 0; for Cell#2, it is 1; for Cell#3, it is 0; and for Cell#4, it is 1. Accordingly, it can be determined that the VRB-to-PRB mapping information field occupies 1 bit.

When the MC-DCI currently schedules Cell#2 and Cell#3, since the VRB-to-PRB mapping information field occupies 1 bit, which is greater than the predetermined quantity (0) for Cell#3 but equal to the predetermined quantity (1) for Cell#2, subsequent optional operations include determining that the VRB-to-PRB mapping information field is not applied to Cell#3 but can be applied to Cell#2.

It should be noted that for some first information fields like the Antenna ports information field and VRB-to-PRB mapping information field, the predetermined quantities of bits they occupy may vary for different cells. However, for other first information fields, the quantity of bits they occupy is constant. For example, the DMRS sequence initialization information field always occupies 1 bit.

In an embodiment, decoding the downlink control information according to the quantity of bits includes at least one of the following:
if the indicated value of the first information field of the first type is greater than the maximum indicated value corresponding to the predetermined quantity of bits occupied by the first information field corresponding to a scheduled cell, determining that the indicated value of the first information field is not applied to the scheduled cell;
if the indicated value of the first information field of the first type is greater than the maximum indicated value corresponding to the predetermined quantity of bits occupied by the first information field corresponding to a scheduled cell, adjusting the indicated value of the first information field to a first value, where the first value is determined based on configuration signaling or predefined rules and is less than or equal to the maximum indicated value corresponding to the predetermined quantity of bits;
if the indicated value of the first information field of the first type is greater than the maximum indicated value corresponding to the predetermined quantity of bits occupied by the first information field corresponding to a scheduled cell, not processing the downlink control information;
if the indicated value of the first information field of the first type is greater than the maximum indicated value corresponding to the predetermined quantity of bits occupied by the first information field corresponding to a scheduled cell, not processing the first information field;
if the indicated value of the first information field of the first type is greater than the maximum indicated value corresponding to the predetermined quantity of bits occupied by the first information field corresponding to a scheduled cell, determining the quantity of bits corresponding to the indicated value, and determining the indicated value of the first information field for the scheduled cell based on the quantity of bits corresponding to the indicated value.

Here, the first quantity of bits occupied by the first information field of the first type is the actual quantity of bits occupied by the first information field in the MC-DCI, which may be determined based on the embodiments described earlier. The scheduled cells are the cells currently scheduled by the MC-DCI. The predetermined quantity of bits occupied by the first information field corresponding to a scheduled cell is not the actual quantity of bits occupied by the first information field in the MC-DCI but a predetermined quantity, which may be determined based on configuration signaling from the network device or predefined rules, such as according to communication protocol 38.212[2].

In an embodiment, the maximum indicated value corresponding to the predetermined quantity of bits occupied by the first information field corresponding to a scheduled cell may be determined based on the predetermined quantity. For example, if the predetermined quantity is n bits, the maximum indicated value is 2n-1. Here, the scheduled cells are the cells currently scheduled by the MC-DCI. The predetermined quantity of bits occupied by the first information field corresponding to a scheduled cell may be determined based on configuration signaling from the network device or predefined rules, such as according to communication protocol 38.212[2].

5 For example, based on Table 1, the cells that can be scheduled by the MC-DCI include Cell#1, Cell#2, Cell#3, and Cell#4. If the currently scheduled cells are Cell#2 and Cell#3 (i.e., the scheduled cells include Cell#2 and Cell#3), then for Cell#2, the maximum indicated value corresponding to the predetermined quantity (6) of bits occupied by the Antenna ports information field is 26 - 1 = 63, and for Cell#3, the maximum indicated value corresponding to the predetermined quantity (4) of bits is 24 - 1 = 15.

If the indicated value of the Antenna ports information field is 17, since 17 is greater than the maximum indicated value (15) corresponding to the predetermined quantity of bits for Cell#3, the terminal may have difficulty in accurately determining the information indicated by the Antenna ports information field for Cell#3.

Therefore, in an embodiment, if the indicated value of the first information field of the first type is greater than the maximum indicated value corresponding to the predetermined quantity of bits occupied by the first information field corresponding to a scheduled cell, the terminal may determine that the indicated value of the first information field is not applied to the scheduled cell.

For example, for the Antenna ports information field above, if the indicated value is 17, since 17 is greater than the maximum indicated value (15) corresponding to the predetermined quantity of bits for Cell#3 but less than the maximum indicated value (63) for Cell#2, it may be determined that the indicated value 17 of the Antenna ports information field is not applied to Cell#3 but can be applied to Cell#2.

In an embodiment, if the indicated value of the first information field of the first type is greater than the maximum indicated value corresponding to the predetermined quantity of bits occupied by the first information field corresponding to a scheduled cell, the terminal may adjust the indicated value of the first information field to a first value. Since the first value is less than or equal to the maximum indicated value corresponding to the predetermined quantity of bits, the first value can be applied to the scheduled cell.

For example, for the Antenna ports information field above, if the indicated value is 17, since 17 is greater than the maximum indicated value (15) corresponding to the predetermined quantity of bits for Cell#3, the terminal may adjust the indicated value of the Antenna ports information field to a first value, where the first value is less than or equal to 15. In this case, the terminal can accurately determine the information indicated by the first value for Cell#3, so the first value can be applied to Cell#3. Here, the first value is determined based on configuration signaling or predefined rules. For example, it may be equal to the maximum indicated value corresponding to the predetermined quantity of bits (e.g., 15 in this embodiment), or it may be equal to the minimum indicated value corresponding to the predetermined quantity of bits (e.g., 0 in this embodiment).

In an embodiment, if the indicated value of the first information field of the first type is greater than the maximum indicated value corresponding to the predetermined quantity of bits occupied by the first information field corresponding to a scheduled cell, the terminal may not process the downlink control information. Here, not processing the downlink control information includes: not performing blind detection on the MC-DCI; or performing blind detection on the MC-DCI but not decoding it; or performing blind detection and decoding on the MC-DCI but determining that the decoded result does not take effect (i.e., not using it to indicate the multiple scheduled cells).

For example, for the Antenna ports information field above, if the indicated value is 17, since 17 is greater than the maximum indicated value (15) corresponding to the predetermined quantity of bits for Cell#3, the terminal may not be able to accurately determine the information indicated by the value 17 for Cell#3, so the terminal may not process the MC-DCI.

In an embodiment, if the indicated value of the first information field of the first type is greater than the maximum indicated value corresponding to the predetermined quantity of bits occupied by the first information field corresponding to a scheduled cell, the terminal may not process the first information field. Here, not processing the first information field includes: not decoding the first information field; or decoding the first information field but determining that the decoded result does not take effect (i.e., not using it to indicate the multiple scheduled cells).

For example, for the Antenna ports information field above, if the indicated value is 17, since 17 is greater than the maximum indicated value (15) corresponding to the predetermined quantity of bits for Cell#3, the terminal may not be able to accurately determine the information indicated by the value 17 for Cell#3, so the terminal may not process the Antenna ports information field. However, for other information fields in the MC-DCI, the terminal may still process them. For example, other information fields in the MC-DCI is still decoded, and the decoded results take effect).

In an embodiment, if the indicated value of the first information field of the first type is greater than the maximum indicated value corresponding to the predetermined quantity of bits occupied by the first information field corresponding to a scheduled cell, the terminal may determine the indicated value of the first information field for the scheduled cell based on the predetermined quantity of bits occupied by the first information field corresponding to the scheduled cell. For example, the terminal may determine the predetermined quantity of bits occupied by the first information field corresponding to the scheduled cell from the bits corresponding to the first information field, and then determine the information indicated by the first information field for the scheduled cell based on the indicated value of the determined bits.

Here, determining the predetermined quantity of bits occupied by the first information field corresponding to the scheduled cell from the bits corresponding to the first information field includes, but is not limited to, the following two methods: determining the predetermined quantity of bits occupied by the first information field corresponding to the scheduled cell from front to back in the corresponding bits in the first information field; or determining the predetermined quantity of bits occupied by the first information field corresponding to the scheduled cell from back to front in the corresponding bits in the first information field.

For example, for the Antenna ports information field above, if the indicated value is 17, since 17 is greater than the maximum indicated value (15) corresponding to the predetermined quantity of bits for Cell#3, the terminal may determine that the predetermined quantity of bits occupied by the Antenna ports information field corresponding to Cell#3 is 4. The terminal may then determine the 4 bits corresponding to the Antenna ports information field for Cell#3 from the bits occupied by the Antenna ports information field, and determine the information indicated by the Antenna ports information field for Cell#3 based on the indicated value of the determined 4 bits.

For example, if the bits corresponding to the Antenna ports information field are specifically 010001, the first 4 bits (0100) may be determined from the MSB side, and the information indicated by the Antenna ports information field for Cell#3 may be determined based on 0100. Alternatively, the last 4 bits (0001) may be determined from the LSB side, and the information indicated by the Antenna ports information field for Cell#3 may be determined based on 0001.

In an embodiment, the terminal does not expect that the indicated value of the first information field of the first type is greater than the indicated value corresponding to the predetermined quantity of bits occupied by the first information field corresponding to any scheduled cell.

Since issues may arise when the terminal decodes the first information field if the indicated value of the first information field of the first type is greater than the indicated value corresponding to the predetermined quantity of bits occupied by the first information field corresponding to any scheduled cell, the terminal may not expect that the indicated value of the first information field of the first type is greater than the maximum indicated value corresponding to the predetermined quantity of bits occupied by the first information field corresponding to any scheduled cell.

Correspondingly, the network device may not configure the indicated value of the first information field of the first type to be greater than the maximum indicated value corresponding to the predetermined quantity of bits occupied by the first information field corresponding to any scheduled cell, that is, it may only configure the indicated value to be less than or equal to the maximum indicated value. This helps avoid issues in the terminal's decoding process of the first information field.

In an embodiment, regarding whether the indicated value of the first information field of the first type is greater than the maximum indicated value corresponding to the predetermined quantity of bits occupied by the first information field corresponding to a scheduled cell, the terminal may determine this based on the information that can be indicated by the first information field corresponding to the scheduled cell and/or based on the predetermined quantity of bits occupied by the first information field corresponding to the scheduled cell.

Taking the BWP indicator information field as an example of the first information field, the cells that can be scheduled by the MC-DCI (i.e., the scheduled cells) include Cell#1, Cell#2, Cell#3, and Cell#4. The number of downlink bandwidth parts (DL BWP) configured for these 4 cells is shown in Table 2 above.

According to Table 2, Cell#1 is configured with nBWP=2 DL BWPs, so the maximum quantity of BWPs that the BWP indicator information field can indicate for Cell#1 is 2;
Cell#2 is configured with nBWP=1 DL BWP, so the maximum quantity of BWPs that the BWP indicator information field can indicate for Cell#2 is 1;
Cell#3 is configured with nBWP=4 DL BWPs, so the maximum quantity of BWPs that the BWP indicator information field can indicate for Cell#3 is 4;
Cell#4 is configured with nBWP=3 DL BWPs, so the maximum quantity of BWPs that the BWP indicator information field can indicate for Cell#4 is 3.

When the MC-DCI currently schedules Cell#2 and Cell#3, if the indicated value of the BWP indicator information field is 3, this is greater than the maximum quantity of BWPs (1) that the BWP indicator information field can indicate for Cell#2 but less than the maximum quantity of BWPs (4) that it can indicate for Cell#3. Therefore, it can be determined that the indicated value (3) of the first-type BWP indicator information field is greater than the indicated value for Cell#2 but less than the indicated value for Cell#3. Subsequent optional operations include determining that the indicated value 3 of the BWP indicator information field is not applied to Cell#2 but can be applied to Cell#3.

Taking the VRB-to-PRB mapping information field as an example of the first information field, the cells that can be scheduled by the MC-DCI (i.e., the scheduled cells) include Cell#1, Cell#2, Cell#3, and Cell#4. The predetermined quantities of bits occupied by the VRB-to-PRB mapping information field for these 4 cells are shown in Table 3 above.

According to Table 3, for Cell#1, the predetermined quantity of bits occupied by the VRB-to-PRB mapping information field is 0; for Cell#2, it is 1; for Cell#3, it is 0; and for Cell#4, it is 1. Accordingly, it can be determined that the VRB-to-PRB mapping information field occupies 1 bit.

When the cells currently scheduled by the MC-DCI include Cell #2 and Cell #3, and the quantity of bits occupied by the VRB-to-PRB mapping field is 1, it is greater than the predetermined quantity of bits (0) corresponding to Cell #3's VRB-to-PRB mapping field and equal to the predetermined quantity of bits (0) corresponding to Cell #2's VRB-to-PRB mapping field. Subsequently, one of the optional operations includes determining that the VRB-to-PRB mapping field's indicated value of 3 should not be applied to Cell #3 but may be applied to Cell #2.

FIG. 5 is a schematic flowchart of yet another method for decoding downlink control information according to an embodiment of the present disclosure. As shown in FIG. 5, determining the quantity of bits occupied by the information field in the downlink control information used to schedule multiple cells includes:
In step S501, determining an index of a combination of second information that can be indicated by the second information field of the second type;
In step S502, determining a second quantity of bits occupied by the second information field of the second type based on a second maximum value of the index.

It should be noted that the embodiment shown in FIG. 5 may be implemented independently or in combination with at least one other embodiment of the present disclosure, which is not limited herein.

In an embodiment, the terminal may determine a second maximum value of the index that can be indicated by the second information field of the second type. The second maximum value of the index is determined based on the association relationship between the value of the information field corresponding to each cell and the indicated information, and is associated with the cell(s) configured with the association relationship. Subsequently, the terminal may determine the second quantity of bits occupied by the second information field of the second type based on the second maximum value of the index that can be indicated by the second information field of the second type. For example, it may determine that the second quantity of bits occupied by the second information field of the second type is equal to the quantity of bits corresponding to the second maximum value of the index that can be indicated by the second information field of the second type.

Taking the embodiment shown in FIG. 2A as an example, the indexes that can be indicated by the second information field of the second type include 0, 1, 2, and 3, where the second maximum value of the index is 3, which occupies 2 bits. Therefore, it can be determined that the second quantity of bits occupied by the second information field of the second type is 2, that is, the second information field of the second type occupies 2 bits.

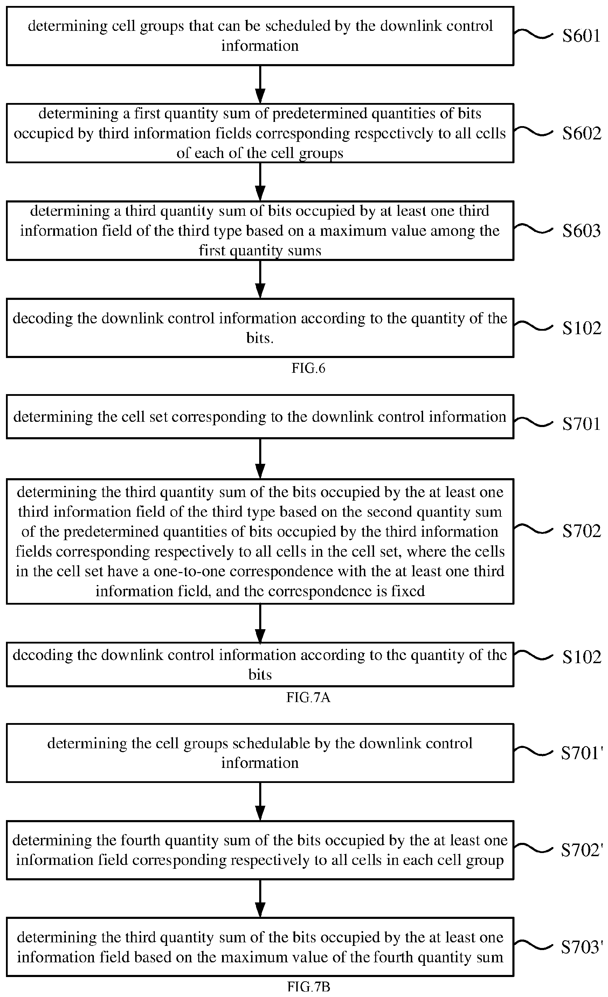

FIG. 6 is a schematic flowchart of yet another method for decoding downlink control information according to an embodiment of the present disclosure. As shown in FIG. 6, determining the quantity of bits occupied by the information field in the downlink control information used to schedule multiple cells includes:
In step S601, determining cell groups that can be scheduled by the downlink control information;
In step S602, determining a first quantity sum of predetermined quantities of bits occupied by third information fields corresponding respectively to all cells of each of the cell groups;
In step S603, determining a third quantity sum of bits occupied by at least one third information field of the third type based on a maximum value among the first quantity sums.

It should be noted that the embodiment shown in FIG. 6 may be implemented independently or in combination with at least one other embodiment of the present disclosure, which is not limited herein.

In an embodiment, the terminal may determine the cell groups that can be scheduled by the MC-DCI. Here, the cell groups that can be scheduled by the MC-DCI may be determined based on configuration signaling from the network device or predefined rules (e.g., protocol agreements). For example, the cell groups that can be scheduled by the MC-DCI may be as shown in Table 4 below:

**Table 4**

| Cell Group ID | Cells in the Cell Group |
|---|---|
| 0 | Cell#1 |
| 1 | Cell#2, Cell#3 |
| 2 | Cell#3, Cell#4 |
| 3 | Cell#1, Cell#3, Cell#4 |

As shown in Table 4, the cell groups that can be scheduled by the MC-DCI specifically include 4 cell groups. When the cell group ID is 0, the corresponding cell group is {Cell#1}; when the cell group ID is 1, the corresponding cell group is {Cell#2, Cell#3}; when the cell group ID is 2, the corresponding cell group is {Cell#3, Cell#4}; and when the cell group ID is 3, the corresponding cell group is {Cell#1, Cell#3, Cell#4}.

Further, the terminal may determine the first quantity sum of predetermined quantities of bits occupied by the third information fields corresponding respectively to all cells in each cell group, and then determine the third quantity sum of bits occupied by at least one third information field of the third type based on the maximum value among the first quantity sums of quantities. For example, it may be determined that the third quantity sum of bits occupied by at least one third information field of the third type is equal to the maximum value among the first quantity sums of quantities.

Taking the Antenna ports information field as an example of the third information field, the predetermined quantities of bits occupied by the Antenna ports information field corresponding respectively to Cell#1, Cell#2, Cell#3, and Cell#4 are as shown in Table 1 above.

Combining Table 1 and Table 4, the first quantity sum of predetermined quantities of bits occupied by the Antenna ports information field corresponding respectively to all cells in the cell group {Cell#1} is simply the predetermined quantity (4) for Cell#1; the first quantity sum for the cell group {Cell#2, Cell#3} is the sum of the predetermined quantities for Cell#2 and Cell#3, i.e., 6 + 4 = 10; the first quantity sum for the cell group {Cell#3, Cell#4} is the sum of the predetermined quantities for Cell#3 and Cell#4, i.e., 4 + 5 = 9; and the first quantity sum for the cell group {Cell#1, Cell#3, Cell#4} is the sum of the predetermined quantities for Cell#1, Cell#3, and Cell#4, i.e., 4 + 4 + 5 = 13.

It can be seen that the maximum value among the first quantity sums of quantities is 13, so it can be determined that the third quantity sum of bits occupied by at least one Antenna ports information field in the MC-DCI is 13.

In an embodiment, when the type of the information field is indicated by the bits of the information field in the MC-DCI, the bits of the information field may be extended. The specific quantity of bits to be extended may be determined based on the number of types that the information field can belong to. For example, if the information field can belong to 2 types, 1 bit may be extended; if it can belong to 3 or 4 types, 2 bits may be extended.

For example, taking the Antenna ports information field as an example, according to the previous embodiments, the Antenna ports information field can belong to the first type or the third type. When it belongs to the first type, the Antenna ports information field occupies 6 bits, and when it belongs to the third type, it occupies 13 bits.

When the type of the fourth information field is indicated by the fourth information field itself, the maximum quantity of bits occupied by the fourth information field when it belongs to multiple types needs to be determined, and then the quantity of bits to be extended is determined based on this maximum quantity. The extended bits are used to indicate the type of the fourth information field.

For example, the Antenna ports information field can belong to the first type or the third type. When it belongs to the first type, it occupies 6 bits, and when it belongs to the third type, it occupies 13 bits. Therefore, when the type of the Antenna ports information field is indicated by the Antenna ports information field itself, regardless of which type it belongs to, it needs to be determined that the Antenna ports information field occupies 13 bits plus 1 extended bit, i.e., 14 bits in total. For example, the extended bit may be the MSB, which is used to indicate the type of the Antenna ports information field, and the other 13 bits are used to indicate antenna port information for cells.

It should be noted that in the above embodiments, the predetermined quantity of bits occupied by the Antenna ports information field for each cell may not be fixed, that is, it can be determined according to the configuration signaling of the network device or based on predefined rules (e.g., protocol agreements).

For some third information fields where the predetermined quantity of bits is fixed, when determining the sum of the predetermined quantity of bits occupied by the third information fields corresponding respectively to all cells, it can be determined based on the maximum quantity of cells that the MC-DCI can schedule. For example, the sum of the predetermined quantities is equal to the fixed predetermined quantity multiplied by the maximum quantity of cells that the MC-DCI can schedule.

Here, the maximum quantity of cells that the MC-DCI can schedule can be determined based on the maximum quantity of cells included in the cell groups that the MC-DCI can schedule or based on the number of cells included in the cell set corresponding to the MC-DCI. The following mainly explains the case where the maximum quantity of cells that the MC-DCI can schedule is determined based on the maximum quantity of cells included in the cell groups that the MC-DCI can schedule.

For example, the HARQ process number information field occupies a fixed number of 4 bits. Based on Table 4, the maximum quantity of cells that the MC-DCI can schedule is 3. Therefore, the sum of the predetermined quantities of bits occupied by the HARQ process number information fields corresponding respectively to all cells in each cell group is 3 × 4 = 12.

For example, the MCS information field occupies a fixed number of 5 bits. Based on Table 4, the maximum quantity of cells that the MC-DCI can schedule is 3. Therefore, the sum of the predetermined quantities of bits occupied by the MCS information fields corresponding respectively to all cells in each cell group is 3 × 5 = 15.

FIG. 7A is a schematic flowchart of yet another method for decoding downlink control information according to an embodiment of the present disclosure. As shown in FIG. 7A, determining the quantity of bits occupied by the information field in the downlink control information used to schedule multiple cells includes:
In step S701, determining the cell set corresponding to the downlink control information;
In step S702, determining the third quantity sum of the bits occupied by the at least one third information field of the third type based on the second quantity sum of the predetermined quantities of bits occupied by the third information fields corresponding respectively to all cells in the cell set, where the cells in the cell set have a one-to-one correspondence with the at least one third information field, and the correspondence is fixed.

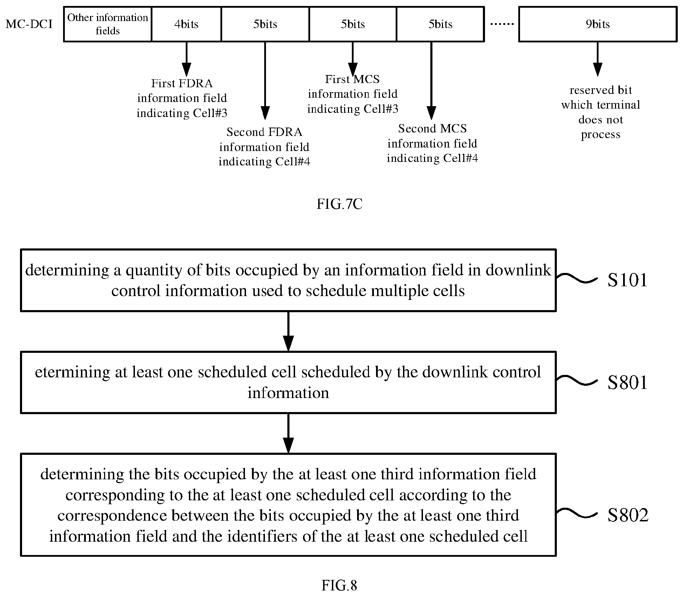

It should be noted that the embodiment shown in FIG. 7 can be implemented independently or in combination with at least one other embodiment of the present disclosure, and the present disclosure does not limit this.

In an embodiment, the cell set corresponding to the MC-DCI may be a set composed of cells with the same configuration parameters (e.g., set identifiers, resources, indexes, etc.), or it may be any cell group that the MC-DCI can schedule, or it may be the union of cells in each cell group that the MC-DCI can schedule. Alternatively, the cells that the MC-DCI can schedule may first be determined, and then the set of all cells that the MC-DCI can schedule may be determined as the cell set corresponding to the MC-DCI.

In an embodiment, the terminal may determine the cell set corresponding to the MC-DCI and then determine the sum of the bits occupied by the at least one third information field of the third type based on the sum of the predetermined quantities of bits occupied by the third information fields corresponding to each cell in the cell set.

For example, the cell set corresponding to the MC-DCI is {Cell#1, Cell#2, Cell#3, Cell#4}. Taking the Antenna ports information field as an example of the third information field, the predetermined quantities of bits occupied by the Antenna ports information fields corresponding to Cell#1, Cell#2, Cell#3, and Cell#4 are as shown in Table 1 above.

Then, the sum of the predetermined quantities of bits occupied by the Antenna ports information fields corresponding respectively to all cells in the cell set {Cell#1, Cell#2, Cell#3, Cell#4} is 4 + 6 + 4 + 5 = 19. Therefore, it can be determined that the sum of the bits occupied by the at least one third information field is 19, that is, the at least one third information field occupies 19 bits.

Since the cells in the cell set have a one-to-one correspondence with the at least one third information field, and this correspondence is fixed, in the 19 bits occupied by the at least one third information field, the 1st to 4th bits are used to indicate the Antenna ports information of Cell#1, the 5th to 10th bits are used to indicate the Antenna ports information of Cell#2, the 11th to 14th bits are used to indicate the Antenna ports information of Cell#3, and the 15th to 19th bits are used to indicate the Antenna ports information of Cell#4.

FIG. 7B is a schematic flowchart of yet another method for decoding downlink control information according to an embodiment of the present disclosure. As shown in FIG. 7B, determining the quantity of bits occupied by the information field in the downlink control information used to schedule multiple cells includes:
In step S701', determining the cell groups schedulable by the downlink control information;
In step S702', determining the fourth quantity sum of the bits occupied by the at least one information field corresponding respectively to all cells in each cell group;
In step S703', determining the third quantity sum of the bits occupied by the at least one information field based on the maximum value of the fourth quantity sum.

In an embodiment, the terminal may determine the cell groups that the MC-DCI can schedule, where the cell groups that the MC-DCI can schedule can be determined according to the configuration signaling of the network device or based on predefined rules (e.g., protocol agreements). For example, the cell groups that the MC-DCI can schedule can be as shown in Table 4 above, which will not be repeated here.

As shown in Table 4, the cell groups that the MC-DCI can schedule specifically include four cell groups. When the cell group identifier is 0, the corresponding cell group is {Cell#1}; when the cell group identifier is 1, the corresponding cell group is {Cell#2, Cell#3}; when the cell group identifier is 2, the corresponding cell group is {Cell#3, Cell#4}; and when the cell group identifier is 3, the corresponding cell group is {Cell#1, Cell#3, Cell#4}.

Further, the terminal may determine the fourth quantity sum of the bits occupied by the at least one information field corresponding respectively to all cells in each cell group and then determine the third quantity sum of the bits occupied by the at least one information field based on the maximum value of the fourth quantity sums. For example, it can be determined that the third quantity sum of the bits occupied by the at least one information field in the MC-DCI is equal to the maximum value of the fourth quantity sums.

Here, the at least one information field in the MC-DCI may include the third information field of the third type described above, and may also include information fields of other types, which is not limited in the present disclosure.

In an embodiment, the at least one information field includes all information fields in the downlink control information (MC-DCI). Determining the quantity of bits occupied by the information field in the downlink control information used to schedule multiple cells includes:
determining a fourth quantity sum of the bits occupied by all the third information fields corresponding respectively to all cells of each of the cell groups;
determining the third quantity sum of the bits occupied by all the third information fields according to a maximum value among the fourth quantity sums.

For example, all information fields refer to all information fields included in the MC-DCI that schedules all cells in the cell group.

In an embodiment, the terminal may determine the fourth quantity sum of the bits occupied by all information fields corresponding respectively to all cells in each cell group and then determine the third quantity sum of the bits occupied by all information fields based on the maximum value of the fourth quantity sums. For example, it can be determined that the third quantity sum of the bits occupied by all information fields is equal to the maximum value among the fourth quantity sums.

In an embodiment, the at least one information field includes all third information fields in the downlink control information (MC-DCI). Determining the quantity of bits occupied by the information field in the downlink control information used to schedule multiple cells includes:
determining the fourth quantity sum of the bits occupied by all third information fields corresponding respectively to all cells in each cell group;
determining the third quantity sum of the bits occupied by all third information fields of the third type based on the maximum value among the fourth quantity sums.

It should be noted that the third information field of the third type includes at least one of the following: a third information field predefined as the third type; or a third information field of the fourth type, which is configured by the network device as the third information field of the third type.

In an embodiment, the terminal may determine the fourth quantity sum of the bits occupied by all third information fields corresponding respectively to all cells in each cell group and then determine the third quantity sum of the bits occupied by all third information fields of the third type based on the maximum value among the fourth quantity sums. For example, it can be determined that the third quantity sum of the bits occupied by all third information fields of the third type is equal to the maximum value among the fourth quantity sums.

For example, the cells that the MC-DCI can schedule are Cell#1, Cell#2, Cell#3, and Cell#4. Taking the FDRA information field as an example, the predetermined quantities of bits occupied by the FDRA information fields corresponding to these four cells are shown in Table 5 below.

**Table 5**

| Cell identifier | Predetermined quantity of bits occupied by FDRA information field corresponding to the cell |
|---|---|
| 1 | 4 |
| 2 | 6 |
| 3 | 4 |
| 4 | 5 |

As shown in Table 5, for the cell with identifier 1 (Cell#1), the predetermined quantity of bits occupied by the FDRA information field is 4; for the cell with identifier 2 (Cell#2), the predetermined quantity of bits occupied by the FDRA information field is 6; for the cell with identifier 3 (Cell#3), the predetermined quantity of bits occupied by the FDRA information field is 4; and for the cell with identifier 4 (Cell#4), the predetermined quantity of bits occupied by the FDRA information field is 5.

Taking all third information fields including the MCS information field and the FDRA information field as an example, the predetermined quantities of bits occupied by the FDRA information fields corresponding to Cell#1, Cell#2, Cell#3, and Cell#4 are as shown in Table 5 above. The MCS information field occupies a fixed number of 5 bits.

The fourth quantity sum of the predetermined quantities of bits occupied by the MCS information fields and the FDRA information fields corresponding respectively to all cells in the cell group { Cell#1} is the sum of the predetermined quantity of bits occupied by the FDRA information field corresponding to Cell#1 and the quantity of bits occupied by the MCS information field corresponding to Cell#1, that is, 4 + 5 = 9.

The fourth quantity sum of the predetermined quantities of bits occupied by the MCS information fields and the FDRA information fields corresponding respectively to all cells in the cell group {Cell#2, Cell#3} is the sum of the predetermined quantities of bits occupied by the FDRA information fields corresponding respectively to Cell#2 and Cell#3 and the predetermined quantities of bits occupied by the MCS information fields corresponding respectively to Cell#2 and Cell#3, that is, 6 + 4 + 5 × 2 = 20.

The fourth quantity sum of the predetermined quantities of bits occupied by the MCS information fields and the FDRA information fields corresponding respectively to all cells in the cell group {Cell#3, Cell#4} is the sum of the predetermined quantities of bits occupied by the FDRA information fields corresponding respectively to Cell#3 and Cell#4 and the quantity of bits occupied by the MCS information fields corresponding respectively to Cell#3 and Cell#4, that is, 4 + 5 + 5 × 2 = 19.

The fourth quantity sum of the predetermined quantities of bits occupied by the MCS information fields and the FDRA information fields corresponding respectively to all cells in the cell group {Cell#1, Cell#3, Cell#4} is the sum of the predetermined quantities of bits occupied by the FDRA information fields corresponding to Cell#1, Cell#3, and Cell#4 and the quantity of bits occupied by the MCS information fields corresponding to Cell#1, Cell#3, and Cell#4, that is, 4 + 4 + 5 + 5 × 3 = 28.

It can be seen that the maximum value among the fourth quantity sums is 28. Therefore, it can be determined that the third quantity sum of the bits occupied by all third information fields in the MC-DCI is 28. Of course, the above is only an example where all third information fields in the MC-DCI include the MCS information field and the FDRA information field. All third information fields in the MC-DCI may father include other information fields.

FIG. 7C is a schematic diagram of bits occupied by an information field according to an embodiment of the present disclosure.

As shown in FIG. 7C, for example, for at least one third information field of the same type, the at least one scheduled cell may be associated with the bits occupied by the at least one third information field with cell identifiers in an ascending order, or the at least one scheduled cell may be associated with the bits occupied by the at least one third information field with cell identifiers in a descending order.

For example, taking the at least one scheduled cell being associated with the bits occupied by the at least one third information field with cell identifiers in an ascending order as an example, the sum of the bits occupied by all third information fields in the MC-DCI is 28. When the cell group actually scheduled by the MC-DCI is {Cell#3, Cell#4}, among the 28 bits, the 1st to 4th bits are the FDRA information field corresponding to Cell#3, the 5th to 9th bits are the FDRA information field corresponding to Cell#4, the 10th to 14th bits are the MCS information field corresponding to Cell#3, the 15th to 19th bits are the MCS information field corresponding to Cell#4, and the 20th to 28th bits are reserved bits. For the reserved bits, the terminal may skip parsing them.

It should be noted that the MC-DCI is not limited to including the above bits and may also include other bits as other information fields. The reserved bits may be located at the end of all third information fields or may not be located at the end of all third information fields but at the end of the MC-DCI. Based on the above embodiments, the 20th to 28th bits being reserved bits may be the last 9 bits of the MC-DCI.

In an embodiment, in addition to the first type, second type, and third type mentioned above, the type of the information field may also include a fourth type, such as Type3. The Type3 information field can be predefined or configured as Type1A or Type2, or it can be determined as Type1B or Type2, for example, based on RRC signaling configuration.

The terminal may expect that the mapping relationship between each type of information field and the bits in the MC-DCI includes: mapping the information fields in the order of Type1, Type3, and Type2 from front to back to the bits in the MC-DCI. Here, for the Type1 information field, the order may be sorted as Type1-A and then Type1-B, or for all information fields belonging to Type1 (i.e., belonging to Type1-A or Type1-B), their order may be the same as the order of information fields in existing DCI (e.g., DCI1_1 or DCI0_1).

For multiple information fields of the same Type, the order of different information fields may be sorted based on the current order of information fields in DCI. Correspondingly, for multiple third information fields belonging to the same type, the at least one scheduled cell may be associated with the bits occupied by the at least one third information field with cell identifiers in an ascending order, or the at least one scheduled cell may be associated with the bits occupied by the at least one third information field with cell identifiers in a descending order.

Since the quantity of bits occupied by Type1 information fields is relatively fixed, the quantity of bits occupied by Type2 information fields is variable, and the quantity of bits occupied by Type3 information fields is also fixed when predefined or configured as Type1 (only when predefined or configured as Type2 is it variable), the terminal generally parses the MC-DCI from front to back in bit order. Therefore, based on this mapping relationship, the terminal can first parse the information fields with a relatively fixed quantity of bits and then parse the information fields with a variable quantity of bits, which helps simplify the parsing operation of the terminal.

FIG. 8 is a schematic flowchart of yet another method for decoding downlink control information according to an embodiment of the present disclosure. As shown in FIG. 8, decoding the downlink control information according to the quantity of bits includes:
In step S801, determining at least one scheduled cell scheduled by the downlink control information; it should be noted that the at least one scheduled cell scheduled by the MC-DCI described in the embodiments of the present disclosure refers to the cells currently scheduled by the MC-DCI;
In step S802, determining the bits occupied by the at least one third information field corresponding to the at least one scheduled cell according to the correspondence between the bits occupied by the at least one third information field and the identifiers of the at least one scheduled cell. Then, the bits corresponding to each scheduled cell in the third quantity sum of the bits occupied by the at least one third information field can be decoded to determine the information indicated by the third information field for the scheduled cell.

It should be noted that the embodiment shown in FIG. 8 can be implemented independently or in combination with at least one other embodiment of the present disclosure, and the present disclosure does not limit this.

In an embodiment, when the MC-DCI schedules multiple cells, the MC-DCI may indicate the information of multiple scheduled cells through multiple third information fields. Therefore, after determining the at least one scheduled cell scheduled by the MC-DCI, it is also necessary to determine the bits corresponding to each scheduled cell in the bits occupied by the at least one third information field according to the correspondence between the bits occupied by the at least one third information field and the identifiers of the at least one scheduled cell, as the information indicated by the third information field for the scheduled cell.

Here, the correspondence between the bits occupied by the at least one third information field and the identifiers of the at least one scheduled cell (the cells currently scheduled by the MC-DCI) may be: with cell identifiers in an ascending order, associating the at least one scheduled cell with the bits occupied by the at least one third information field, or associating the at least one scheduled cell with the at least one third information field.

6 Alternatively, the correspondence between the bits occupied by the at least one third information field and the identifiers of the at least one scheduled cell (the cells currently scheduled by the MC-DCI) may be: with cell identifiers in a descending order, associating the at least one scheduled cell with the bits occupied by the at least one third information field, or associating the at least one scheduled cell with the at least one third information field.

Here, the third quantity sum of the bits occupied by the at least one third information field of the third type is the actual quantity of bits occupied by the third information field in the MC-DCI, which can be determined based on the embodiments described above; the at least one scheduled cell is the cells currently scheduled by the MC-DCI; the predetermined quantity of bits occupied by the first information field corresponding to the scheduled cell is not the actual quantity of bits occupied by the first information field in the MC-DCI but a predetermined quantity, which can be determined according to the configuration signaling of the network device or based on predefined rules, such as according to communication protocol 38.212[2].

In an embodiment, when determining the cell groups schedulable by the downlink control information, determining the first quantity sum of the predetermined quantities of bits occupied by the third information fields corresponding respectively to all cells in each cell group, and then determining the third quantity sum of the bits occupied by the at least one third information field of the third type based on the maximum value of the first quantity sums, the correspondence between the bits occupied by the at least one third information field and the identifiers of the at least one scheduled cell includes: associating the at least one scheduled cell with the bits occupied by the at least one third information field with cell identifiers in an ascending order, or associating the at least one scheduled cell with the bits occupied by the at least one third information field with cell identifiers in an ascending order.

Here, associating the at least one scheduled cell with the bits occupied by the at least one third information field with cell identifiers in an ascending order includes:
determining the predetermined quantity of bits nc1 occupied by the third information field corresponding to the cell c1 with the smallest identifier among the m scheduled cells, and determining that the 1st to nc1-th bits in the third quantity sum of the bits occupied by the at least one third information field of the third type are used to indicate the third information of cell c1;
determining the predetermined quantity of bits nc2 occupied by the third information field corresponding to the cell c2 with the second smallest identifier among the m scheduled cells, and determining that the (nc1 + 1)-th to (nc1 + nc2)-th bits in the third quantity sum of the bits occupied by the at least one third information field of the third type are used to indicate the third information of cell c2;
   ...
determining the predetermined quantity of bits nci occupied by the third information field corresponding to the cell ci with the i-th smallest identifier among the m scheduled cells, and determining that the (nc1 + nc2 + ... + nc(i-1) + 1)-th to (nc1 + nc2 + ... + nc(i-1) + nci)-th bits in the third quantity sum of the bits occupied by the at least one third information field of the third type are used to indicate the third information of cell ci;
   ...
determining the predetermined quantity of bits ncm occupied by the third information field corresponding to the cell cm with the largest identifier among the m scheduled cells, and determining that the (nc1 + nc2 + ... + nc(m-1) + 1)-th to (nc1 + nc2 + ... + nc(m-1) + ncm)-th bits in the third quantity sum of the bits occupied by the at least one third information field of the third type are used to indicate the third information of cell cm. Here, m and n are integers greater than 0, and m ≤ n.

For example, the cells currently scheduled by the MC-DCI include three scheduled cells: Cell#2 and Cell#3, and the sum of the bits occupied by the at least one Antenna ports information field is 13.

First, the predetermined quantity of bits occupied by the Antenna ports information field corresponding to Cell#2 can be determined, for example, as 6. Then, among the 13 bits occupied by the at least one Antenna ports information field, the 1st to 6th bits are used to indicate the Antenna ports information of Cell#2. Next, the predetermined quantity of bits occupied by the Antenna ports information field corresponding to Cell#3 can be determined, for example, as 4. Then, among the 13 bits occupied by the at least one Antenna ports information field, the 7th to 10th bits are used to indicate the Antenna ports information of Cell#3. The 11th to 14th bits among the 13 bits can be reserved bits, and the terminal may skip processing the reserved bits.

In an embodiment, when determining the cell set corresponding to the downlink control information and then determining the sum of the bits occupied by the at least one third information field of the third type based on the sum of the predetermined quantities of bits occupied by the third information fields corresponding to each cell in the cell set, the bits occupied by the third information field corresponding to each cell in the sum of the bits may be fixed (e.g., predefined as fixed). In this case, the correspondence between the bits occupied by the at least one third information field and the identifiers of the at least one scheduled cell includes: associating the at least one scheduled cell with the at least one third information field with cell identifiers in an ascending order, or associating the at least one scheduled cell with the at least one third information field with cell identifiers in a descending order.

For example, taking the association with cell identifiers in an ascending order as an example, the cell set is {Cell#1, Cell#2, Cell#3, Cell#4}. The predetermined quantity of bits occupied by the Antenna ports information field corresponding to Cell#1 is 4, the predetermined quantity of bits occupied by the Antenna ports information field corresponding to Cell#2 is 6, the predetermined quantity of bits occupied by the Antenna ports information field corresponding to Cell#3 is 4, and the predetermined quantity of bits occupied by the Antenna ports information field corresponding to Cell#4 is 5. Therefore, the sum of the predetermined quantities is 4 + 6 + 4 + 5 = 19, and the sum of the bits occupied by the at least one third information field can be equal to the sum of the predetermined quantities, that is, the at least one third information field occupies 19 bits.

Since the cells in the cell set have a one-to-one correspondence with the at least one third information field, and this correspondence is fixed, among the 19 bits occupied by the at least one third information field, the 1st to 4th bits are the Antenna ports information field used to indicate Cell#1, the 5th to 10th bits are the Antenna ports information field used to indicate Cell#2, the 11th to 14th bits are the Antenna ports information field used to indicate Cell#3, and the 15th to 19th bits are the Antenna ports information field used to indicate Cell#4.

Therefore, when subsequently scheduling multiple cells via MC-DCI, the bits occupied by the third information field corresponding to each scheduled cell in the third quantity sum of bits can be determined based on fixed bits occupied by the third information field corresponding to each scheduled cell in the third quantity sum of bits.

For example, when the MC-DCI schedules Cell#2 and Cell#3, it can be determined that among the 19 bits occupied by at least one third information field, bits 5 to 10 correspond to the Antenna ports information field of Cell#2, and bits 11 to 14 correspond to the Antenna ports information field of Cell#3. Regarding the bits not corresponding to scheduled cells among the 19 bits, such as bits 1 to 4 and bits 15 to 19, they can serve as reserved bits, and the terminal may skip processing these reserved bits.

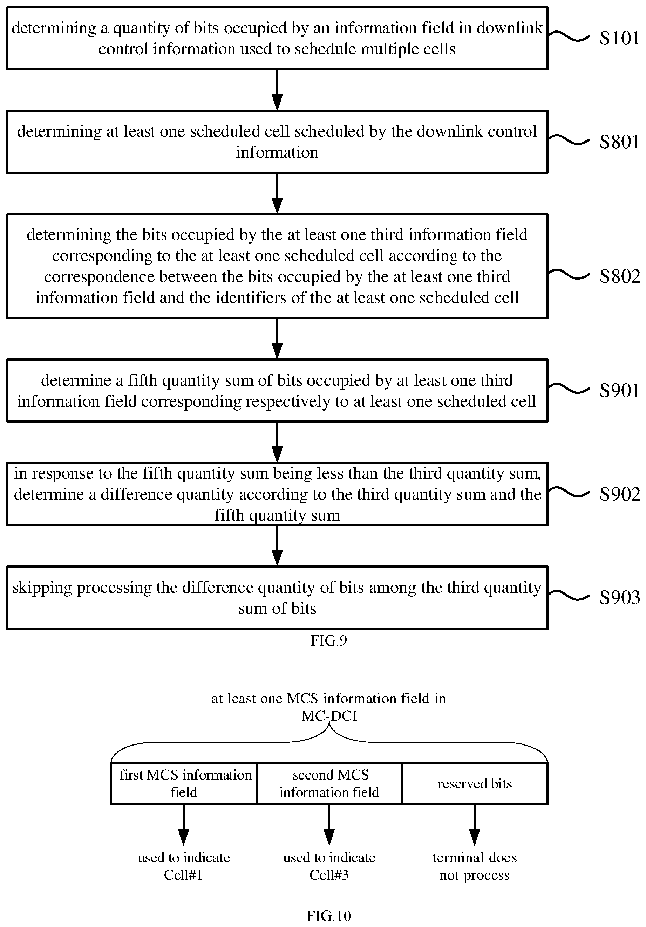

FIG. 9 is a schematic flowchart of yet another method for decoding downlink control information according to an embodiment of the present disclosure. As shown in FIG. 9, decoding the downlink control information according to the quantity of bits further includes:
In step S901, determine a fifth quantity sum of bits occupied by at least one third information field corresponding respectively to at least one scheduled cell; subsequently, decode the bits corresponding to each scheduled cell among the third quantity sum of bits occupied by at least one third information field, and determine the bits corresponding to the scheduled cell as the information indicated by the third information field for the scheduled cell.
In step S902, in response to the fifth quantity sum being less than the third quantity sum, determine a difference quantity according to the third quantity sum and the fifth quantity sum;
In step S903, skipping processing the difference quantity of bits among the third quantity sum of bits, where the difference quantity of bits may also be described as reserved bits. Skipping processing the difference quantity of bits includes: not decoding the difference quantity of bits; or decoding the difference quantity of bits but determining that the decoded result does not take effect, i.e., not using it to indicate information for multiple scheduled cells.

It should be noted that the embodiment shown in FIG. 9 may be implemented independently or in combination with at least one other embodiment of the present disclosure, to which the present disclosure imposes no limitation.

In an embodiment, since the third quantity sum of bits occupied by at least one third information field is determined based on the maximum value of the first quantity sums of predetermined quantities of bits occupied by third information fields corresponding respectively to all cells in the cell groups schedulable by the MC-DCI, or based on the second quantity sum of predetermined quantities of bits occupied by third information fields corresponding respectively to all cells in the cell set corresponding to the MC-DCI, the quantity sum of bits occupied by at least one current third information field corresponding to all scheduled cells in the cells currently scheduled by the MC-DCI may be smaller than the third quantity sum.

In this case, for example, if the quantity of bits occupied by at least one third information field corresponding to at least one scheduled cell is the fifth quantity sum, the difference quantity can be determined according to the third quantity sum and the fifth quantity sum, and processing of the difference quantity of bits among the third quantity sum of bits can be skipped to save overhead while ensuring the DCI size remains unchanged.

FIG. 10 is a schematic diagram of reserved bits according to an embodiment of the present disclosure.

Taking the MCS information field as an example, if the third quantity sum of bits occupied by at least one third information field is determined based on the maximum value of the first quantity sums of predetermined quantities of bits occupied by third information fields corresponding respectively to all cells in the cell groups schedulable by the MC-DCI, and if the maximum quantity of cells in the cell groups schedulable by the MC-DCI is 3, since the quantity of bits occupied by the MCS information field is fixed at 5, the third quantity sum would be 3×5=15, i.e., the three MCS information fields in the MC-DCI occupy 15 bits.

When the cells currently scheduled by the MC-DCI include Cell#1 and Cell#3, for example, with cell identifiers in an ascending order, the at least one scheduled cell is mapped to these 15 bits. As shown in FIG. 10, bits 1 to 5 are used to indicate Cell#1, bits 6 to 10 are used to indicate Cell#3, and since there are no currently scheduled cells corresponding to bits 11 to 15, bits 11 to 15 serve as reserved bits, and the terminal may skip processing these reserved bits.

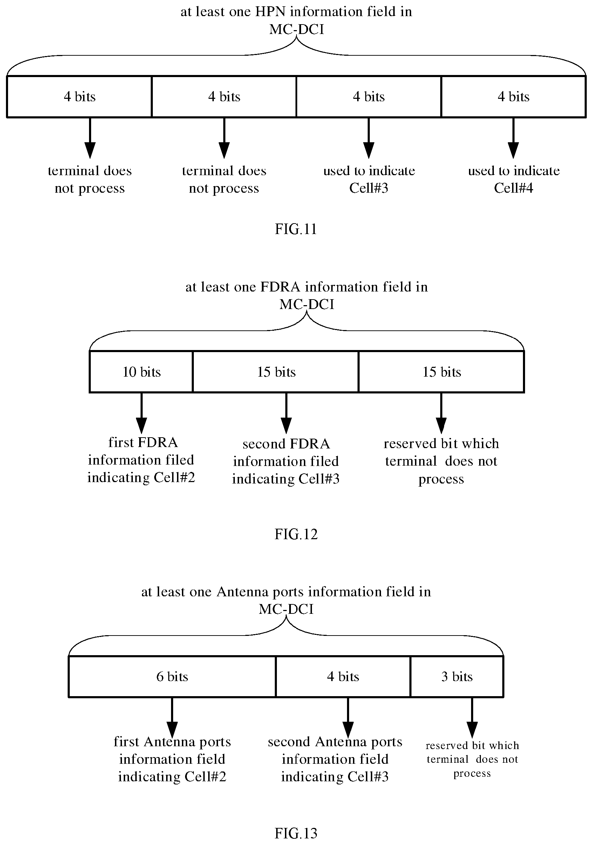

FIG. 11 is a schematic diagram of another reserved bits according to an embodiment of the present disclosure.

Taking the HARQ process number (HPN) information field as an example, if the third quantity sum of bits occupied by at least one third information field is determined based on the second quantity sum of predetermined quantities of bits occupied by third information fields corresponding to each cell in the cell set corresponding to the MC-DCI, and if the cell set schedulable by the MC-DCI includes four cells (Cell#1, Cell#2, Cell#3, and Cell#4), since the quantity of bits occupied by the HPN information field is fixed at 4, the third quantity sum would be 4×4=16, i.e., the four HPN information fields in the MC-DCI occupy 16 bits. Here, the bits occupied by the HPN information field corresponding to each cell among the 16 bits may be fixed, for example, Cell#1 corresponds to bits 1 to 4, Cell#2 corresponds to bits 5 to 8, Cell#3 corresponds to bits 9 to 12, and Cell#4 corresponds to bits 13 to 16.

When the cells currently scheduled by the MC-DCI include Cell#3 and Cell#4, for example, with cell identifiers in an ascending order, the at least one scheduled cell is mapped to at least one MCS information field. As shown in FIG. 11, bits 9 to 12 are used to indicate Cell#3, bits 13 to 16 are used to indicate Cell#4, and since there are no currently scheduled cells corresponding to bits 1 to 8, bits 1 to 8 serve as reserved bits, and the terminal may skip processing these reserved bits.

FIG. 12 is a schematic diagram of yet another reserved bits according to an embodiment of the present disclosure.

Taking the FDRA information field as an example, if the third quantity sum of bits occupied by at least one third information field is determined based on the maximum value of the first quantity sums of predetermined quantities of bits occupied by third information fields corresponding respectively to all cells in the cell groups schedulable by the MC-DCI, and if the cells schedulable by the MC-DCI include four cells (Cell#1, Cell#2, Cell#3, and Cell#4), where the maximum quantities of bits occupied by the FDRA information field corresponding to these four cells are 15, 10, 15, and 10, respectively. Based on the cell groups in Table 3, the third quantity sum of bits occupied by at least one FDRA information field would be the sum of the maximum quantities of bits occupied by the FDRA information fields corresponding to Cell#1, Cell#3, and Cell#4, i.e., 15+15+10=40 bits.

When the currently scheduled cells of MC-DCI include Cell#2 and Cell#3, for example, with cell identifiers in an ascending order, at least one scheduled cell is mapped to these 40 bits. As shown in Figure 12, the first to tenth bits are used to indicate Cell#2, the 11th to 25th bits are used to indicate Cell#3, and the last 15 bits of the 40 bits are not used for indication. These last 15 bits may serve as reserved bits, and the terminal may not process the reserved bits.

Figure 13 is a schematic diagram illustrating another example of reserved bits according to an embodiment of the present disclosure.

Taking the Antenna ports information field as an example, the third quantity sum of bits occupied by at least one third information field is determined based on the maximum value of the first quantity sums of predetermined quantities of bits occupied by the third information fields corresponding respectively to all cells in the cell group schedulable by the MC-DCI. For example, if the cells schedulable by the MC-DCI are Cell#1, Cell#2, Cell#3, and Cell#4 (a total of 4 cells), the maximum quantities of bits occupied by the Antenna ports information fields corresponding to these 4 cells are shown in Table 1. Based on the cell group in Table 3, the third quantity sum of bits occupied by at least one Antenna ports field is the sum of the maximum quantities of bits occupied by the FDAR fields corresponding to Cell#1, Cell#3, and Cell#4, i.e., 4 + 4 + 5 = 13 bits.

When the currently scheduled cells of MC-DCI include Cell#2 and Cell#3, for example, with cell identifiers in an ascending order, at least one scheduled cell is mapped to these 13 bits. As shown in Figure 13, the first to sixth bits are used to indicate Cell#2, the seventh to tenth bits are used to indicate Cell#3, and the last 3 bits of the 13 bits are not used for indication. These last 3 bits may serve as reserved bits, and the terminal may not process the reserved bits.

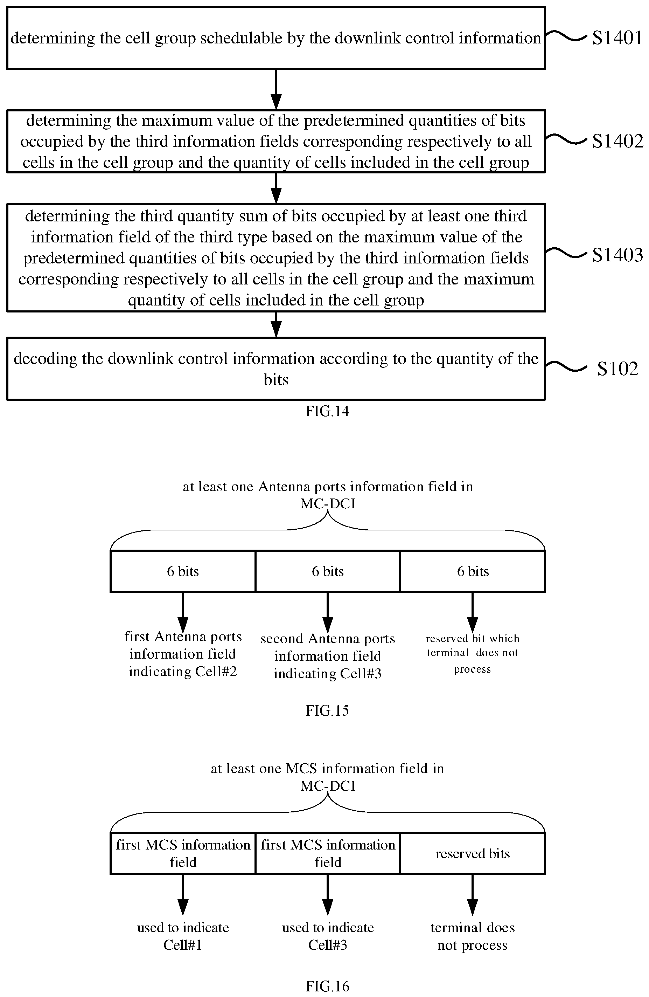

Figure 14 is a schematic flowchart illustrating another method for decoding downlink control information according to an embodiment of the present disclosure. As shown in Figure 14, determining the quantity of bits occupied by an information field in downlink control information used to schedule multiple cells includes:
In step S1401, determining the cell group schedulable by the downlink control information;
In step S1402, determining the maximum value of the predetermined quantities of bits occupied by the third information fields corresponding respectively to all cells in the cell group, as well as the quantity of cells included in the cell group;
In step S1403, determining the third quantity sum of bits occupied by at least one third information field of the third type based on the maximum value of the predetermined quantities of bits occupied by the third information fields corresponding respectively to all cells in the cell group and the maximum quantity of cells included in the cell group.

It should be noted that the embodiment shown in Figure 14 may be implemented independently or in combination with at least one other embodiment of the present disclosure, which is not limited herein.

In an embodiment, the terminal may determine the cell group schedulable by the MC-DCI. The cell group schedulable by the MC-DCI may be determined based on configuration signaling from the network device or predefined rules (e.g., protocol agreements). For example, the cell group schedulable by the MC-DCI may be as shown in Table 4 above.

As shown in Table 4, the cell group schedulable by the MC-DCI specifically includes four types of cell groups. When the cell group identifier is 0, the corresponding cell group is {Cell#1}; when the cell group identifier is 1, the corresponding cell group is {Cell#2, Cell#3}; when the cell group identifier is 2, the corresponding cell group is {Cell#3, Cell#4}; and when the cell group identifier is 3, the corresponding cell group is {Cell#1, Cell#3, Cell#4}.

Further, the terminal may determine the maximum value of the predetermined quantities of bits occupied by the third information fields corresponding respectively to all cells in the cell group, as well as the quantity of cells included in the cell group. Based on these, the terminal may determine the third quantity sum of bits occupied by at least one third information field of the third type. For example, the third quantity sum may be equal to the product of the maximum value of the predetermined quantities of bits occupied by the third information fields corresponding respectively to all cells in the cell group and the maximum quantity of cells included in the cell group.

Taking the Antenna ports information field as an example of the third information field, the predetermined quantities of bits occupied by the Antenna ports information fields corresponding to Cell#1, Cell#2, Cell#3, and Cell#4 are as shown in Table 1 above.

Combining Table 1 and Table 4, the maximum value of the predetermined quantities of bits occupied by the third information fields corresponding to each cell is 6, and the maximum quantity of cells included in the cell group is 3. Thus, the third quantity sum of bits occupied by at least one Antenna ports information field in the MC-DCI is determined to be 3 × 6 = 18.

Figure 15 is a schematic diagram illustrating another example of reserved bits according to an embodiment of the present disclosure.

Taking the Antenna ports information field as an example, the third quantity sum of bits occupied by at least one third information field is determined based on the maximum value of the first quantity sums of predetermined quantities of bits occupied by the third information fields corresponding respectively to all cells in the cell group schedulable by the MC-DCI. For example, if the cells schedulable by the MC-DCI are Cell#1, Cell#2, Cell#3, and Cell#4 (a total of 4 cells), the predetermined quantities of bits occupied by the Antenna ports information fields corresponding to these 4 cells are shown in Table 1. Based on the cell group in Table 3, the third quantity sum of bits occupied by at least one Antenna ports information field in the MC-DCI is 3 × 6 = 18.

When the currently scheduled cells of MC-DCI include Cell#2 and Cell#3, for example, with cell identifiers in an ascending order, at least one scheduled cell is mapped to these 18 bits, where each Antenna ports information field occupies 6 bits. As shown in Figure 15, the first Antenna ports information field is used to indicate Cell#2, the second Antenna ports information field is used to indicate Cell#3, and the last 6 bits of the 18 bits are not used for indication. These last 6 bits may serve as reserved bits, and the terminal may not process the reserved bits.

Figure 16 is a schematic diagram illustrating another example of reserved bits according to an embodiment of the present disclosure.

Taking the MCS information field as an example, the third quantity sum of bits occupied by at least one third information field is determined based on the maximum value of the first quantity sums of predetermined quantities of bits occupied by the third information fields corresponding respectively to all cells in the cell group schedulable by the MC-DCI. If the maximum quantity of cells in the cell group schedulable by the MC-DCI is 3, and the quantity of bits occupied by the MCS information field is always 5, the third quantity sum is 3 × 5 = 15, i.e., the three MCS information fields in the MC-DCI occupy 15 bits.

When the currently scheduled cells of MC-DCI include Cell#1 and Cell#3, for example, with cell identifiers in an ascending order, at least one scheduled cell is mapped to at least one MCS information field, where each MCS information field occupies 5 bits. As shown in Figure 16, the first MCS information field is used to indicate Cell#1, the second MCS information field is used to indicate Cell#3, and the third MCS information field has no corresponding currently scheduled cell. Thus, the 5 bits occupied by the third MCS information field serve as reserved bits, and the terminal may not process the reserved bits.

In an embodiment, the method further includes determining the quantity of bits occupied by the downlink control information in one of the following ways:
determining the quantity of bits occupied by the downlink control information based on signaling of a scheduling cell;
determining the quantity of bits occupied by the downlink control information based on signaling of a reference cell;
determining the quantity of bits occupied by the downlink control information based on the quantity of bits occupied by each information field in the downlink control information.

In an embodiment, the quantity of bits occupied by the MC-DCI may be determined based on signaling received by the scheduling cell. In another embodiment, the quantity of bits occupied by the MC-DCI may be determined based on signaling received by the reference cell. The signaling of the scheduling cell or the reference cell includes, but is not limited to, RRC signaling or Media Access Control Control Element (MAC CE).

In an embodiment, the quantity of bits occupied by the MC-DCI may be determined based on the quantity of bits occupied by each information field in the MC-DCI. For example, the sum of the quantities of bits occupied by each information field in the MC-DCI may be taken as the quantity of bits occupied by the MC-DCI.

In an embodiment, the reference cell includes at least one of the following:
a cell used to calculate the size of the downlink control information;
a cell used to calculate the blind detection resources (e.g., BD, CCE) of the downlink control information; or
a cell configured with a search space corresponding to the downlink control information.

In an embodiment, the reference cell may be the cell used to calculate the size of the MC-DCI. In this case, selecting to receive signaling on the reference cell and determining the quantity of bits occupied by the MC-DCI based on the received signaling allows centralized reception of signaling and calculation of the MC-DCI size on the same reference cell, without considering other cells, which simplifies the operational logic.

In an embodiment, the reference cell may be the cell used to calculate the blind detection resources of the MC-DCI. In this case, selecting to receive signaling on the reference cell and determining the quantity of bits occupied by the MC-DCI based on the received signaling allows centralized reception of signaling and calculation of the blind detection resources of the MC-DCI on the same reference cell, without considering other cells, which simplifies the operational logic.

In an embodiment, the reference cell may be the cell configured with the search space corresponding to the MC-DCI. In this case, selecting to receive signaling on the reference cell and determining the quantity of bits occupied by the MC-DCI based on the received signaling allows centralized reception of signaling and determination of the search space corresponding to the MC-DCI on the same reference cell, without considering other cells, which simplifies the operational logic.

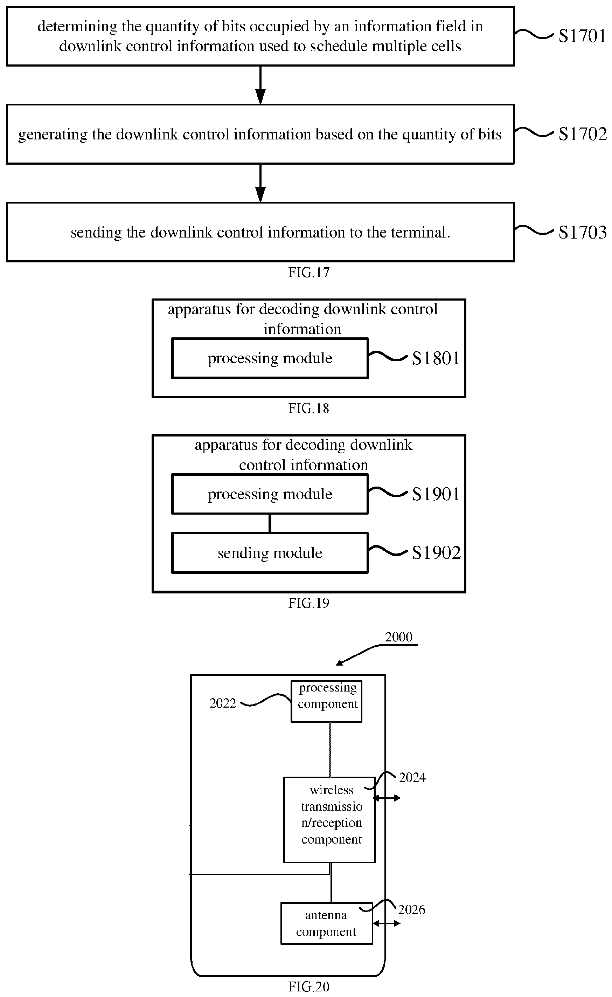

Figure 17 is a schematic flowchart illustrating a method for generating downlink control information according to an embodiment of the present disclosure. The method for generating downlink control information shown in this embodiment may be performed by a network device. The network device may communicate with a terminal. The network device includes, but is not limited to, base stations in communication systems such as 4G base stations, 5G base stations, and 6G base stations. The terminal includes, but is not limited to, communication devices such as mobile phones, tablets, wearable devices, sensors, and IoT devices.

2 As shown in Figure 17, the method for generating downlink control information may include the following steps:
in step S1701, determining the quantity of bits occupied by an information field in downlink control information used to schedule multiple cells;
in step S1702, generating the downlink control information based on the quantity of bits;
in step S1703, sending the downlink control information to the terminal.

The embodiments of the present disclosure propose downlink control information used to schedule multiple cells, also referred to as multi-cell scheduling downlink control information (MC-DCI). For convenience, some downlink control information used to schedule multiple cells is referred to as MC-DCI below.

The MC-DCI may be used to schedule multiple cells, specifically to schedule data of multiple cells, such as PUSCH or PDSCH of one or more cells in multiple cells, thereby achieving scheduling of multiple cells through one DCI.

In an embodiment, the cell used by the network device to send the MC-DCI to the terminal, i.e., the cell where the terminal receives the MC-DCI, may be referred to as the scheduling cell. The cells scheduled by the MC-DCI may be referred to as scheduled cells, which are all or part of the cells schedulable by the MC-DCI.

It should be noted that in all embodiments of the present disclosure, the cells schedulable by the MC-DCI may be determined based on the cell set corresponding to the MC-DCI. For example, the cell set corresponding to the MC-DCI is first determined, and then the cells in the cell set are determined as the cells schedulable by the MC-DCI. The cell set may be a set of cells with the same configuration parameters (e.g., set identifiers, resources, indexes, etc.), or any cell group schedulable by the MC-DCI, or the union of cells in each cell group schedulable by the MC-DCI. The cell groups schedulable by the MC-DCI may be configured through signaling.

Alternatively, the cells schedulable by the MC-DCI may be determined based on configuration signaling from the network device, or the cells schedulable by the MC-DCI may be determined based on the capability of the terminal.

Additionally, the network device may first determine the cells schedulable by the MC-DCI and then determine the set of all cells schedulable by the MC-DCI as the cell set corresponding to the MC-DCI.

The MC-DCI includes multiple information fields (also referred to as fields) for indicating various types of information. For example, the BWP indicator information field may be used to indicate the BWP where data is transmitted, and the frequency domain resource allocation information field may be used to indicate the frequency domain resources used for data transmission. When scheduling multiple cells through the MC-DCI, the information of the scheduled cells may be indicated through the information fields in the MC-DCI. For example, the BWP indicator information field may indicate the BWP where data is transmitted in the scheduled cells (e.g., indicating the BWP ID).

The MC-DCI schedules one or more cells among the cells schedulable by it. Considering that the one or more cells scheduled by the MC-DCI each time may be different, this leads to changes in the cells to be indicated by the information fields in the MC-DCI, thereby causing changes in the information fields in the MC-DCI. To accurately generate the MC-DCI and its information fields, it is necessary to determine at least the quantity of bits occupied by the information fields in the MC-DCI.

According to the embodiments of the present disclosure, the network device may accurately determine the quantity of bits occupied by the information fields in the MC-DCI and generate the information fields in the MC-DCI based on the determined quantity. This ensures that when the network device indicates the cells through the information fields, the quantity of bits occupied by the information fields is consistent with the terminal's understanding, thereby ensuring that the terminal can accurately decode the information fields in the MC-DCI. This further ensures that the terminal accurately determines the information indicated by the MC-DCI for each scheduled cell when scheduling multiple cells, and performs data transmission on each scheduled cell based on the indicated information.

In an embodiment, the method further includes determining the type of the information field.

In an embodiment, the type includes at least one of the following:
a first type, where the downlink control information includes one first information field, and the first information field of the first type is used to indicate first information of all cells scheduled by the downlink control information;
a second type, where the downlink control information includes one second information field, and the second information field of the second type is used to indicate an index of a combination of second information of at least one scheduled cell;
a third type, where the downlink control information includes at least one third information field, and each third information field of the at least one third information field of the third type indicates third information of a single scheduled cell;
a fourth type, where the information field of the fourth type may be determined as the first type, the second type, or the third type through predefined or configured methods.

In an embodiment, the information fields in the MC-DCI may be classified into several types based on the way they indicate the information of the scheduled cells, including but not limited to the above three types.

Here, the first type may also be referred to as Type1-A, the second type as Type1-B, the third type as Type2, and the fourth type as Type3.

In an embodiment, the information fields of the first type include at least one of the following: BWP indicator information field, VRB-to-PRB mapping information field, PRB bundling size indicator information field, DMRS sequence initialization information field, Antenna ports information field, Precoding information and number of layers information field, SRS resource indicator information field, Frequency hopping flag information field, Open-loop power control parameter set indication information field.

For example, the type of the Antenna ports information field is the fourth type. The network device may predefine or configure the Antenna ports information field as an information field of the first type or as an information field of the third type.

Taking the first information field of the first type as an example, one first information field may indicate the first information of all cells currently scheduled by the MC-DCI.

For example, the first information field is the BWP indicator information field, indicating that the BWP ID is 1, i.e., indicating BWP ID = 1. If the cells currently scheduled by the MC-DCI include Cell#2 and Cell#3, and Cell#2 and Cell#3 are configured with at least one BWP, the network device may use the BWP indicator information field in the MC-DCI to indicate that the BWP with ID = 1 should be used for communication on Cell#2 and Cell#3. Based on the BWP indicator information field in the MC-DCI, the terminal may determine that the BWP with ID = 1 should be used for communication on Cell#2 and Cell#3. If Cell#2 and Cell#3 are currently communicating on another BWP (e.g., BWP with ID = 2), they may determine that they need to perform BWP switching and switch to the BWP with ID = 1.

In an embodiment, the information fields of the second type include at least one of the following: ZP CSI-RS trigger information field, Rate matching indicator information field, TCI information field, SRS request information field, SRS offset indicator information field.

Taking the second information field of the second type as an example, one second information field may indicate the index of the combination of second information of all cells currently scheduled by the MC-DCI.

In an embodiment, the association relationship between the value of the information field corresponding to each cell and the indicated information may be determined. Based on the association relationship, the second information indicated by the value of the information field for the cell may be determined. Thus, for multiple cells, the values indicated by the information field for the multiple cells may be determined, i.e., the value of the information field may indicate multiple pieces of second information. The indicated multiple pieces of second information may form a combination of second information, and the value of the second information field may serve as the index of the combination of second information.

For example, as shown in Figure 2A, the scheduling cell is Cell#0, and the scheduled cells include Cell#0, Cell#1, and Cell#2. The terminal may receive the MC-DCI on Cell#0, which can schedule Cell#0, Cell#1, and Cell#2, i.e., the scheduled cells may include the scheduling cell.

The network device may send the association relationship between the value of the information field corresponding to Cell#0 and the indicated information to the terminal on Cell#0, for example, in the form of Table1-1. Based on Table1-1, for Cell#0, when the value of the ZP CSI-RS trigger information field is 0, it indicates that the ZP-CSI-RS ResourceSetID is 1; when the value is 1, it indicates that the ZP-CSI-RS ResourceSetID is 2; when the value is 2, it indicates that the ZP-CSI-RS ResourceSetID is 3; and when the value is 3, it indicates that the ZP-CSI-RS ResourceSetID is 4.

The network device may send the association relationship between the value of the information field corresponding to Cell#1 and the indicated information to the terminal on Cell#1, for example, in the form of Table1-2. Based on Table1-2, for Cell#1, when the value of the ZP CSI-RS trigger information field is 0, it indicates that the ZP-CSI-RS ResourceSetID is 2; when the value is 1, it indicates that the ZP-CSI-RS ResourceSetID is 3; when the value is 2, it indicates that the ZP-CSI-RS ResourceSetID is 2; and when the value is 3, it indicates that the ZP-CSI-RS ResourceSetID is 1.

The network device may send the association relationship between the value of the information field corresponding to Cell#2 and the indicated information to the terminal on Cell#2, for example, in the form of Table1-3. Based on Table1-3, for Cell#2, when the value of the ZP CSI-RS trigger information field is 0, it indicates that the ZP-CSI-RS ResourceSetID is 3; when the value is 1, it indicates that the ZP-CSI-RS ResourceSetID is 1; when the value is 2, it indicates that the ZP-CSI-RS ResourceSetID is reserved; and when the value is 3, it indicates that the ZP-CSI-RS ResourceSetID is 2.

The association relationship between the value of the information field and the indicated information may be sent to the terminal in RRC signaling. For example, the RRC signaling received on Cell#0 includes Table1-1, the RRC signaling received on Cell#1 includes Table1-2, and the RRC signaling received on Cell#2 includes Table1-3.

For example, if the terminal receives the MC-DCI on Cell#0 and the value of the ZP CSI-RS trigger information field is 1, based on Table1-1, Table1-2, and Table1-3, it may determine that the combination of information corresponding to index 1 is 2, 3, 1. That is, for Cell#0, the information indicated by the ZP CSI-RS trigger information field is ZP-CSI-RS ResourceSetID = 2; for Cell#1, the information indicated is ZP-CSI-RS ResourceSetID = 3; and for Cell#2, the information indicated is ZP-CSI-RS ResourceSetID = 1.

It should be understood that the association relationship between the value of the information field and the indicated information for each cell may be configured for the terminal separately on each cell. For example, as shown in the embodiment of Figure 2A, Table1-1 is configured on Cell#0, Table1-2 on Cell#1, and Table1-3 on Cell#3.

Alternatively, the association relationship between the value of the information field and the indicated information for each cell may be configured for the terminal on one cell. For example, Table1-1, Table1-2, and Table1-3 may be combined into Table1-0 and configured for the terminal on Cell#0, as shown in Figure 2B. The correspondence between the information indicated by the value of the information field in each column of the table and the cell may be determined based on protocol agreements or configured by the network device.

For example, the information indicated by the value of the information field in each column of the table may correspond to the cells with cell identifiers in an ascending order. Thus, the first column of ZP-CSI-RS ResourceSetID corresponds to Cell#0, the second column corresponds to Cell#1, and the third column corresponds to Cell#2.

For example, if the network device sends the MC-DCI to the terminal on Cell#0 and the value of the ZP CSI-RS trigger information field is 0, based on Table1-0, it may determine that the combination of information corresponding to index 1 is 1, 2, 3. That is, for Cell#0, the information indicated by the ZP CSI-RS trigger information field is ZP-CSI-RS ResourceSetID = 1; for Cell#1, the information indicated is ZP-CSI-RS ResourceSetID = 2; and for Cell#2, the information indicated is ZP-CSI-RS ResourceSetID = 3.

In an embodiment, the information fields of the third type include at least one of the following: MCS information field, HARQ process number information field, FDRA information field, Antenna ports information field, Precoding information and number of layers information field, SRS resource indicator information field, TPC command for scheduled PUSCH information field, PTRS-DMRS association information field, SRS resource indicator information field.

Taking the third information field of the third type as an example, a single third information field may indicate the information of a single cell. Thus, when scheduling at least one cell through the MC-DCI, the MC-DCI may include at least one third information field, where each third information field indicates the information of a single scheduled cell.

When the MC-DCI schedules multiple cells, the MC-DCI may indicate the information of multiple scheduled cells through multiple third information fields. Therefore, it is necessary to determine the correspondence between the bits occupied by at least one third information field and the identifiers of at least one scheduled cell.

For example, the correspondence between the bits occupied by at least one third information field and the identifiers of at least one scheduled cell (the cells currently scheduled by the MC-DCI) may be mapping at least one scheduled cell to the bits occupied by at least one third information field with cell identifiers in an ascending order.

For example, the correspondence between the bits occupied by at least one third information field and the identifiers of at least one scheduled cell (the cells currently scheduled by the MC-DCI) may be mapping at least one scheduled cell to the bits occupied by at least one third information field with cell identifiers in an descending order.

According to the above embodiments, some information fields in the MC-DCI may belong to multiple types. For example, the Antenna ports information field may belong to the first type or the third type. Therefore, it is necessary to determine the type of the information field. The operation of determining the type of the information field may be performed when the information field can belong to multiple types.

In an embodiment, the method further includes:
indicating the type of the information field to the terminal, where the method of indicating the type of the information field to the terminal includes at least one of the following:
indicating the type of an information field to a terminal through signaling of a scheduling cell;
indicating the type of an information field to a terminal through signaling of a reference cell; or
indicating the type of an information field to a terminal through downlink control information.

In an embodiment, a network device may send signaling to a terminal in a scheduling cell, where the signaling indicates the type of one or more information fields in MC-DCI.

In an embodiment, a network device may send signaling to a terminal in a reference cell, where the signaling indicates the type of one or more information fields in MC-DCI.

In an embodiment, the reference cell includes at least one of the following:
a cell used to calculate the size (i.e., the number of occupied bits) of downlink control information;
a cell used to calculate blind detection resources (e.g., BD, CCE) for downlink control information; or
a cell configured with a search space corresponding to downlink control information.

In an embodiment, the type of one or more information fields in MC-DCI may be determined based on the MC-DCI. For example, when indicating the type of an information field, the quantity of bits occupied by the information field may be used for indication. Taking the Antenna ports information field as an example, it may belong to two types, so only one bit is needed for indication. The bit used to indicate the type of the information field may be the most significant bit (MSB) or the least significant bit (LSB) of the information field. For example, when the bit indicating the type is 1, it may indicate that the Antenna ports information field belongs to the first type; when the bit is 0, it may indicate that the Antenna ports information field belongs to the third type.

In an embodiment, the network device may first indicate, through RRC signaling, whether a fourth information field in MC-DCI can belong to multiple types. If the fourth information field in MC-DCI can belong to multiple types, the specific type of the fourth information field may be further indicated by bits in the fourth information field in MC-DCI.

For example, RRC signaling may indicate the type of the fourth information field in MC-DCI, such as the first type, second type, third type, or dynamic type. If the RRC signaling indicates that the fourth information field in MC-DCI belongs to one of the first type, second type, or third type, there is no need to further indicate the type of the fourth information field through MC-DCI. However, if the RRC signaling indicates that the fourth information field in MC-DCI belongs to the dynamic type, the specific type of the fourth information field (e.g., one of the first type, second type, or third type) must be further indicated through MC-DCI.

In an embodiment, determining the quantity of bits occupied by an information field in downlink control information used to schedule multiple cells includes:
determining a first maximum value among predetermined quantities of bits occupied by first information fields corresponding respectively to all cells schedulable by the downlink control information;
determining a first quantity of bits occupied by the first information field of the first type according to the first maximum value.

In an embodiment, for cells schedulable by MC-DCI, the network device may determine the predetermined quantity of bits occupied by the first information field corresponding to each cell. For example, it may be determined based on predefined rules, such as according to communication protocol 38.212[2], where the first maximum value refers to the maximum quantity among the predetermined quantities of bits occupied by the first information fields corresponding respectively to all cells.

For example, if the cells schedulable by MC-DCI are Cell#1, Cell#2, Cell#3, and Cell#4 (totaling 4 cells), taking the Antenna ports information field as an example, the predetermined quantities of bits occupied by the Antenna ports information field for these 4 cells are as shown in Table 1 above.

As shown in Table 1, for Cell#1 with cell identifier 1, the predetermined quantity of bits occupied by the Antenna ports information field is 4; for Cell#2 with cell identifier 2, the predetermined quantity is 6; for Cell#3 with cell identifier 3, the predetermined quantity is 4; and for Cell#4 with cell identifier 4, the predetermined quantity is 5.

Further, the network device may determine the first quantity of bits occupied by the first information field of the first type based on the first maximum value of the predetermined quantities of bits occupied by the first information fields corresponding respectively to all cells schedulable by MC-DCI. For example, the first quantity of bits occupied by the first information field of the first type may be set equal to the first maximum value of the predetermined quantities of bits occupied by the first information fields corresponding respectively to all cells schedulable by MC-DCI.

For example, if the first information field is the Antenna ports information field, then based on Table 1 above, the quantity of bits occupied by the Antenna ports information field equals the first maximum value of the predetermined quantities of bits occupied by the Antenna ports information field corresponding respectively to all cells schedulable by MC-DCI. Here, the first maximum value among the 4 cells is 6, so the quantity of bits occupied by the Antenna ports information field is 6.

It should be noted that the cells schedulable by MC-DCI may be determined based on the cell set corresponding to MC-DCI. For example, the cell set corresponding to MC-DCI may first be determined, and then the cells in the cell set may be regarded as the cells schedulable by MC-DCI. The cell set may be a set of cells with the same configuration parameters (e.g., set identifier, resources, index, etc.), or it may be any cell group schedulable by MC-DCI, or it may be the union of cells in each cell group schedulable by MC-DCI.

Alternatively, the cells schedulable by MC-DCI may be determined based on configuration signaling from the network device, or they may be determined based on the terminal's capability.

In an embodiment, determining the quantity of bits occupied by an information field in downlink control information used to schedule multiple cells includes:
determining a third maximum value among quantities of bits that can be occupied by the first information fields corresponding respectively to all cells schedulable by the downlink control information;
determining the first quantity of bits occupied by the first information field of the first type according to the third maximum value.

In an embodiment, for cells schedulable by MC-DCI, the network device may determine the third maximum value among the quantities of bits that can be occupied by the first information field corresponding to each cell. Here, the third maximum value among the quantities of bits that can be occupied by the first information field corresponding to each cell may be determined based on existing mechanisms, such as predefined rules, or it may be autonomously determined by the network device and configured to the terminal through configuration signaling (e.g., RRC signaling). The configuration may be direct or indirect. For example, the network device may configure relevant information about the first information field, and the terminal may determine the quantity of bits that can be occupied by the first information field and the third maximum value based on the relevant information.

For example, the network device may configure, through configuration signaling, that the BWP indicator information field can occupy 0, 1, or 2 bits, where the maximum quantity of bits is 2, i.e., the third maximum value of the quantities of bits that can be occupied by the BWP indicator information field is 2. Thus, it can be determined that the first quantity of bits occupied by the BWP indicator information field is 2, and further, it can be determined that the first quantity of bits occupied by the BWP indicator information field is 7. Here, the quantities of bits configured by the network device for the BWP indicator information field may apply to all cells.

In an embodiment, determining the quantity of bits occupied by an information field in downlink control information used to schedule multiple cells includes:
determining the minimum value among the predetermined quantities of bits occupied by the first information fields corresponding respectively to all cells schedulable by the downlink control information;
determining the first quantity of bits occupied by the first information field of the first type according to the minimum value.

In an embodiment, for cells schedulable by MC-DCI, the network device may determine the predetermined quantity of bits occupied by the first information field corresponding to each cell. For example, it may be determined based on predefined rules, such as according to communication protocol 38.212[2].

For example, if the cells schedulable by MC-DCI are Cell#1, Cell#2, Cell#3, and Cell#4 (totaling 4 cells), taking the Antenna ports information field as an example, the predetermined quantities of bits occupied by the Antenna ports information field for these 4 cells are as shown in Table 1 above.

As shown in Table 1, for Cell#1 with cell identifier 1, the predetermined quantity of bits occupied by the Antenna ports information field is 4; for Cell#2 with cell identifier 2, the predetermined quantity is 6; for Cell#3 with cell identifier 3, the predetermined quantity is 4; and for Cell#4 with cell identifier 4, the predetermined quantity is 5.

Further, the network device may determine the first quantity of bits occupied by the first information field of the first type based on the minimum value. For example, the first quantity of bits occupied by the first information field of the first type may be set equal to the minimum value among the predetermined quantities of bits occupied by the first information fields corresponding respectively to all cells schedulable by MC-DCI.

For example, if the first information field is the Antenna ports information field, then based on Table 1 above, the quantity of bits occupied by the Antenna ports information field equals the minimum value among the predetermined quantities of bits occupied by the Antenna ports information field corresponding respectively to all cells schedulable by MC-DCI. Here, the minimum value among the 4 cells is 4, so the quantity of bits occupied by the Antenna ports information field is 4.

In an embodiment, determining the minimum value among the predetermined quantities of bits occupied by the first information fields corresponding respectively to all cells schedulable by the downlink control information includes:
determining the minimum value among the greater-than-0 predetermined quantities of bits occupied by the first information field corresponding respectively to all cells schedulable by the downlink control information.

Since the quantity of bits occupied by the first information field corresponding to some cells may equal zero, determining the first quantity of bits occupied by the first information field of the first type as zero in such cases may cause issues, such as making it impossible for the first information field to indicate information for certain cells. Therefore, the minimum value among the greater-than-0 predetermined quantities of bits occupied by the first information field corresponding respectively to all cells schedulable by the downlink control information may be determined, and then the first quantity of bits occupied by the first information field of the first type may be set equal to this minimum value.

In an embodiment, generating the downlink control information according to the quantity of bits includes:
if the first quantity of bits occupied by the first information field of the first type is less than the predetermined quantity of bits occupied by the first information field corresponding to a scheduled cell, generating the first information field occupying the first quantity of bits, where the first information field is used to indicate information of the scheduled cell; or
if the first quantity of bits occupied by the first information field of the first type is less than the predetermined quantity of bits occupied by the first information field corresponding to a scheduled cell, padding zeros to the first information field based on the difference between the predetermined quantity and the first quantity, where the zero-padded first information field is used to indicate information of the scheduled cell.
here, the first quantity of bits occupied by the first information field of the first type is the actual quantity of bits occupied by the first information field in MC-DCI, which may be determined based on the embodiments described earlier. The scheduled cell is the cell currently scheduled by MC-DCI. The predetermined quantity of bits occupied by the first information field corresponding to the scheduled cell is not the actual quantity of bits occupied by the first information field in MC-DCI but a pre-determined quantity, which may be determined by the network device and configured to the terminal through configuration signaling or determined based on predefined rules, such as according to communication protocol 38.212 [.

In an embodiment, if the first quantity of bits occupied by the first information field of the first type is less than the predetermined quantity of bits occupied by the first information field corresponding to a scheduled cell, the network device may generate the first information field occupying the first quantity of bits and use the first information field to indicate information of the scheduled cell. Correspondingly, the terminal may directly decode the first information field based on the first quantity to determine the information indicated by the first information field for the scheduled cell.

For example, based on Table 1 above, the cells schedulable by MC-DCI include Cell#1, Cell#2, Cell#3, and Cell#4, and the first quantity of bits occupied by the first information field of the first type is 4. If the currently scheduled cells are Cell#2 and Cell#3 (i.e., the scheduled cells include Cell#2 and Cell#3), then for Cell#2, the predetermined quantity of bits occupied by the Antenna ports information field is 6, and for Cell#3, the predetermined quantity is 4.

Here, the first quantity of bits occupied by the Antenna ports information field of the first type is 4, which is less than the predetermined quantity of 6 for Cell#2. Thus, the network device may generate a 6-bit Antenna ports information field and use it to indicate information for Cell#2. Correspondingly, the terminal may directly decode the 4 bits occupied by the Antenna ports information field of the first type to determine the information indicated by the Antenna ports information field for Cell#2.

In an embodiment, if the first quantity of bits occupied by the first information field of the first type is less than the predetermined quantity of bits occupied by the first information field corresponding to a scheduled cell, zeros may be padded to the first information field based on the difference between the predetermined quantity and the first quantity. The positions for padding zeros may be selected as needed, such as padding zeros to the MSB or LSB. The zero-padded first information field is then used to indicate information of the scheduled cell.

For example, based on Table 1 above, the cells schedulable by MC-DCI include Cell#1, Cell#2, Cell#3, and Cell#4, and the first quantity of bits occupied by the first information field of the first type is 4. If the currently scheduled cells are Cell#2 and Cell#3 (i.e., the scheduled cells include Cell#2 and Cell#3), then for Cell#2, the predetermined quantity of bits occupied by the Antenna ports information field is 6, and for Cell#3, the predetermined quantity is 4.

Here, the first quantity of bits occupied by the Antenna ports information field of the first type is 4, which is less than the predetermined quantity of 6 for Cell#2. When generating the Antenna ports information field in MC-DCI, the network device may pad zeros to the Antenna ports information field based on the difference between the predetermined quantity and the first quantity (6 - 4 = 2), and then use the zero-padded first information field to indicate information of the scheduled cell.

It should be noted that if the network device performs zero-padding on the first information field, the terminal may skip zero-padding when decoding the first information field. However, if the network device does not perform zero-padding on the first information field, the terminal may first pad zeros to the first information field when decoding it. For details on how the terminal performs zero-padding, refer to the terminal-side embodiments, which will not be repeated here.

In an embodiment, generating the downlink control information according to the quantity of bits includes at least one of the following:
if the first quantity of bits occupied by the first information field of the first type is greater than the predetermined quantity of bits occupied by the first information field corresponding to a scheduled cell, determining that the indicated value of the first information field is not applied to the scheduled cell;
if the first quantity of bits occupied by the first information field of the first type is greater than the predetermined quantity of bits occupied by the first information field corresponding to a scheduled cell, determining that the indicated value of the first information field is adjusted to a first value for indicating information of the scheduled cell, where the first value is determined based on configuration signaling or predefined rules, and the first value is less than or equal to the maximum indicated value corresponding to the predetermined quantity of bits;
if the first quantity of bits occupied by the first information field of the first type is greater than the predetermined quantity of bits occupied by the first information field corresponding to a scheduled cell, determining that the terminal does not process the downlink control information;
if the first quantity of bits occupied by the first information field of the first type is greater than the predetermined quantity of bits occupied by the first information field corresponding to a scheduled cell, determining that the terminal does not process the first information field;
if the first quantity of bits occupied by the first information field of the first type is greater than the predetermined quantity of bits occupied by the first information field corresponding to a scheduled cell, determining that the predetermined quantity of bits occupied by the first information field corresponding to the scheduled cell is used to indicate information of the scheduled cell.

Here, the first quantity of bits occupied by the first information field of the first type is the actual quantity of bits occupied by the first information field in MC-DCI, which may be determined based on the embodiments described earlier. The scheduled cell is the cell currently scheduled by MC-DCI. The predetermined quantity of bits occupied by the first information field corresponding to the scheduled cell is not the actual quantity of bits occupied by the first information field in MC-DCI but a pre-determined quantity, which may be determined by the network device and configured to the terminal through configuration signaling or determined based on predefined rules, such as according to communication protocol 38.212 [.

In an embodiment, based on Table 1 above, if the cells schedulable by MC-DCI include Cell#1, Cell#2, Cell#3, and Cell#4, and the currently scheduled cells are Cell#2 and Cell#3 (i.e., the scheduled cells include Cell#2 and Cell#3), then for Cell#2, the predetermined quantity of bits occupied by the Antenna ports information field is 6, and for Cell#3, the predetermined quantity is 4.

If the first quantity of bits occupied by the Antenna ports information field in MC-DCI is 6, since 6 is greater than the predetermined quantity of 4 for Cell#3, it would be difficult to use the Antenna ports information field to indicate information for Cell#3.

Therefore, in an embodiment, if the first quantity of bits occupied by the first information field of the first type is greater than the predetermined quantity of bits occupied by the first information field corresponding to a scheduled cell, the network device may determine that the indicated value of the first information field is not applied to the scheduled cell.

For example, for the Antenna ports information field above, if the Antenna ports information field occupies 6 bits in MC-DCI, since 6 is greater than the predetermined quantity of 4 for Cell#3, it may be determined that the Antenna ports information field is not applied to Cell#3 but can be applied to Cell#2.

In an embodiment, if the first quantity of bits occupied by the first information field of the first type is greater than the predetermined quantity of bits occupied by the first information field corresponding to a scheduled cell, the network device may determine that the indicated value of the first information field is adjusted to a first value for indicating information of the scheduled cell. Correspondingly, the terminal may adjust the indicated value of the first information field to the first value. Since the first value is less than or equal to the maximum indicated value corresponding to the predetermined quantity of bits, the first value can be applied to the scheduled cell.

For example, for the Antenna ports information field above, if the Antenna ports information field occupies 6 bits in MC-DCI, since 6 is greater than the predetermined quantity of 4 for Cell#3, the network device may determine that the indicated value of the first information field is adjusted to a first value for indicating information of the scheduled cell. The terminal may adjust the indicated value of the Antenna ports information field to the first value, where the first value is less than or equal to the maximum indicated value of 15 corresponding to 4 bits. In this case, the terminal can accurately determine the information indicated by the first value for Cell#3, so the first value can be applied to Cell#3. Here, the first value may be determined based on configuration signaling or predefined rules. For example, the first value may equal the maximum indicated value corresponding to the predetermined quantity of bits for the scheduled cell (e.g., 15 in this example), or it may equal the minimum indicated value (e.g., 0 in this example).

In an embodiment, if the first quantity of bits occupied by the first information field of the first type is greater than the predetermined quantity of bits occupied by the first information field corresponding to a scheduled cell, the terminal may be determined not to process MC-DCI. Here, not processing MC-DCI includes: not performing blind detection on MC-DCI; or performing blind detection on MC-DCI but not decoding it; or performing blind detection and decoding on MC-DCI but determining that the decoded result does not take effect (i.e., not using it to indicate information for the scheduled cells).

For example, for the Antenna ports information field above, if the Antenna ports information field occupies 6 bits in MC-DCI, since 6 is greater than the predetermined quantity of 4 for Cell#3, the terminal cannot accurately determine the information indicated by the 6-bit Antenna ports information field for Cell#3. Therefore, it may be determined that the terminal does not process MC-DCI.

In an embodiment, if the first quantity of bits occupied by the first information field of the first type is greater than the predetermined quantity of bits occupied by the first information field corresponding to a scheduled cell, the terminal may be determined not to process the first information field. Here, not processing the first information field includes: not decoding the first information field; or decoding the first information field but determining that the decoded result does not take effect (i.e., not using it to indicate information for the scheduled cells).

For example, for the Antenna ports information field above, if the Antenna ports information field occupies 6 bits in MC-DCI, since 6 is greater than the predetermined quantity of 4 for Cell#3, the terminal cannot accurately determine the information indicated by the 6-bit Antenna ports information field for Cell#3. Therefore, it may be determined that the terminal does not process the Antenna ports information field but still processes other information fields in MC-DCI (e.g., decoding them and making the decoded results take effect).

In an embodiment, if the first quantity of bits occupied by the first information field of the first type is greater than the predetermined quantity of bits occupied by the first information field corresponding to a scheduled cell, the network device may determine that the predetermined quantity of bits occupied by the first information field corresponding to the scheduled cell is used to indicate information of the scheduled cell. For example, among the bits corresponding to the first information field, the predetermined quantity of bits occupied by the first information field corresponding to the scheduled cell may be determined, and then the determined bits may be used as the first information field to indicate information of the scheduled cell.

Here, determining the predetermined quantity of bits occupied by the first information field corresponding to the scheduled cell among the bits corresponding to the first information field includes but is not limited to the following two methods: determining the predetermined quantity of bits from the front to the back among the bits corresponding to the first information field (i.e., starting from the MSB in the first information field); determining the predetermined quantity of bits from the back to the front among the bits corresponding to the first information field (i.e., starting from the LSB in the first information field).

For example, for the Antenna ports information field above, if the Antenna ports information field occupies 6 bits in MC-DCI, since 6 is greater than the predetermined quantity of 4 for Cell#3, the network device may determine the predetermined quantity of bits (4) occupied by the Antenna ports information field corresponding to Cell#3 among the bits of the Antenna ports information field. That is, 4 bits are determined in the Antenna ports information field, and the determined 4 bits are used as the Antenna ports information field to indicate information for Cell#3.

For example, if the bits corresponding to the Antenna ports information field are 101111, the first 4 bits (1011) may be determined from the front to the back, and then 1011 may be used to determine the information indicated by the Antenna ports information field for Cell#3. Alternatively, the last 4 bits (1111) may be determined from the back to the front, and then 1111 may be used to determine the information indicated by the Antenna ports information field for Cell#3.

In an embodiment, since the terminal may encounter issues when decoding the first information field if the first quantity of bits occupied by the first information field of the first type is greater than the predetermined quantity of bits occupied by the first information field corresponding to a scheduled cell, the terminal may not expect the first quantity to be greater than the predetermined quantity of bits occupied by the first information field corresponding to a scheduled cell.

Correspondingly, the network device may not configure the first quantity to be greater than the predetermined quantity (i.e., only configure the first quantity to be less than or equal to the predetermined quantity). This helps avoid issues in the terminal's decoding process for the first information field.

In an embodiment, whether the first quantity of bits occupied by the first information field of the first type is greater than the predetermined quantity of bits occupied by the first information field corresponding to a scheduled cell may be determined by the network device based on the information that can be indicated by the first information field corresponding to the scheduled cell and/or the predetermined quantity of bits occupied by the first information field corresponding to the scheduled cell.

Taking the BWP indicator information field as an example of the first information field, the cells schedulable by MC-DCI (i.e., the scheduled cells) include Cell#1, Cell#2, Cell#3, and Cell#4 (totaling 4 cells). The quantity of downlink bandwidth parts (DL BWPs) configured for these 4 cells, denoted as nBWP, is as shown in Table 2 above.

According to Table 2, the quantity of DL BWPs configured for Cell#1 is 2, so the maximum quantity of BWPs that the BWP indicator information field can indicate for Cell#1 is 2;
the quantity of DL BWPs configured for Cell#2 is 1, so the maximum quantity of BWPs that the BWP indicator information field can indicate for Cell#2 is 1;
the quantity of DL BWPs configured for Cell#3 is 4, so the maximum quantity of BWPs that the BWP indicator information field can indicate for Cell#3 is 4;

The quantity of DL BWPs configured for Cell#4 is 3, so the maximum quantity of BWPs that the BWP indicator information field can indicate for Cell#4 is 3.

When the cells currently scheduled by MC-DCI include Cell#2 and Cell#3, if the BWP indicator field occupies 2 bits, it can indicate a maximum of 4 BWPs. This is greater than the maximum quantity of BWPs (1) that the BWP indicator field can indicate for Cell#2 but equal to the maximum quantity of BWPs (4) that the BWP indicator field can indicate for Cell#3. Thus, it can be determined that the first quantity of bits occupied by the first-type BWP indicator field is greater than the predetermined quantity of bits occupied by the BWP indicator field corresponding to Cell#2 and equal to the predetermined quantity of bits occupied by the BWP indicator field corresponding to Cell#3. Subsequently, one of the optional operations includes determining that the BWP indicator field is not applied to Cell#2 but can be applied to Cell#3.

Taking the VRB-to-PRB mapping field as an example of the first field, the cells schedulable by MC-DCI, i.e., the scheduled cells, include four cells: Cell#1, Cell#2, Cell#3, and Cell#4. The predetermined quantities of bits occupied by the VRB-to-PRB mapping field corresponding to these four cells are as shown in Table 3 above.

According to Table 3, for Cell#1, the predetermined quantity of bits occupied by the VRB-to-PRB mapping field is 0; for Cell#2, the predetermined quantity is 1; for Cell#3, the predetermined quantity is 0; and for Cell#4, the predetermined quantity is 1. Based on this, it can be determined that the quantity of bits occupied by the VRB-to-PRB mapping field is 1.

When the cells currently scheduled by MC-DCI include Cell#2 and Cell#3, since the quantity of bits occupied by the VRB-to-PRB mapping field is 1, which is greater than the predetermined quantity of bits (0) occupied by the VRB-to-PRB mapping field corresponding to Cell#3 and equal to the predetermined quantity of bits (1) occupied by the VRB-to-PRB mapping field corresponding to Cell#2, one of the subsequent optional operations includes determining that the VRB-to-PRB mapping field is not applied to Cell#3 but can be applied to Cell#2.

It should be noted that the predetermined quantities of bits occupied by the Antenna ports field and the VRB-to-PRB mapping field may vary for different cells. However, for some first fields, the quantity of bits occupied is constant. For example, the DMRS sequence initialization field always occupies 1 bit.

In an embodiment, generating the downlink control information based on the quantity of bits includes at least one of the following:
in response to the indicated value of the first-type first field being greater than the maximum indicated value corresponding to the predetermined quantity of bits occupied by the first field of the scheduled cell, determining that the indicated value of the first field is not applied to the scheduled cell;
in response to the indicated value of the first-type first field being greater than the maximum indicated value corresponding to the predetermined quantity of bits occupied by the first field of the scheduled cell, determining that the indicated value of the first field is adjusted to a first value for indicating the information of the scheduled cell, where the first value is determined based on configuration signaling or predefined rules, and the first value is less than or equal to the maximum indicated value corresponding to the predetermined quantity of bits;
in response to the indicated value of the first-type first field being greater than the maximum indicated value corresponding to the predetermined quantity of bits occupied by the first field of the scheduled cell, determining that the terminal does not process the downlink control information;
in response to the indicated value of the first-type first field being greater than the maximum indicated value corresponding to the predetermined quantity of bits occupied by the first field of the scheduled cell, determining that the terminal does not process the first field;
in response to the indicated value of the first-type first field being greater than the maximum indicated value corresponding to the predetermined quantity of bits occupied by the first field of the scheduled cell, determining that the predetermined quantity of bits occupied by the first field of the scheduled cell is used to indicate the information of the scheduled cell.

Here, the first quantity of bits occupied by the first-type first field is the actual quantity of bits occupied by the first field in the MC-DCI, which may be determined based on the embodiments described above. The scheduled cell is the cell currently scheduled by the MC-DCI. The predetermined quantity of bits occupied by the first field corresponding to the scheduled cell is not the actual quantity of bits occupied by the first field in the MC-DCI but a predetermined quantity, which may be determined by the network device and configured to the terminal via configuration signaling or determined based on predefined rules, such as according to communication protocol 38.212[2].

In an embodiment, the maximum indicated value corresponding to the predetermined quantity of bits occupied by the first field of the scheduled cell may be determined based on the predetermined quantity of bits occupied by the first field of the scheduled cell. For example, if the predetermined quantity of bits occupied by the first field of the scheduled cell is n bits, the maximum indicated value is 2^n - 1. Here, the scheduled cell is the cell currently scheduled by the MC-DCI. The predetermined quantity of bits occupied by the first field corresponding to the scheduled cell may be determined based on configuration signaling from the network device or predefined rules, such as according to communication protocol 38.212[2].

For example, based on Table 1 above, the cells schedulable by MC-DCI include Cell#1, Cell#2, Cell#3, and Cell#4. The currently scheduled cells are Cell#2 and Cell#3, i.e., the scheduled cells include Cell#2 and Cell#3. For Cell#2, the maximum indicated value corresponding to the predetermined quantity of bits (6) occupied by the Antenna ports field is 26 - 1 = 63. For Cell#3, the maximum indicated value corresponding to the predetermined quantity of bits (4) occupied by the Antenna ports field is 24 - 1 = 15.

If the indicated value of the Antenna ports field is 17, since 17 is greater than the maximum indicated value (15) corresponding to the predetermined quantity of bits occupied by the Antenna ports field of Cell#3, the network device cannot indicate the information of Cell#3 through the Antenna ports field.

Therefore, in an embodiment, when the indicated value of the first-type first field is greater than the maximum indicated value corresponding to the predetermined quantity of bits occupied by the first field of the scheduled cell, the network device may determine that the indicated value of the first field is not applied to the scheduled cell.

For example, for the Antenna ports field, when the indicated value is 17, since 17 is greater than the maximum indicated value (15) corresponding to the predetermined quantity of bits occupied by the Antenna ports field of Cell#3 but less than the maximum indicated value (63) corresponding to the predetermined quantity of bits occupied by the Antenna ports field of Cell#2, it can be determined that the indicated value (17) of the Antenna ports field is not applied to Cell#3 but can be applied to Cell#2.

In an embodiment, when the indicated value of the first-type first field is greater than the indicated value corresponding to the predetermined quantity of bits occupied by the first field of the scheduled cell, the network device may determine that the indicated value of the first field is adjusted to a first value for indicating the information of the scheduled cell. Correspondingly, the terminal may adjust the indicated value of the first field to the first value. Since the first value is less than or equal to the indicated value corresponding to the predetermined quantity of bits occupied by the first field of the scheduled cell, the first value can be applied to the scheduled cell.

For example, for the Antenna ports field, when the indicated value is 17, since 17 is greater than the maximum indicated value (15) corresponding to the predetermined quantity of bits occupied by the Antenna ports field of Cell#3, the terminal may adjust the indicated value of the Antenna ports field to the first value, where the first value is less than or equal to 15. In this case, the network device may determine that the indicated value of the first field is adjusted to the first value for indicating the information of the scheduled cell. The terminal can accurately decode the information indicated by the first value for Cell#3, and thus, the first value can be applied to Cell#3. Here, the first value is determined based on configuration signaling or predefined rules. For example, the first value may be equal to the maximum indicated value corresponding to the predetermined quantity of bits occupied by the first field of the scheduled cell. In this embodiment, the first value may be 15.

In an embodiment, when the indicated value of the first-type first field is greater than the maximum indicated value corresponding to the predetermined quantity of bits occupied by the first field of the scheduled cell, the network device may determine that the terminal does not process the MC-DCI. Here, not processing the MC-DCI includes: not performing blind detection on the MC-DCI; or performing blind detection on the MC-DCI but not decoding it; or performing blind detection and decoding on the MC-DCI but determining that the decoded result is not valid, i.e., not used to indicate the multiple scheduled cells.

For example, for the Antenna ports field, when the indicated value is 17, since 17 is greater than the maximum indicated value (15) corresponding to the predetermined quantity of bits occupied by the Antenna ports field of Cell#3, the terminal cannot accurately determine the information indicated by the value 17 for Cell#3. Therefore, it can be determined that the terminal may not process the MC-DCI.

In an embodiment, when the indicated value of the first-type first field is greater than the maximum indicated value corresponding to the predetermined quantity of bits occupied by the first field of the scheduled cell, the network device may determine that the terminal does not process the first field. Here, not processing the first field includes: not decoding the first field; or decoding the first field but determining that the decoded result is not valid, i.e., not used to indicate the multiple scheduled cells.

For example, for the Antenna ports field, when the indicated value is 17, since 17 is greater than the maximum indicated value (15) corresponding to the predetermined quantity of bits occupied by the Antenna ports field of Cell#3, the terminal cannot accurately determine the information indicated by the value 17 for Cell#3. Therefore, it can be determined that the terminal does not process the Antenna ports field. However, other fields in the MC-DCI are still processed, such as being decoded, and the decoded results are effective.

In an embodiment, when the indicated value of the first-type first field is greater than the maximum indicated value corresponding to the predetermined quantity of bits occupied by the first field of the scheduled cell, the network device may determine that the predetermined quantity of bits occupied by the first field of the scheduled cell is used to indicate the information of the scheduled cell. Correspondingly, the terminal may determine the indicated value of the first field for the scheduled cell based on the predetermined quantity of bits occupied by the first field of the scheduled cell. For example, the network device may determine the predetermined quantity of bits occupied by the first field of the scheduled cell in the corresponding bits of the first field and then use the determined bits as the first information to indicate the information of the scheduled cell.

Here, determining the predetermined quantity of bits occupied by the first field of the scheduled cell in the corresponding bits of the first field includes, but is not limited to, the following two methods: determining the predetermined quantity of bits from the front to the back in the corresponding bits of the first field or determining the predetermined quantity of bits from the back to the front in the corresponding bits of the first field.

For example, for the Antenna ports field, when the indicated value is 17, which is greater than the maximum indicated value (15) corresponding to the predetermined quantity of bits (4) occupied by the Antenna ports field of Cell#3, the network device may determine that the predetermined quantity of bits occupied by the Antenna ports field of Cell#3 is 4. The network device may determine the predetermined quantity of bits occupied by the Antenna ports field of Cell#3 in the Antenna ports field, i.e., determine 4 bits in the Antenna ports field, and then use the determined 4 bits as the Antenna ports field to indicate the information of Cell#3.

For example, if the bits corresponding to the Antenna ports field are specifically 010001, the network device may determine the first 4 bits (0100) from the front to the back in the corresponding bits of the Antenna ports field and use these bits to determine the information indicated by the Antenna ports field for Cell#3. Alternatively, the network device may determine the last 4 bits (0001) from the back to the front in the corresponding bits of the Antenna ports field and use these bits to determine the information indicated by the Antenna ports field for Cell#3.

In an embodiment, the terminal does not expect the indicated value of the first-type first field to be greater than the indicated value corresponding to the predetermined quantity of bits occupied by the first field of any scheduled cell.

Since the terminal may encounter issues when decoding the first field if the indicated value of the first-type first field is greater than the maximum indicated value corresponding to the predetermined quantity of bits occupied by the first field of any scheduled cell, the terminal may not expect the indicated value of the first-type first field to be greater than the maximum indicated value corresponding to the predetermined quantity of bits occupied by the first field of any scheduled cell.

Correspondingly, the network device may not configure the indicated value of the first-type first field to be greater than the indicated value corresponding to the predetermined quantity of bits occupied by the first field of any scheduled cell, i.e., only configure the indicated value of the first-type first field to be less than or equal to the indicated value corresponding to the predetermined quantity of bits occupied by the first field of any scheduled cell. This helps avoid issues in the terminal's decoding process for the first field.

In an embodiment, whether the indicated value of the first-type first field is greater than the indicated value corresponding to the predetermined quantity of bits occupied by the first field of the scheduled cell may be determined by the network device based on the information that can be indicated by the first field of the scheduled cell and/or the predetermined quantity of bits occupied by the first field of the scheduled cell.

Taking the BWP indicator field as an example of the first field, the cells schedulable by MC-DCI, i.e., the scheduled cells, include four cells: Cell#1, Cell#2, Cell#3, and Cell#4. The number of downlink bandwidth parts (DL BWPs) configured for these four cells (nBWP) is as shown in Table 2 above.

According to Table 2, the quantity of DL BWPs (nBWP) configured for Cell#1 is 2, so the maximum quantity of BWPs that the BWP indicator field can indicate for Cell#1 is 2;
the quantity of DL BWPs (nBWP) configured for Cell#2 is 1, so the maximum quantity of BWPs that the BWP indicator field can indicate for Cell#2 is 1;
the quantity of DL BWPs (nBWP) configured for Cell#3 is 4, so the maximum quantity of BWPs that the BWP indicator field can indicate for Cell#3 is 4;
the quantity of DL BWPs (nBWP) configured for Cell#4 is 3, so the maximum quantity of BWPs that the BWP indicator field can indicate for Cell#4 is 3.

When the cells currently scheduled by MC-DCI include Cell#2 and Cell#3, if the indicated value of the BWP indicator field is 3, which is greater than the maximum quantity of BWPs (1) that the BWP indicator field can indicate for Cell#2 but less than the maximum quantity of BWPs (4) that the BWP indicator field can indicate for Cell#3, it can be determined that the indicated value of the first-type BWP indicator field is greater than the indicated value corresponding to the BWP indicator field of Cell#2 but less than the indicated value corresponding to the BWP indicator field of Cell#3. Subsequently, one of the optional operations includes determining that the indicated value (3) of the BWP indicator field is not applied to Cell#2 but can be applied to Cell#3.

Taking the VRB-to-PRB mapping field as an example of the first field, the cells schedulable by MC-DCI, i.e., the scheduled cells, include four cells: Cell#1, Cell#2, Cell#3, and Cell#4. The predetermined quantities of bits occupied by the VRB-to-PRB mapping field corresponding to these four cells are as shown in Table 3 above.

According to Table 3, for Cell#1, the predetermined quantity of bits occupied by the VRB-to-PRB mapping field is 0; for Cell#2, the predetermined quantity is 1; for Cell#3, the predetermined quantity is 0; and for Cell#4, the predetermined quantity is 1. Based on this, it can be determined that the quantity of bits occupied by the VRB-to-PRB mapping field is 1.

When the cells currently scheduled by MC-DCI include Cell#2 and Cell#3, since the quantity of bits occupied by the VRB-to-PRB mapping field is 1, which is greater than the predetermined quantity of bits (0) occupied by the VRB-to-PRB mapping field corresponding to Cell#3 and equal to the predetermined quantity of bits (1) occupied by the VRB-to-PRB mapping field corresponding to Cell#2, one of the subsequent optional operations includes determining that the indicated value (3) of the VRB-to-PRB mapping field is not applied to Cell#3 but can be applied to Cell#2.

In an embodiment, determining the quantity of bits occupied by the information field in the downlink control information used to schedule multiple cells includes:
determining the index of the combination of second information that can be indicated by the second-type second information field;
determining the second quantity of bits occupied by the second-type second information field based on the second maximum value of the index.

In an embodiment, the network device may determine the second maximum value of the index that can be indicated by the second-type second information field. The second maximum value of the index is determined based on the association between the value of the information field corresponding to each cell and the indicated information and is associated with the cell configured with the association. Then, the second quantity of bits occupied by the second-type second information field may be determined based on the second maximum value of the index that can be indicated by the second-type second information field. For example, it may be determined that the second quantity of bits occupied by the second-type second information field is equal to the quantity of bits occupied by the second maximum value of the index that can be indicated by the second-type second information field.

Taking the embodiment shown in Figure 2A as an example, the indices that can be indicated by the second-type second information field include 0, 1, 2, and 3. The second maximum value of the index is 3, which occupies 2 bits. Thus, it can be determined that the second quantity of bits occupied by the second-type second information field is 2, i.e., the second-type second information field occupies 2 bits.

In an embodiment, determining the quantity of bits occupied by the information field in the downlink control information used to schedule multiple cells includes:
determining the cell groups that can be scheduled by the downlink control information;
determining the first quantity sum of the predetermined quantities of bits occupied by the third information fields corresponding respectively to all cells in each cell group;
determining the third quantity sum of the bits occupied by the at least one third-type third information field based on the maximum value of the first quantity sums.

In an embodiment, the network device may determine the cell groups that can be scheduled by the MC-DCI. The cell groups that can be scheduled by the MC-DCI may be determined based on configuration signaling from the network device or predefined rules (e.g., protocol agreements). For example, the cell groups that can be scheduled by the MC-DCI may be as shown in Table 4 above.

As shown in Table 4, the cell groups that can be scheduled by the MC-DCI specifically include four types of cell groups. When the cell group identifier is 0, the corresponding cell group is {Cell#1}; when the cell group identifier is 1, the corresponding cell group is {Cell#2, Cell#3}; when the cell group identifier is 2, the corresponding cell group is {Cell#3, Cell#4}; and when the cell group identifier is 3, the corresponding cell group is {Cell#1, Cell#3, Cell#4}.

Further, the network device may determine the first quantity sum of the predetermined quantities of bits occupied by the third information fields corresponding respectively to all cells in each cell group and then determine the third quantity sum of the bits occupied by the at least one third-type third information field based on the maximum value of the first quantity sums. For example, it may be determined that the third quantity sum of the bits occupied by the at least one third-type third information field is equal to the maximum value of the first quantity sums.

Taking the Antenna ports field as an example of the third information field, the predetermined quantities of bits occupied by the Antenna ports field corresponding to the four cells (Cell#1, Cell#2, Cell#3, and Cell#4) are as shown in Table 1 above.

Combining Table 1 and Table 4, the first quantity sum of the predetermined quantities of bits occupied by the Antenna ports fields corresponding respectively to all cells in the cell group {Cell#1} is the predetermined quantity of bits (4) occupied by the Antenna ports field corresponding to Cell#1. The first quantity sum for the cell group {Cell#2, Cell#3} is the sum of the predetermined quantities of bits occupied by the Antenna ports fields corresponding to Cell#2 and Cell#3, i.e., 6 + 4 = 10. The first quantity sum for the cell group {Cell#3, Cell#4} is the sum of the predetermined quantities of bits occupied by the Antenna ports fields corresponding to Cell#3 and Cell#4, i.e., 4 + 5 = 9. The first quantity sum for the cell group {Cell#1, Cell#3, Cell#4} is the sum of the predetermined quantities of bits occupied by the Antenna ports fields corresponding to Cell#1, Cell#3, and Cell#4, i.e., 4 + 4 + 5 = 13.

It can be seen that the maximum value of the first quantity sums is 13. Thus, it can be determined that the third quantity sum of the bits occupied by the at least one Antenna ports field in the MC-DCI is 13.

In an embodiment, when indicating the type of the information field through the bits of the information field in the MC-DCI, the bits of the information field may be extended. The quantity of bits required for extension may be determined based on the number of types that the information field can belong to. For example, if the information field can belong to 2 types, 1 bit may be extended; if the information field can belong to 3 or 4 types, 2 bits may be extended.

For example, taking the Antenna ports field as an example, according to the embodiments described above, the Antenna ports field can belong to the first type or the third type. When it belongs to the first type, the Antenna ports field occupies 6 bits; when it belongs to the third type, it occupies 13 bits.

When indicating the type of the fourth information field through the fourth information field, it is necessary to determine the maximum quantity of bits occupied by the fourth information field when it belongs to multiple types and then extend the quantity of bits based on the maximum quantity of bits occupied to indicate the type of the fourth information field.

For example, the Antenna ports field can belong to the first type or the third type. When it belongs to the first type, it occupies 6 bits; when it belongs to the third type, it occupies 13 bits. Therefore, when indicating the type of the Antenna ports field through the Antenna ports field, regardless of which type the Antenna ports field belongs to, it is necessary to determine that the Antenna ports field occupies 13 bits and extend 1 bit, i.e., occupies 14 bits. For example, the extended bit may be the MSB (Most Significant Bit), which can be used to indicate the type of the Antenna ports field, and the other 13 bits are used to indicate antenna port information for the cells.

It should be noted that, in the above embodiments, the predetermined quantity of bits occupied by the Antenna ports field for each cell may not be constant, i.e., it may be determined based on configuration signaling from the network device or predefined rules (e.g., protocol agreements).

For some third information fields where the predetermined quantity of bits occupied is constant, when determining the first quantity sum of the predetermined quantities of bits occupied by the third information fields corresponding to the cells, it may be determined based on the maximum quantity of cells that can be scheduled by the MC-DCI. For example, the first quantity sum may be equal to the product of the constant predetermined quantity of bits and the maximum quantity of cells that can be scheduled by the MC-DCI.

Here, the maximum quantity of cells that can be scheduled by the MC-DCI may be determined based on the maximum quantity of cells included in the cell groups that can be scheduled by the MC-DCI or the quantity of cells included in the cell set corresponding to the MC-DCI. The following description mainly focuses on the case where the maximum quantity of cells that can be scheduled by the MC-DCI is determined based on the maximum quantity of cells included in the cell groups that can be scheduled by the MC-DCI.

For example, the HARQ process number field occupies a constant quantity of 4 bits. Based on Table 4, the maximum quantity of cells that can be scheduled by the MC-DCI is 3. The first quantity sum of the predetermined quantities of bits occupied by the HARQ process number fields corresponding respectively to all cells in each cell group is 3 × 4 = 12.

For example, the MCS field occupies a constant quantity of 5 bits. Based on Table 4, the maximum quantity of cells that can be scheduled by the MC-DCI is 3. The first quantity sum of the predetermined quantities of bits occupied by the MCS fields corresponding respectively to all cells in each cell group is 3 × 5 = 15.

In an embodiment, determining the quantity of bits occupied by the information field in the downlink control information used to schedule multiple cells includes:
determining the cell set corresponding to the downlink control information;
determining the third quantity sum of the bits occupied by the at least one third-type third information field based on the second quantity sum of the predetermined quantities of bits occupied by the third information fields corresponding respectively to all cells in the cell set, where the cells in the cell set have a one-to-one correspondence with the at least one third information field, and the correspondence is fixed.

In an embodiment, the cell set corresponding to MC-DCI may be a set composed of cells with the same configuration parameters (e.g., set identifier, resources, index, etc.), or may be any cell group schedulable by MC-DCI, or may be the union of cells in each cell group schedulable by MC-DCI, or may first determine the cells schedulable by MC-DCI and then determine the set composed of all cells schedulable by MC-DCI as the cell set corresponding to MC-DCI.

In an embodiment, the network device may determine the third quantity sum of the bits occupied by at least one third information field of the third type based on the predetermined quantity of bits occupied by the third information fields corresponding to each cell in the cell set and

For example, the cell set corresponding to MC-DCI is {Cell#1, Cell#2, Cell#3, Cell#4}. Taking the Antenna ports information field as an example of the third information field, the predetermined quantity of bits occupied by the Antenna ports information field corresponding to Cell#1, Cell#2, Cell#3, and Cell#4 is as shown in Table 1 above.

Then, the second quantity sum of the predetermined quantity of bits occupied by the Antenna ports information field corresponding to each cell in the cell set {Cell#1, Cell#2, Cell#3, Cell#4} is 4+6+4+5=19. Thus, the third quantity sum of the bits occupied by at least one third information field can be determined as 19, i.e., at least one third information field occupies 19 bits.

Since the cells in the cell set have a one-to-one correspondence with at least one third information field, and the correspondence is fixed, among the 19 bits occupied by at least one third information field, the 1st to 4th bits are used to indicate the Antenna ports information of Cell#1, the 5th to 10th bits are used to indicate the Antenna ports information of Cell#2, the 11th to 14th bits are used to indicate the Antenna ports information of Cell#3, and the 15th to 19th bits are used to indicate the Antenna ports information of Cell#4.

In an embodiment, determining the quantity of bits occupied by an information field in downlink control information for scheduling multiple cells includes:
determining the cell groups schedulable by the downlink control information;
determining the fourth quantity sum of the bits occupied by at least one information field corresponding respectively to all cells in each cell group;
determining the third quantity sum of the bits occupied by at least one information field according to the maximum value of the fourth quantity sums.

In an embodiment, the network device may determine the cell groups schedulable by MC-DCI, where the cell groups schedulable by MC-DCI may be determined according to configuration signaling sent to the terminal or predefined rules (e.g., protocol agreement). For example, the cell groups schedulable by MC-DCI may be as shown in Table 4 above, which will not be repeated here.

As shown in Table 4, the cell groups schedulable by MC-DCI specifically include four types of cell groups. Where the cell group identifier is 0, the corresponding cell group is {Cell#1}; when the cell group identifier is 1, the corresponding cell group is {Cell#2, Cell#3}; when the cell group identifier is 2, the corresponding cell group is {Cell#3, Cell#4}; and when the cell group identifier is 3, the corresponding cell group is {Cell#1, Cell#3, Cell#4}.

Further, the network device may determine the third quantity sum of the bits occupied by at least one information field corresponding respectively to all cells in each cell group and then determine the third quantity sum of the bits occupied by at least one information field according to the maximum value of the fourth quantity sums. For example, it may be determined that the third quantity sum of the bits occupied by at least one information field in MC-DCI is equal to the maximum value of the fourth quantity sums.

The at least one information field in MC-DCI may include the third-type information field mentioned above and may also include other types of information fields, which are not limited in this disclosure.

In an embodiment, the at least one information field includes all information fields in the downlink control information (MC-DCI). Determining the quantity of bits occupied by an information field in downlink control information for scheduling multiple cells includes:
determining the fourth quantity sum of the bits occupied by all information fields corresponding respectively to all cells in each cell group;
determining the third quantity sum of the bits occupied by all information fields according to the maximum value of the fourth quantity sums.

For example, all information fields refer to all information fields included in MC-DCI for scheduling all cells in a cell group.

In an embodiment, the network device may determine the fourth quantity sum of the bits occupied by all information fields corresponding respectively to all cells in each cell group and then determine the third quantity sum of the bits occupied by all information fields according to the maximum value of the fourth quantity sums. For example, it may be determined that the third quantity sum of the bits occupied by all information fields is equal to the maximum value of the fourth quantity sums.

In an embodiment, the at least one information field includes all third information fields in the downlink control information (MC-DCI). Determining the quantity of bits occupied by an information field in downlink control information for scheduling multiple cells includes:
determining the cell groups schedulable by the downlink control information;
determining the fourth quantity sum of the bits occupied by all third information fields corresponding respectively to all cells in each cell group;
determining the third quantity sum of the bits occupied by all third information fields of the third type according to the maximum value of the fourth quantity sums.

It should be noted that the third-type third information field includes at least one of the following: a third information field predefined as the third type; or a fourth-type third information field configured by the network device as the third-type third information field.

In an embodiment, the network device may determine the fourth quantity sum of the bits occupied by all third information fields corresponding respectively to all cells in each cell group and then determine the third quantity sum of the bits occupied by all third information fields of the third type according to the maximum value of the fourth quantity sums. For example, it may be determined that the third quantity sum of the bits occupied by all third information fields of the third type is equal to the maximum value of the fourth quantity sums.

For example, the cells schedulable by MC-DCI are Cell#1, Cell#2, Cell#3, and Cell#4. Taking the FDRA information field as an example, the predetermined quantity of bits occupied by the FDRA information field corresponding to these four cells is as shown in Table 5 above.

Taking all third information fields including the MCS information field and the FDRA information field as an example, where the predetermined quantity of bits occupied by the FDRA information field corresponding to Cell#1, Cell#2, Cell#3, and Cell#4 is as shown in Table 1 above. The quantity of bits occupied by the MCS information field is always 5.

The fourth quantity sum of the predetermined quantity of bits occupied by the MCS information field and the FDRA information field corresponding respectively to all cells in the cell group {Cell#1} is the sum of the predetermined quantity of bits occupied by the FDRA information field corresponding to Cell#1 and the quantity of bits occupied by the MCS information field, i.e., 4+5=9.

The fourth quantity sum of the predetermined quantity of bits occupied by the MCS information field and the FDRA information field corresponding respectively to all cells in the cell group {Cell#2, Cell#3} is the sum of the predetermined quantity of bits occupied by the FDRA information field corresponding to Cell#2 and Cell#3 and the quantity of bits occupied by the MCS information field, i.e., 6+4+5×2=20.

The fourth quantity sum of the predetermined quantity of bits occupied by the MCS information field and the FDRA information field corresponding respectively to all cells in the cell group {Cell#3, Cell#4} is the sum of the predetermined quantity of bits occupied by the FDRA information field corresponding to Cell#3 and Cell#4 and the quantity of bits occupied by the MCS information field, i.e., 4+5+5×2=19.

The fourth quantity sum of the predetermined quantity of bits occupied by the MCS information field and the FDRA information field corresponding respectively to all cells in the cell group {Cell#1, Cell#3, Cell#4} is the sum of the predetermined quantity of bits occupied by the FDRA information field corresponding to Cell#1, Cell#3, and Cell#4 and the quantity of bits occupied by the MCS information field, i.e., 4+4+5+5×3=28.

It can be seen that the maximum value of the fourth quantity sums is 28, so it can be determined that the fourth quantity sum of the bits occupied by all third information fields in MC-DCI is 28. Of course, the above is only an example where all third information fields in MC-DCI include the MCS information field and the FDRA information field. All third information fields in MC-DCI may also include other information fields.

As shown in Figure 7C, for at least one third information field in the same type of information field, at least one scheduled cell may be associated with the bits occupied by at least one third information field in ascending order of cell identifiers or in descending order of cell identifiers.

For example, taking the association in ascending order of cell identifiers as an example, the quantity of bits occupied by all third information fields in MC-DCI is 28. When the actual scheduled cell combination of MC-DCI is {Cell#3, Cell#4}, among the 28 bits, the 1st to 4th bits are the FDRA information field corresponding to Cell#3, the 5th to 9th bits are the FDRA information field corresponding to Cell#4, the 10th to 14th bits are the MCS information field corresponding to Cell#3, the 15th to 19th bits are the MCS information field corresponding to Cell#4, and the 20th to 28th bits are reserved bits.

It should be noted that MC-DCI is not limited to the above bits and may also include other bits as other information fields. The reserved bits may be located at the end of all third information fields or not at the end of all third information fields but at the end of MC-DCI. Based on the above embodiments, the 20th to 28th bits as reserved bits may be the last 9 bits of MC-DCI.

In an embodiment, in addition to the first type, second type, and third type mentioned above, the type of information field also includes a fourth type, e.g., called Type3. A Type3 information field can be predefined or configured as Type1A or Type2, or can be determined as Type1B or Type2, e.g., configured via RRC signaling.

The mapping relationship between each type of information field in MC-DCI sent by the network device and the bits in MC-DCI includes: mapping to the bits in MC-DCI in the order of Type1, Type3, and Type2 from front to back. For Type1 information fields, they may be sorted in the order of Type1-A and Type1-B, or for all information fields belonging to Type1 (i.e., belonging to Type1-A or Type1-B), their order may be the same as the order of information fields in existing DCI (e.g., DCI1_1 or DCI0_1).

For multiple information fields of the same Type, the order of different information fields may be sorted based on the current order of information fields in DCI. Correspondingly, for multiple third information fields belonging to the same type of information field, at least one scheduled cell may be associated with the bits occupied by at least one third information field in ascending order of cell identifiers or in descending order of cell identifiers.

Since the quantity of bits occupied by Type1 information fields is relatively fixed, the quantity of bits occupied by Type2 information fields is variable, and the type of Type3 information fields is predefined or configured as Type1, the quantity of bits occupied is relatively fixed. Only when predefined or configured as Type2, the quantity of bits occupied is variable. Therefore, the quantity of bits occupied by Type3 information fields can also be fixed. Generally, the terminal parses MC-DCI from front to back in terms of bits. Therefore, based on this mapping relationship, the terminal can first parse information fields with a relatively fixed quantity of bits and then parse information fields with a variable quantity of bits, which is beneficial to simplifying the parsing operation of the terminal.

In an embodiment, generating downlink control information according to the quantity of bits includes:
determining at least one scheduled cell scheduled by the downlink control information;
determining the bits occupied by at least one third information field corresponding to at least one scheduled cell according to the correspondence between the bits occupied by at least one third information field and the identifier of at least one scheduled cell.

In an embodiment, when MC-DCI schedules multiple cells, MC-DCI may indicate the information of multiple scheduled cells through multiple third information fields. Therefore, after determining at least one current cell scheduled by MC-DCI, it is also necessary to determine at least one current third information field corresponding to at least one current cell according to the correspondence between the bits occupied by at least one third information field and the identifier of at least one scheduled cell (the cell currently scheduled by MC-DCI).

The correspondence between the bits occupied by at least one third information field and the identifier of at least one scheduled cell may be associating at least one scheduled cell with the bits occupied by at least one third information field in ascending order of cell identifiers, or associating at least one scheduled cell with at least one third information field.

Alternatively, the correspondence between the bits occupied by at least one third information field and the identifier of at least one scheduled cell (the cell currently scheduled by MC-DCI) may be associating at least one scheduled cell with the bits occupied by at least one third information field in descending order of cell identifiers, or associating at least one scheduled cell with at least one third information field.

The third quantity sum of the bits occupied by at least one third information field of the third type is the actual quantity of bits occupied by the third information field in MC-DCI, which may be determined based on the embodiments shown above; at least one scheduled cell is the cell currently scheduled by MC-DCI; the predetermined quantity of bits occupied by the first information field corresponding to the scheduled cell is not the actual quantity of bits occupied by the first information field in MC-DCI but a predetermined quantity, e.g., determined by the network device and configured to the terminal through configuration signaling, or determined according to predefined rules, e.g., determined according to communication protocol 38.212[2].

In an embodiment, in the case of determining the cell groups schedulable by the downlink control information, determining the first quantity sum of the predetermined quantity of bits occupied by the third information field corresponding respectively to all cells in each cell group, and then determining the third quantity sum of the bits occupied by at least one third information field of the third type according to the maximum value of the first quantity sums, the correspondence between the bits occupied by at least one third information field and the identifier of at least one scheduled cell includes: associating at least one scheduled cell with the bits occupied by at least one third information field in ascending order of cell identifiers, or associating at least one scheduled cell with the bits occupied by at least one third information field in ascending order of cell identifiers.

Associating at least one scheduled cell with the bits occupied by at least one third information field in ascending order of cell identifiers includes:
determining the predetermined quantity of bits nc1 occupied by the third information field corresponding to the cell c1 with the smallest identifier among m scheduled cells, and determining that the 1st to nc1th bits in the third quantity sum of bits occupied by at least one third information field of the third type are used to indicate the third information of cell c1;
determining the predetermined quantity of bits nc2 occupied by the third information field corresponding to the cell c2 with the second smallest identifier among m scheduled cells, and determining that the (nc1+1)th to (nc1+nc2)th bits in the third quantity sum of bits occupied by at least one third information field of the third type are used to indicate the third information of cell c2;
   ...
determining the predetermined quantity of bits nci occupied by the third information field corresponding to the cell ci with the ith smallest identifier among m scheduled cells, and determining that the (nc1+nc2+...+nc(i-1)+1)th to (nc1+nc2+...+nc(i-1)+nci)th bits in the third quantity sum of bits occupied by at least one third information field of the third type are used to indicate the third information of cell ci;
   ...
determining the predetermined quantity of bits ncm occupied by the third information field corresponding to the cell cm with the largest identifier among m scheduled cells, and determining that the (nc1+nc2+...+nc(m-1)+1)th to (nc1+nc2+...+nc(m-1)+ncm)th bits in the third quantity sum of bits occupied by at least one third information field of the third type are used to indicate the third information of cell cm. Where m and n are integers greater than 0, and m≤n.

For example, the cells currently scheduled by MC-DCI include three scheduled cells, Cell#2 and Cell#3, and the quantity of bits occupied by at least one Antenna ports information field is 13.

First, the predetermined quantity of bits occupied by the Antenna ports information field corresponding to Cell#2 can be determined, e.g., 6. Then, among the 13 bits occupied by at least one Antenna ports information field, the 1st to 6th bits are used to indicate the Antenna ports information of Cell#2. Further, the predetermined quantity of bits occupied by the Antenna ports information field corresponding to Cell#3 can be determined, e.g., 4. Then, among the 13 bits occupied by at least one Antenna ports information field, the 7th to 10th bits are used to indicate the Antenna ports information of Cell#3. The 11th to 14th bits among the 13 bits may not be used to indicate information.

In an embodiment, in the case of determining the cell set corresponding to the downlink control information and then determining the third quantity sum of the bits occupied by at least one third information field of the third type according to the second quantity sum of the predetermined quantity of bits occupied by the third information field corresponding to each cell in the cell set, the bits occupied by the third information field corresponding to each cell in the third quantity sum may be fixed (e.g., predetermined as fixed). In this case, the correspondence between the bits occupied by at least one third information field and the identifier of at least one scheduled cell includes: associating at least one scheduled cell with at least one third information field in ascending order of cell identifiers, or associating at least one scheduled cell with at least one third information field in descending order of cell identifiers.

Taking associating at least one scheduled cell with at least one third information field in ascending order of cell identifiers as an example. For example, the cell set is {Cell#1, Cell#2, Cell#3, Cell#4}, the predetermined quantity of bits occupied by the Antenna ports information field corresponding to Cell#1 is 4, the predetermined quantity of bits occupied by the Antenna ports information field corresponding to Cell#2 is 6, the predetermined quantity of bits occupied by the Antenna ports information field corresponding to Cell#3 is 4, and the predetermined quantity of bits occupied by the Antenna ports information field corresponding to Cell#4 is 5. Then, the second quantity sum is 4+6+4+5=19, and the third quantity sum of the bits occupied by at least one third information field may be equal to the second quantity sum, i.e., at least one third information field occupies 19 bits.

Since the cells in the cell set have a one-to-one correspondence with at least one third information field, and the correspondence is fixed, among the 19 bits occupied by at least one third information field, the 1st to 4th bits are the Antenna ports information field for indicating Cell#1, the 5th to 10th bits are the Antenna ports information field for indicating Cell#2, the 11th to 14th bits are the Antenna ports information field for indicating Cell#3, and the 15th to 19th bits are the Antenna ports information field for indicating Cell#4.

Therefore, when scheduling multiple cells through MC-DCI subsequently, the bits occupied by the third information field corresponding to each scheduled cell in the third quantity sum can be determined according to the fixed bits occupied by the third information field corresponding to the cell in the third quantity sum.

For example, when scheduling Cell#2 and Cell#3 through MC-DCI, it can be determined that among the 19 bits occupied by at least one third information field, the 5th to 10th bits are the Antenna ports information field corresponding to Cell#2, and the 11th to 14th bits are the Antenna ports information field corresponding to Cell#3. As for the bits not corresponding to any scheduled cell among the 19 bits, e.g., the 1st to 4th bits and the 15th to 19th bits, they may not be used to indicate information.

In an embodiment, generating downlink control information according to the quantity of bits further includes:
determining the fifth quantity sum of the bits occupied by at least one third information field corresponding to at least one scheduled cell;
in response to the fifth quantity sum being less than the third quantity sum, determining the difference quantity according to the third quantity sum and the fifth quantity sum;
determining that the terminal does not process the difference quantity of bits in the third quantity sum of bits. Where not processing the difference quantity of bits includes: not decoding the difference quantity of bits; or decoding the difference quantity of bits but determining that the decoded result does not take effect, i.e., not using it to indicate the multiple scheduled cells.

In an embodiment, since the third quantity sum of the bits occupied by at least one third information field is determined according to the maximum value of the first quantity sums of the predetermined quantity of bits occupied by the third information field corresponding respectively to all cells in the cell groups schedulable by MC-DCI, or according to the second quantity sum of the predetermined quantity of bits occupied by the third information field corresponding to each cell in the cell set corresponding to MC-DCI, but the sum of the quantity of bits occupied by at least one current third information field corresponding to all scheduled cells currently scheduled by MC-DCI may be less than the third quantity sum.

In this case, for example, the sum of the quantity of bits occupied by at least one third information field corresponding to at least one scheduled cell is the fifth quantity sum. The difference quantity can be determined according to the third quantity sum and the fifth quantity sum, and then it can be determined that the terminal does not process the difference quantity of bits in the third quantity sum of bits, so as to save overhead and ensure while keeping the DCI size unchanged.

Taking the MCS information field as an example, for example, the third quantity sum of the bits occupied by at least one third information field is determined according to the maximum value of the first quantity sums of the predetermined quantity of bits occupied by the third information field corresponding respectively to all cells in the cell groups schedulable by MC-DCI. If the maximum quantity of cells in the cell groups schedulable by MC-DCI is 3, and the quantity of bits occupied by the MCS information field is always 5, then the third quantity sum is 3×5=15, i.e., three MCS information fields in MC-DCI occupy 15 bits.

When the cells currently scheduled by MC-DCI include Cell#1 and Cell#3, for example, associating at least one scheduled cell with these 15 bits in ascending order of cell identifiers, then as shown in Figure 10, the 1st to 5th bits are used to indicate Cell#1, the 6th to 10th bits are used to indicate Cell#3, and the 11th to 15th bits are reserved bits because there are no currently scheduled cells corresponding to them, so the 11th to 15th bits are not used to indicate information.

Taking the HARQ process number (HPN) information field as an example, for example, the third quantity sum of the bits occupied by at least one third information field is determined according to the second quantity sum of the predetermined quantity of bits occupied by the third information field corresponding to each cell in the cell set corresponding to MC-DCI. If the cell set schedulable by MC-DCI includes four cells, Cell#1, Cell#2, Cell#3, and Cell#4, and the quantity of bits occupied by the HPN information field is always 4, then the third quantity sum is 4×4=16, i.e., four HPN information fields in MC-DCI occupy 16 bits, where the bits occupied by the HPN information field corresponding to each cell in the 16 bits may be fixed, e.g., Cell#1 corresponds to the 1st to 4th bits, Cell#2 corresponds to the 5th to 8th bits, Cell#3 corresponds to the 9th to 12th bits, and Cell#4 corresponds to the 13th to 16th bits.

When the cells currently scheduled by MC-DCI include Cell#3 and Cell#4, for example, associating at least one scheduled cell with at least one MCS information field in ascending order of cell identifiers, then as shown in Figure 11, the 9th to 12th bits are used to indicate Cell#3, and the 13th to 16th bits are used to indicate Cell#4. The 1st to 8th bits are reserved bits because there are no currently scheduled cells corresponding to them, so they are not used to indicate information.

Taking the FDRA information field as an example, for example, the third quantity sum of the bits occupied by at least one third information field is determined according to the maximum value of the first quantity sums of the predetermined quantity of bits occupied by the third information field corresponding respectively to all cells in the cell groups schedulable by MC-DCI. If the cells schedulable by MC-DCI are Cell#1, Cell#2, Cell#3, and Cell#4, and the maximum quantity of bits occupied by the FDRA information field corresponding to these four cells is 15, 10, 15, and 10, respectively. Based on the cell groups in Table 3, the third quantity sum of the bits occupied by at least one FDAR field is the sum of the maximum quantity of bits occupied by the FDAR field corresponding to Cell#1, Cell#3, and Cell#4, i.e., 15+15+10=40 bits.

When the currently scheduled cells in MC-DCI include Cell#2 and Cell#3, for example, based on the order of cell identifiers from smallest to largest, at least one scheduled cell is mapped to these 40 bits. As shown in Figure 12, the first to tenth bits are used to indicate Cell#2, the eleventh to twenty-fifth bits are used to indicate Cell#3, and the last 15 bits of the 40 bits are not used for indication. These last 15 bits can serve as reserved bits and need not be used to indicate information.

Taking the Antenna ports information field as an example, the third quantity sum of bits occupied by at least one third information field is determined based on the maximum value of the first quantity sum of predetermined quantities of bits occupied by the third information field corresponding respectively to all cells in the cell group schedulable by MC-DCI. If the cells schedulable by MC-DCI are Cell#1, Cell#2, Cell#3, and Cell#4 (totaling 4 cells), the maximum quantities of bits occupied by the Antenna ports information field corresponding to these 4 cells are shown in Table 1. Based on the cell group in Table 3, the third quantity sum of bits occupied by at least one Antenna ports field is the sum of the maximum quantities of bits occupied by the FDAR field corresponding to Cell#1, Cell#3, and Cell#4, i.e., 4 + 4 + 5 = 13 bits.

When the currently scheduled cells in MC-DCI include Cell#2 and Cell#3, for example, based on the order of cell identifiers from smallest to largest, at least one scheduled cell is mapped to these 13 bits. As shown in Figure 13, the first to sixth bits are used to indicate Cell#2, the seventh to tenth bits are used to indicate Cell#3, and the last 3 bits of the 13 bits are not used for indication. These last 3 bits can serve as reserved bits and need not be used to indicate information.

In an embodiment, determining the quantity of bits occupied by an information field in downlink control information used to schedule multiple cells includes:
determining a cell group schedulable by the downlink control information;
determining the maximum value of the predetermined quantity of bits occupied by the third information field corresponding respectively to all cells in the cell group, as well as the quantity of cells included in the cell group;
determining the third quantity sum of bits occupied by at least one third information field of the third type based on the maximum value of the predetermined quantity of bits occupied by the third information field corresponding respectively to all cells in the cell group and the maximum quantity of cells included in the cell group.

In an embodiment, the network device can determine the cell group schedulable by MC-DCI. The cell group schedulable by MC-DCI can be determined based on configuration signaling from the network device or predefined rules (e.g., protocol agreements). For example, the cell group schedulable by MC-DCI can be as shown in Table 4 above.

As shown in Table 4, the cell group schedulable by MC-DCI specifically includes 4 types of cell groups. When the cell group identifier is 0, the corresponding cell group is {Cell#1}. When the cell group identifier is 1, the corresponding cell group is {Cell#2, Cell#3}. When the cell group identifier is 2, the corresponding cell group is {Cell#3, Cell#4}. When the cell group identifier is 3, the corresponding cell group is {Cell#1, Cell#3, Cell#4}.

Further, the network device can determine the maximum value of the predetermined quantity of bits occupied by the third information field corresponding respectively to all cells in the cell group, as well as the quantity of cells included in the cell group. It can then determine the third quantity sum of bits occupied by at least one third information field of the third type based on the maximum value of the predetermined quantity of bits occupied by the third information field corresponding respectively to all cells in the cell group and the maximum quantity of cells included in the cell group. For example, it can determine that the third quantity sum of bits occupied by at least one third information field of the third type equals the product of the maximum value of the predetermined quantity of bits occupied by the third information field corresponding respectively to all cells in the cell group and the maximum quantity of cells included in the cell group.

Taking the Antenna ports information field as an example of the third information field, the predetermined quantities of bits occupied by the Antenna ports information field corresponding respectively to Cell#1, Cell#2, Cell#3, and Cell#4 are as shown in Table 1 above.

Combining Table 1 and Table 4, the maximum value of the predetermined quantity of bits occupied by the third information field corresponding to each cell is 6, and the maximum quantity of cells included in the cell group is 3. Thus, it can be determined that the third quantity sum of bits occupied by at least one Antenna ports information field in MC-DCI is 3 × 6 = 18.

Taking the Antenna ports information field as an example, the third quantity sum of bits occupied by at least one third information field is determined based on the maximum value of the first quantity sum of predetermined quantities of bits occupied by the third information field corresponding respectively to all cells in the cell group schedulable by MC-DCI. If the cells schedulable by MC-DCI are Cell#1, Cell#2, Cell#3, and Cell#4 (totaling 4 cells), the predetermined quantities of bits occupied by the Antenna ports information field corresponding respectively to these 4 cells are shown in Table 1. Based on the cell group in Table 3, the third quantity sum of bits occupied by at least one Antenna ports information field in MC-DCI is 3 × 6 = 18.

When the currently scheduled cells in MC-DCI include Cell#2 and Cell#3, for example, based on the order of cell identifiers from smallest to largest, at least one scheduled cell is mapped to these 18 bits, with each Antenna ports information field occupying 6 bits. As shown in Figure 15, the first Antenna ports information field is used to indicate Cell#2, the second Antenna ports information field is used to indicate Cell#3, and the last 6 bits of the 18 bits are not used for indication. These last 6 bits can serve as reserved bits and need not be used to indicate information.

Taking the MCS information field as an example, the third quantity sum of bits occupied by at least one third information field is determined based on the maximum value of the first quantity sum of predetermined quantities of bits occupied by the third information field corresponding respectively to all cells in the cell group schedulable by MC-DCI. If the maximum quantity of cells in the cell group schedulable by MC-DCI is 3, and the quantity of bits occupied by the MCS information field is always 5, then the third quantity sum is 3 × 5 = 15, i.e., the three MCS information fields in MC-DCI occupy 15 bits.

When the currently scheduled cells in MC-DCI include Cell#1 and Cell#3, for example, based on the order of cell identifiers from smallest to largest, at least one scheduled cell is mapped to at least one MCS information field, with each MCS information field occupying 5 bits. As shown in Figure 16, the first MCS information field is used to indicate Cell#1, the second MCS information field is used to indicate Cell#3, and the third MCS information field has no corresponding currently scheduled cell. Thus, the 5 bits occupied by the third MCS information field serve as reserved bits and need not be used to indicate information.

In an embodiment, the method further includes:
indicating the quantity of bits occupied by the downlink control information to the terminal through signaling from the scheduling cell and/or reference cell; and/or
determining the quantity of bits occupied by the downlink control information based on the quantity of bits occupied by each information field in the downlink control information.

In an embodiment, signaling indicating the quantity of bits occupied by MC-DCI can be sent to the terminal on the scheduling cell. In another embodiment, signaling indicating the quantity of bits occupied by MC-DCI can be sent to the terminal on the reference cell. The signaling from the scheduling cell or reference cell includes but is not limited to RRC signaling and MAC CE.

In an embodiment, the quantity of bits occupied by MC-DCI can be determined based on the quantity of bits occupied by each information field in MC-DCI. For example, the sum of the quantities of bits occupied by each information field in MC-DCI can be taken as the quantity of bits occupied by MC-DCI.

In an embodiment, the reference cell includes at least one of the following:
a cell used to calculate the size of the downlink control information;
a cell used to calculate the blind detection resources of the downlink control information;
a cell configured with a search space corresponding to the downlink control information.

In an embodiment, the reference cell can be the cell used to calculate the size of MC-DCI. The network device selects to send signaling on the reference cell and indicates the quantity of bits occupied by MC-DCI through the sent signaling. This allows the terminal to centrally receive signaling and calculate the size of MC-DCI on the same reference cell without considering other cells, simplifying operational logic.

In an embodiment, the reference cell can be the cell used to calculate the blind detection resources of MC-DCI. The network device selects to send signaling on the reference cell and indicates the quantity of bits occupied by MC-DCI through the sent signaling. This allows the terminal to centrally receive signaling and calculate the blind detection resources of MC-DCI on the same reference cell without considering other cells, simplifying operational logic.

In an embodiment, the reference cell can be the cell configured with the search space corresponding to MC-DCI. The network device selects to send signaling on the reference cell and indicates the quantity of bits occupied by MC-DCI through the sent signaling. This allows the terminal to centrally receive signaling and determine the search space corresponding to MC-DCI on the same reference cell without considering other cells, simplifying operational logic.

Corresponding to the embodiments of the aforementioned method for decoding downlink control information and method for generating downlink control information, the present disclosure also provides embodiments of an apparatus for decoding downlink control information and an apparatus for decoding downlink control information.

Figure 18 is a schematic block diagram of an apparatus for decoding downlink control information according to an embodiment of the present disclosure. The apparatus for decoding downlink control information shown in this embodiment can be a terminal or an apparatus composed of modules in a terminal. The terminal includes but is not limited to communication devices such as mobile phones, tablet computers, wearable devices, sensors, and IoT devices. The terminal can communicate with network devices, which include but are not limited to network devices in 4G, 5G, 6G, and other communication systems, such as base stations and core networks.
as shown in Figure 18, the apparatus for decoding downlink control information includes:
a processing module 1801, configured to determine the quantity of bits occupied by an information field in downlink control information used to schedule multiple cells and decode the downlink control information according to the quantity of the bits.

In an embodiment, the processing module is further configured to determine the type of the information field.

In an embodiment, the type includes at least one of the following:
a first type, where the downlink control information includes one first information field, and the first information field of the first type is used to indicate first information of all cells scheduled by the downlink control information;
a second type, where the downlink control information includes one second information field, and the second information field of the second type is used to indicate an index of a combination of second information of at least one scheduled cell;
a third type, where the downlink control information includes at least one third information field, and each third information field of the at least one third information field indicates third information of a single scheduled cell.
a fourth type, where the information field of the fourth type can be determined as an information field of the first type, second type, or third type through predefined or configured methods.

In an embodiment, the processing module is configured to determine the first maximum value among the predetermined quantities of bits occupied by the first information fields corresponding respectively to all cells schedulable by the downlink control information and determine the first quantity of bits occupied by the first information field of the first type according to the first maximum value.

In an embodiment, the processing module is configured to determine the minimum value among the predetermined quantities of bits occupied by the first information fields corresponding respectively to all cells schedulable by the downlink control information and determine the first quantity of bits occupied by the first information field of the first type according to the minimum value.

In an embodiment, the processing module is configured to determine the minimum value among the greater-than-0 predetermined quantities of bits occupied by the first information fields corresponding respectively to all cells schedulable by the downlink control information.

In an embodiment, the processing module is configured to, in response to the first quantity of bits occupied by the first information field of the first type being less than the predetermined quantity of bits occupied by the first information field corresponding to the scheduled cell, decode the first information field according to the first quantity to determine the information indicated by the first information field for the scheduled cell; or, in response to the first quantity of bits occupied by the first information field of the first type being less than the predetermined quantity of bits occupied by the first information field corresponding to the scheduled cell, pad zeros to the first information field according to the difference between the predetermined quantity and the first quantity and decode the zero-padded first information field to determine the information indicated by the first information field for the scheduled cell.

In an embodiment, decoding the downlink control information according to the quantity of the bits includes at least one of the following:
in response to the first quantity of bits occupied by the first information field of the first type being greater than the predetermined quantity of bits occupied by the first information field corresponding to the scheduled cell, determining that the indicated value of the first information field is not applied to the scheduled cell;
in response to the first quantity of bits occupied by the first information field of the first type being greater than the predetermined quantity of bits occupied by the first information field corresponding to the scheduled cell, adjusting the indicated value of the first information field to a first value, where the first value is determined based on configuration signaling or predefined rules, and the first value is less than or equal to the maximum indicated value corresponding to the predetermined quantity of bits;
in response to the first quantity of bits occupied by the first information field of the first type being greater than the predetermined quantity of bits occupied by the first information field corresponding to the scheduled cell, not processing the downlink control information;
in response to the first quantity of bits occupied by the first information field of the first type being greater than the predetermined quantity of bits occupied by the first information field corresponding to the scheduled cell, not processing the first information field;
in response to the first quantity of bits occupied by the first information field of the first type being greater than the predetermined quantity of bits occupied by the first information field corresponding to the scheduled cell, determining the indicated value of the first information field for the scheduled cell according to the predetermined quantity of bits occupied by the first information field corresponding to the scheduled cell.

In an embodiment, the processing module is configured to determine the index of the combination of second information indicatable by the second information field of the second type and determine the second quantity of bits occupied by the second information field of the second type according to the second maximum value of the index.

In an embodiment, the processing module is configured to determine the cell group schedulable by the downlink control information, determine the first quantity sum of the predetermined quantities of bits occupied by the third information field corresponding respectively to all cells in each cell group, and determine the third quantity sum of bits occupied by at least one third information field of the third type according to the maximum value among the first quantity sums.

In an embodiment, the processing module is configured to determine the cell set corresponding to the downlink control information and determine the third quantity sum of bits occupied by at least one third information field of the third type according to the second quantity sum of the predetermined quantities of bits occupied by the third information field corresponding to each cell in the cell set, where the cells in the cell set are in a one-to-one correspondence with the at least one third information field, and the correspondence is fixed.

In an embodiment, the processing module is configured to determine the cell group schedulable by the downlink control information, determine the fourth quantity sum of bits occupied by at least one information field corresponding respectively to all cells in each cell group, and determine the third quantity sum of bits occupied by the at least one information field according to the maximum value among the fourth quantity sums.

In an embodiment, the at least one information field includes all information fields in the downlink control information. Determining the quantity of bits occupied by the information field in the downlink control information used to schedule multiple cells includes determining the fourth quantity sum of bits occupied by all information fields corresponding respectively to all cells in each cell group and determining the third quantity sum of bits occupied by all information fields according to the maximum value among the fourth quantity sums.

In an embodiment, the at least one information field includes all third information fields in the downlink control information. The processing module is configured to determine the cell group schedulable by the downlink control information, determine the fourth quantity sum of bits occupied by all third information fields corresponding respectively to all cells in each cell group, and determine the third quantity sum of bits occupied by all third information fields of the third type according to the maximum value among the fourth quantity sums.

In an embodiment, the processing module is configured to determine at least one scheduled cell scheduled by the downlink control information and determine the bits occupied by the at least one third information field corresponding to the at least one scheduled cell according to the correspondence between the bits occupied by the at least one third information field and the identifier of the at least one scheduled cell.

In an embodiment, the processing module is further configured to determine the fifth quantity sum of bits occupied by the at least one third information field corresponding to the at least one scheduled cell and, in response to the fifth quantity sum being less than the third quantity sum, determine the difference quantity according to the third quantity sum and the fifth quantity sum and not process the difference quantity of bits in the third quantity sum of bits.

In an embodiment, the method for determining the type of the information field includes at least one of the following:
determining the type of the information field according to signaling from the scheduling cell;
determining the type of the information field according to signaling from the reference cell;
determining the type of the information field according to the downlink control information.

In an embodiment, the processing module of the apparatus is further configured to determine the quantity of bits occupied by the downlink control information by one of the following methods:
determining the quantity of bits occupied by the downlink control information according to signaling from the scheduling cell;
determining the quantity of bits occupied by the downlink control information according to signaling from the reference cell;
determining the quantity of bits occupied by the downlink control information according to the quantity of bits occupied by each information field in the downlink control information.

In an embodiment, the reference cell includes at least one of the following:
a cell used to calculate the size of the downlink control information;
a cell used to calculate the blind detection resources of the downlink control information;
a cell configured with a search space corresponding to the downlink control information.

Figure 19 is a schematic block diagram of an apparatus for decoding downlink control information according to an embodiment of the present disclosure. The apparatus for decoding downlink control information shown in this embodiment can be a network device or an apparatus composed of modules in a network device. The network device can communicate with terminals, which include but are not limited to communication devices such as mobile phones, tablet computers, wearable devices, sensors, and IoT devices. The network device includes but is not limited to network devices in 4G, 5G, 6G, and other communication systems, such as base stations and core networks.

As shown in Figure 19, the apparatus for decoding downlink control information includes:
a processing module 1901, configured to determine the quantity of bits occupied by an information field in downlink control information used to schedule multiple cells and generate the downlink control information according to the quantity of the bits;
a sending module 1902, configured to send the downlink control information to the terminal.

In an embodiment, the processing module is further configured to determine the type of the information field.

In an embodiment, the type includes at least one of the following:
a first type, where the downlink control information includes one first information field, and the first information field of the first type is used to indicate first information of all cells scheduled by the downlink control information;
a second type, where the downlink control information includes one second information field, and the second information field of the second type is used to indicate an index of a combination of second information of at least one scheduled cell;
a third type, where the downlink control information includes at least one third information field, and each third information field of the at least one third information field indicates third information of a single scheduled cell.

In an embodiment, the processing module is configured to determine the first maximum value among the predetermined quantities of bits occupied by the first information fields corresponding respectively to all cells schedulable by the downlink control information and determine the first quantity of bits occupied by the first information field of the first type according to the first maximum value.

In an embodiment, the processing module is configured to determine the minimum value among the predetermined quantities of bits occupied by the first information fields corresponding respectively to all cells schedulable by the downlink control information and determine the first quantity of bits occupied by the first information field of the first type according to the minimum value.

In an embodiment, the processing module is configured to determine the minimum value among the greater-than-0 predetermined quantities of bits occupied by the first information fields corresponding respectively to all cells schedulable by the downlink control information.

In an embodiment, the processing module is configured to, in response to the first quantity of bits occupied by the first information field of the first type being less than the predetermined quantity of bits occupied by the first information field corresponding to the scheduled cell, generate the first information field occupying the first quantity of bits, where the first information field is used to indicate information of the scheduled cell; or, in response to the first quantity of bits occupied by the first information field of the first type being less than the predetermined quantity of bits occupied by the first information field corresponding to the scheduled cell, pad zeros to the first information field according to the difference between the predetermined quantity and the first quantity, where the zero-padded first information field is used to indicate information of the scheduled cell.

In an embodiment, generating the downlink control information according to the quantity of the bits includes at least one of the following:
in response to the first quantity of bits occupied by the first information field of the first type being greater than the predetermined quantity of bits occupied by the first information field corresponding to the scheduled cell, determining that the indicated value of the first information field is not applied to the scheduled cell;
in response to the first quantity of bits occupied by the first information field of the first type being greater than the predetermined quantity of bits occupied by the first information field corresponding to the scheduled cell, determining that the first value obtained by adjusting the indicated value of the first information field is used to indicate information of the scheduled cell, where the first value is determined based on configuration signaling or predefined rules, and the first value is less than or equal to the maximum indicated value corresponding to the predetermined quantity of bits;
in response to the first quantity of bits occupied by the first information field of the first type being greater than the predetermined quantity of bits occupied by the first information field corresponding to the scheduled cell, determining that the terminal does not process the downlink control information;
in response to the first quantity of bits occupied by the first information field of the first type being greater than the predetermined quantity of bits occupied by the first information field corresponding to the scheduled cell, determining that the terminal does not process the first information field;
in response to the first quantity of bits occupied by the first information field of the first type being greater than the predetermined quantity of bits occupied by the first information field corresponding to the scheduled cell, determining that the predetermined quantity of bits occupied by the first information field corresponding to the scheduled cell is used to indicate information of the scheduled cell.

In an embodiment, the processing module is configured to determine the index of the combination of second information indicatable by the second information field of the second type and determine the second quantity of bits occupied by the second information field of the second type according to the second maximum value of the index.

In an embodiment, the processing module is configured to determine the cell group schedulable by the downlink control information, determine the first quantity sum of the predetermined quantities of bits occupied by the third information field corresponding respectively to all cells in each cell group, and determine the third quantity sum of bits occupied by at least one third information field of the third type according to the maximum value among the first quantity sums.

In an embodiment, the processing module is configured to determine the cell set corresponding to the downlink control information and determine the third quantity sum of bits occupied by at least one third information field of the third type according to the second quantity sum of the predetermined quantities of bits occupied by the third information field corresponding to each cell in the cell set, where the cells in the cell set are in a one-to-one correspondence with the at least one third information field, and the correspondence is fixed.

In an embodiment, the processing module is configured to determine the cell group schedulable by the downlink control information, determine the fourth quantity sum of bits occupied by at least one information field corresponding respectively to all cells in each cell group, and determine the third quantity sum of bits occupied by the at least one information field according to the maximum value among the fourth quantity sums.

In an embodiment, the at least one information field includes all information fields in the downlink control information. Determining the quantity of bits occupied by the information field in the downlink control information used to schedule multiple cells includes: determining the fourth quantity sum of bits occupied by all information fields corresponding respectively to all cells in each cell group and determining the third quantity sum of bits occupied by all information fields according to the maximum value among the fourth quantity sums.

In an embodiment, the at least one information field includes all third information fields in the downlink control information. The processing module is configured to determine the cell group schedulable by the downlink control information, determine the fourth quantity sum of bits occupied by all third information fields corresponding respectively to all cells in each cell group, and determine the third quantity sum of bits occupied by all third information fields of the third type according to the maximum value among the fourth quantity sums.

In an embodiment, the processing module is configured to determine at least one scheduled cell scheduled by downlink control information, where the processing module is further configured to determine bits occupied by at least one third information field corresponding to the at least one scheduled cell according to a correspondence between bits occupied by the at least one third information field and an identifier of the at least one scheduled cell.

In an embodiment, the processing module is further configured to determine a fifth quantity sum of bits occupied by the at least one third information field corresponding to the at least one scheduled cell, where in response to the fifth quantity sum being less than a third quantity sum, the processing module is configured to determine a difference quantity according to the third quantity sum and the fifth quantity sum, and determine that a terminal does not process the difference quantity of bits in the third quantity sum of bits.

In an embodiment, the sending module is further configured to indicate a type of the information field to the terminal, where the method for indicating the type of the information field to the terminal includes at least one of the following:
indicating the type of the information field to the terminal through signaling of a scheduling cell;
indicating the type of the information field to the terminal through signaling of a reference cell;
indicating the type of the information field to the terminal through the downlink control information.

In an embodiment, the sending module is further configured to indicate a quantity of bits occupied by the downlink control information to the terminal through signaling of a scheduling cell and/or a reference cell, and/or the processing module is further configured to determine the quantity of bits occupied by the downlink control information according to a quantity of bits occupied by each information field in the downlink control information.

In an embodiment, the reference cell includes at least one of the following:
a cell used to calculate a size of the downlink control information;
a cell used to calculate a blind detection resource of the downlink control information;
a cell configured with a search space corresponding to the downlink control information.

Regarding the apparatus in the above embodiments, specific operations performed by each module have been described in detail in the related method embodiments, and thus detailed descriptions are omitted here.

For apparatus embodiments, since they substantially correspond to the method embodiments, reference may be made to the description of the method embodiments. The described apparatus embodiments are merely illustrative, where modules described as separate components may or may not be physically separated, and components displayed as modules may or may not be physical modules, i.e., they may be located in one place or distributed across multiple network modules. Some or all of the modules may be selected according to actual needs to achieve the objectives of the embodiments. Those skilled in the art may understand and implement the embodiments without creative effort.

Embodiments of the present disclosure further provide a system for processing downlink control information, including a terminal and a network device, where the terminal is configured to implement the method for decoding downlink control information according to any of the foregoing embodiments, and the network device is configured to implement the downlink control information generating method according to any of the foregoing embodiments.

Embodiments of the present disclosure further provide a communication apparatus, including: a processor, a memory for storing a computer program, where when the computer program is executed by the processor, the method for decoding downlink control information according to any of the foregoing embodiments is implemented.

Embodiments of the present disclosure further provide a communication apparatus, including: a processor, a memory for storing a computer program, where when the computer program is executed by the processor, the downlink control information generating method according to any of the foregoing embodiments is implemented.

Embodiments of the present disclosure further provide a computer-readable storage medium for storing a computer program, where when the computer program is executed by a processor, the method for decoding downlink control information according to any of the foregoing embodiments is implemented.

Embodiments of the present disclosure further provide a computer-readable storage medium for storing a computer program, where when the computer program is executed by a processor, the downlink control information generating method according to any of the foregoing embodiments is implemented.

As shown in FIG. 20, FIG. 20 is a schematic block diagram of an apparatus 2000 for downlink control information generation according to an embodiment of the present disclosure. The apparatus 2000 may be provided as a base station. Referring to FIG. 20, the apparatus 2000 includes a processing component 2022, a wireless transmission/reception component 2024, an antenna component 2026, and a signal processing part specific to the wireless interface, where the processing component 2022 may further include one or more processors. One of the processors in the processing component 2022 may be configured to implement the downlink control information generating method according to any of the foregoing embodiments.

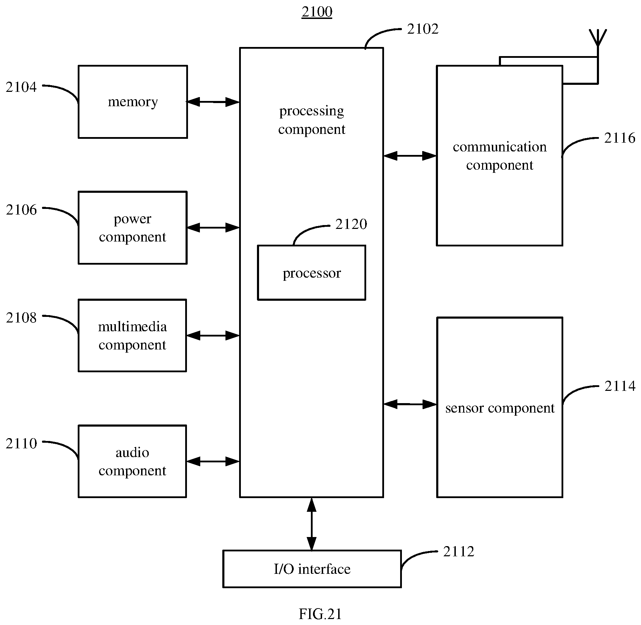

FIG. 21 is a schematic block diagram of an apparatus 2100 for downlink control information decoding according to an embodiment of the present disclosure. For example, the apparatus 2100 may be a mobile phone, computer, digital broadcast terminal, messaging device, game console, tablet device, medical device, fitness device, personal digital assistant, etc.

Referring to FIG. 21, the apparatus 2100 may include one or more of the following components: a processing component 2102, a memory 2104, a power component 2106, a multimedia component 2108, an audio component 2110, an input/output (I/O) interface 2112, a sensor component 2114, and a communication component 2116.

The processing component 2102 generally controls overall operations of the apparatus 2100, such as operations associated with display, phone calls, data communication, camera operations, and recording operations. The processing component 2102 may include one or more processors 2120 to execute instructions to perform all or part of the steps of the method for decoding downlink control information. Additionally, the processing component 2102 may include one or more modules to facilitate interaction between the processing component 2102 and other components. For example, the processing component 2102 may include a multimedia module to facilitate interaction between the multimedia component 2108 and the processing component 2102.

The memory 2104 is configured to store various types of data to support operations of the apparatus 2100. Examples of such data include instructions for any application or method operating on the apparatus 2100, contact data, phonebook data, messages, pictures, videos, etc. The memory 2104 may be implemented by any type of volatile or non-volatile storage device or a combination thereof, such as static random-access memory (SRAM), electrically erasable programmable read-only memory (EEPROM), erasable programmable read-only memory (EPROM), programmable read-only memory (PROM), read-only memory (ROM), magnetic memory, flash memory, magnetic disk, or optical disk.

The power component 2106 provides power to various components of the apparatus 2100. The power component 2106 may include a power management system, one or more power sources, and other components associated with generating, managing, and distributing power for the apparatus 2100.

The multimedia component 2108 includes a screen that provides an output interface between the apparatus 2100 and a user. In some embodiments, the screen may include a liquid crystal display (LCD) and a touch panel (TP). If the screen includes a touch panel, the screen may be implemented as a touchscreen to receive input signals from the user. The touch panel includes one or more touch sensors to sense touch, sliding, and gestures on the touch panel. The touch sensors may sense not only the boundaries of touch or sliding actions but also the duration and pressure associated with the touch or sliding operation. In some embodiments, the multimedia component 2108 includes a front-facing camera and/or a rear-facing camera. When the apparatus 2100 is in an operation mode, such as a shooting mode or a video mode, the front-facing camera and/or rear-facing camera may receive external multimedia data. Each front-facing camera and rear-facing camera may be a fixed optical lens system or have focal length and optical zoom capabilities.

The audio component 2110 is configured to output and/or input audio signals. For example, the audio component 2110 includes a microphone (MIC), where when the apparatus 2100 is in an operation mode, such as a call mode, recording mode, or voice recognition mode, the microphone is configured to receive external audio signals. The received audio signals may be further stored in the memory 2104 or transmitted via the communication component 2116. In some embodiments, the audio component 2110 further includes a speaker for outputting audio signals.

The I/O interface 2112 provides an interface between the processing component 2102 and peripheral interface modules, where the peripheral interface modules may include a keyboard, click wheel, buttons, etc. These buttons may include, but are not limited to, a home button, volume button, start button, and lock button.

The sensor component 2114 includes one or more sensors for providing status assessments of various aspects of the apparatus 2100. For example, the sensor component 2114 may detect an open/closed state of the apparatus 2100, relative positioning of components, such as a display and keypad of the apparatus 2100, and may also detect a change in position of the apparatus 2100 or a component of the apparatus 2100, presence or absence of user contact with the apparatus 2100, orientation or acceleration/deceleration of the apparatus 2100, and temperature variation of the apparatus 2100. The sensor component 2114 may include a proximity sensor configured to detect the presence of nearby objects without any physical contact. The sensor component 2114 may also include a light sensor, such as a CMOS or CCD image sensor, for use in imaging applications. In some embodiments, the sensor component 2114 may further include an acceleration sensor, gyroscope sensor, magnetic sensor, pressure sensor, or temperature sensor.

The communication component 2116 is configured to facilitate wired or wireless communication between the apparatus 2100 and other devices. The apparatus 2100 may access a wireless network based on communication standards, such as WiFi, 2G, 3G, 4G LTE, 5G NR, or a combination thereof. In an exemplary embodiment, the communication component 2116 receives broadcast signals or broadcast-related information from an external broadcast management system via a broadcast channel. In an exemplary embodiment, the communication component 2116 further includes a near-field communication (NFC) module to facilitate short-range communication. For example, the NFC module may be implemented based on radio frequency identification (RFID) technology, Infrared Data Association (IrDA) technology, ultra-wideband (UWB) technology, Bluetooth (BT) technology, or other technologies.

In an exemplary embodiment, the apparatus 2100 may be implemented by one or more application-specific integrated circuits (ASICs), digital signal processors (DSPs), digital signal processing devices (DSPDs), programmable logic devices (PLDs), field-programmable gate arrays (FPGAs), controllers, microcontrollers, microprocessors, or other electronic components for performing the method for decoding downlink control information described above.

In an exemplary embodiment, a non-transitory computer-readable storage medium is further provided, including instructions, such as instructions stored in the memory 2104, where the instructions may be executed by the processor 2120 of the apparatus 2100 to complete the method for decoding downlink control information. For example, the non-transitory computer-readable storage medium may be ROM, random-access memory (RAM), CD-ROM, magnetic tape, floppy disk, optical data storage device, etc.

Those skilled in the art will readily conceive of other embodiments of the present disclosure after considering the specification and practicing the disclosed invention. The present disclosure is intended to cover any variations, uses, or adaptive changes of the present disclosure, which follow the general principles of the present disclosure and include common general knowledge or conventional technical means in the art not disclosed in the present disclosure. The specification and embodiments are to be regarded as illustrative only, and the true scope and spirit of the present disclosure are indicated by the following claims.

It should be understood that the present disclosure is not limited to the precise structures described above and shown in the drawings, and various modifications and changes may be made without departing from the scope thereof. The scope of the present disclosure is limited only by the appended claims.

It should be noted that in this document, relational terms such as first and second are used merely to distinguish one entity or operation from another entity or operation, and do not necessarily require or imply any actual relationship or order between such entities or operations. The terms "comprise," "include," or any other variations thereof are intended to cover non-exclusive inclusion, such that a process, method, article, or device that includes a series of elements includes not only those elements but also other elements not explicitly listed, or elements inherent to such process, method, article, or device. Without further limitation, an element defined by the phrase "comprising a..." does not preclude the presence of additional identical elements in the process, method, article, or device that includes the element.

The methods and apparatus provided by the embodiments of the present disclosure have been described in detail above. Specific examples are used herein to explain the principles and implementations of the present disclosure, and the descriptions of the embodiments are only intended to help understand the methods and core ideas of the present disclosure. Meanwhile, those skilled in the art may make changes to the specific implementations and application scopes based on the ideas of the present disclosure. In summary, the content of this specification should not be construed as limiting the present disclosure.

## Claims

1. A method for decoding downlink control information, performed by a terminal, comprising:
determining a quantity of bits occupied by an information field in the downlink control information used to schedule multiple cells; and
decoding the downlink control information according to the quantity of the bits.

2. The method according to claim 1, further comprising:
determining a type of the information field.

3. The method according to claim 2, wherein the type comprises at least one of:
a first type, wherein the downlink control information comprises a first information field, and the first information field of the first type is used to indicate first information of all cells scheduled by the downlink control information;
a second type, wherein the downlink control information comprises a second information field, and the second information field of the second type is used to indicate an index of a combination of second information of at least one scheduled cell; or
a third type, wherein the downlink control information comprises at least one third information field, and each third information field of the at least one third information field indicates third information of a single scheduled cell.

4. The method according to claim 3, wherein determining the quantity of the bits occupied by the information field in the downlink control information used to schedule the multiple cells comprises:
determining a first maximum value among predetermined quantities of bits occupied by first information fields corresponding respectively to all cells schedulable by the downlink control information; and
determining a first quantity of bits occupied by the first information field of the first type according to the first maximum value.

5. The method according to claim 3, wherein determining the quantity of the bits occupied by the information field in the downlink control information used to schedule the multiple cells comprises:
determining a minimum value among predetermined quantities of bits occupied by first information fields corresponding respectively to all cells schedulable by the downlink control information; and
determining a first quantity of bits occupied by the first information field of the first type according to the minimum value.

6. The method according to claim 5, wherein determining the minimum value among the predetermined quantities of the bits occupied by the first information fields corresponding respectively to all cells schedulable by the downlink control information comprises:
determining the minimum value among greater-than-0 predetermined quantities of bits occupied by the first information field corresponding respectively to all cells schedulable by the downlink control information.

7. The method according to claim 5, wherein decoding the downlink control information according to the quantity of bits comprises:
in response to the first quantity of the bits occupied by the first information field of the first type being less than a predetermined quantity of bits occupied by a first information field corresponding to a scheduled cell, decoding the first information field according to the first quantity to determine information indicated by the first information field for the scheduled cell; or
in response to the first quantity of the bits occupied by the first information field of the first type being less than a predetermined quantity of bits occupied by a first information field corresponding to a scheduled cell, padding zeros to the first information field according to a difference between the predetermined quantity and the first quantity, and decoding the zero-padded first information field to determine information indicated by the first information field for the scheduled cell.

8. The method according to claim 4, wherein decoding the downlink control information according to the quantity of the bits comprises at least one of:
in response to the first quantity of the bits occupied by the first information field of the first type being greater than a predetermined quantity of bits occupied by a first information field corresponding to a scheduled cell, determining that an indicated value of the first information field is not applied to the scheduled cell;
in response to the first quantity of the bits occupied by the first information field of the first type being greater than a predetermined quantity of bits occupied by a first information field corresponding to a scheduled cell, adjusting an indicated value of the first information field to a first value, wherein the first value is determined based on a configuration signaling or a predefined rule, and the first value is less than or equal to a maximum indicated value corresponding to the predetermined quantity of the bits;
in response to the first quantity of the bits occupied by the first information field of the first type being greater than a predetermined quantity of bits occupied by a first information field corresponding to a scheduled cell, not processing the downlink control information;
in response to the first quantity of the bits occupied by the first information field of the first type being greater than a predetermined quantity of bits occupied by a first information field corresponding to a scheduled cell, not processing the first information field; or
in response to the first quantity of the bits occupied by the first information field of the first type being greater than a predetermined quantity of bits occupied by a first information field corresponding to a scheduled cell, determining an indicated value of the first information field for the scheduled cell according to the predetermined quantity of the bits occupied by the first information field corresponding to the scheduled cell.

9. The method according to claim 3, wherein determining the quantity of the bits occupied by the information field in the downlink control information used to schedule the multiple cells comprises:
determining an index of a combination of second information indicatable by the second information field of the second type; and
determining a second quantity of bits occupied by the second information field of the second type according to a second maximum value of the index.

10. The method according to claim 3, wherein determining the quantity of bits occupied by the information field in the downlink control information used to schedule the multiple cells comprises:
determining cell groups schedulable by the downlink control information;
determining a first quantity sum of predetermined quantities of bits occupied by third information fields corresponding respectively to all cells of each of the cell groups; and
determining a third quantity sum of the bits occupied by the at least one third information field of the third type according to a maximum value among first quantity sums.

11. The method according to claim 3, wherein determining the quantity of the bits occupied by the information field in the downlink control information used to schedule the multiple cells comprises:
determining a cell set corresponding to the downlink control information; and
determining a third quantity sum of the bits occupied by the at least one third information field of the third type according to a second quantity sum of predetermined quantities of bits occupied by third information fields corresponding respectively to all cells in the cell set, wherein at least one cell in the cell set is in a one-to-one correspondence with the at least one third information field, and the one-to-one correspondence is fixed.

12. The method according to claim 3, wherein determining the quantity of the bits occupied by the information field in the downlink control information used to schedule the multiple cells comprises:
determining cell groups schedulable by the downlink control information;
determining a fourth quantity sum of bits occupied by at least one information field corresponding respectively to all cells of each of the cell groups; and
determining a third quantity sum of the bits occupied by the at least one information field according to a maximum value among fourth quantity sums.

13. The method according to claim 12, wherein the at least one information field comprises all the third information fields in the downlink control information, and determining the quantity of the bits occupied by the information field in the downlink control information used to schedule the multiple cells comprises:
determining a fourth quantity sum of the bits occupied by all the third information fields corresponding respectively to all cells of each of the cell groups; and
determining the third quantity sum of the bits occupied by all the third information fields according to a maximum value among the fourth quantity sums.

14. The method according to any one of claims 10 to 13, wherein decoding the downlink control information according to the quantity of bits comprises:
determining at least one scheduled cell scheduled by the downlink control information; and
determining the bits occupied by the at least one third information field corresponding to the at least one scheduled cell according to a correspondence between the bits occupied by the at least one third information field and an identifier of the at least one scheduled cell.

15. The method according to claim 14, wherein decoding the downlink control information according to the quantity of bits further comprises:
determining a fifth quantity sum of the bits occupied by the at least one third information field corresponding to the at least one scheduled cell;
in response to the fifth quantity sum being less than the third quantity sum, determining a difference quantity according to the third quantity sum and the fifth quantity sum; and
not processing the difference quantity of bits in the third quantity sum of bits.

16. The method according to claim 2, wherein determining the type of the information field comprises at least one of:
determining the type of the information field according to a signaling of a scheduling cell;
determining the type of the information field according to signaling of a reference cell; or
determining the type of the information field according to the downlink control information.

17. The method according to any one of claims 1 to 16, further comprising: determining a quantity of bits occupied by the downlink control information by one of the following methods:
determining the quantity of the bits occupied by the downlink control information according to a signaling of a scheduling cell;
determining the quantity of the bits occupied by the downlink control information according to a signaling of a reference cell; or
determining the quantity of the bits occupied by the downlink control information according to a quantity of bits occupied by each information field in the downlink control information.

18. The method according to claim 16 or 17, wherein the reference cell comprises at least one of:
a cell used to calculate a size of the downlink control information;
a cell used to calculate a blind detection resource of the downlink control information; or
a cell configured with a search space corresponding to the downlink control information.

19. A method for generating downlink control information, performed by a network device, comprising:
determining a quantity of bits occupied by an information field in downlink control information used to schedule multiple cells;
generating the downlink control information according to the quantity of the bits; and
sending the downlink control information to a terminal.

20. The method according to claim 19, further comprising:
determining a type of the information field.

21. The method according to claim 20, wherein the type comprises at least one of the following:
a first type, wherein the downlink control information comprises a first information field, and the first information field of the first type is used to indicate first information of all cells scheduled by the downlink control information;
a second type, wherein the downlink control information comprises a second information field, and the second information field of the second type is used to indicate an index of a combination of second information of at least one scheduled cell; or
a third type, wherein the downlink control information comprises at least one third information field, and each third information field of the at least one third information field indicates third information of a single scheduled cell.

22. The method according to claim 21, wherein determining the quantity of the bits occupied by the information field in the downlink control information used to schedule the multiple cells comprises:
determining a first maximum value among predetermined quantities of bits occupied by first information fields corresponding respectively to all cells schedulable by the downlink control information; and
determining a first quantity of bits occupied by the first information field of the first type according to the first maximum value.

23. The method according to claim 21, wherein determining the quantity of the bits occupied by the information field in the downlink control information used to schedule the multiple cells comprises:
determining a minimum value among predetermined quantities of bits occupied by first information fields corresponding respectively to all cells schedulable by the downlink control information; and
determining a first quantity of bits occupied by the first information field of the first type according to the minimum value.

24. The method according to claim 23, wherein determining the minimum value among the predetermined quantities of the bits occupied by the first information fields corresponding respectively to all cells schedulable by the downlink control information comprises:
determining the minimum value among greater-than-0 predetermined quantities of bits occupied by the first information field corresponding respectively to all cells schedulable by the downlink control information.

25. The method according to claim 23, wherein generating the downlink control information according to the quantity of bits comprises:
in response to the first quantity of the bits occupied by the first information field of the first type being less than a predetermined quantity of bits occupied by a first information field corresponding to a scheduled cell, generating the first information field occupying the first quantity of bits, wherein the first information field is used to indicate information of the schedule cell; or
in response to the first quantity of the bits occupied by the first information field of the first type being less than a predetermined quantity of bits occupied by a first information field corresponding to a scheduled cell, padding zeros to the first information field according to a difference between the predetermined quantity and the first quantity, wherein the zero-padded first information field is used to indicate information of the scheduled cell.

26. The method according to claim 22, wherein generating the downlink control information according to the quantity of the bits comprises at least one of:
in response to the first quantity of the bits occupied by the first information field of the first type being greater than a predetermined quantity of bits occupied by a first information field corresponding to a scheduled cell, determining that an indicated value of the first information field is not applied to the scheduled cell;
in response to the first quantity of the bits occupied by the first information field of the first type being greater than a predetermined quantity of bits occupied by a first information field corresponding to a scheduled cell, determining that a first value obtained by adjusting an indicated value of the first information field is used to indicate information of the scheduled cell, wherein the first value is determined based on a configuration signaling or a predefined rule, and the first value is less than or equal to a maximum indicated value corresponding to the predetermined quantity of the bits;
in response to the first quantity of the bits occupied by the first information field of the first type being greater than a predetermined quantity of bits occupied by a first information field corresponding to a scheduled cell, determining that the terminal does not process the downlink control information;
in response to the first quantity of the bits occupied by the first information field of the first type being greater than a predetermined quantity of bits occupied by a first information field corresponding to a scheduled cell, determining that the terminal does not process the first information field; or
in response to the first quantity of the bits occupied by the first information field of the first type being greater than a predetermined quantity of bits occupied by a first information field corresponding to a scheduled cell, determining that the predetermined quantity of the bits occupied by the first information field corresponding to the scheduled cell is used to indicate information of the scheduled cell.

27. The method according to claim 21, wherein determining the quantity of the bits occupied by the information field in the downlink control information used to schedule the multiple cells comprises:
determining an index of a combination of second information indicatable by the second information field of the second type; and
determining a second quantity of bits occupied by the second information field of the second type according to a second maximum value of the index.

28. The method according to claim 21, wherein determining the quantity of bits occupied by the information field in the downlink control information used to schedule the multiple cells comprises:
determining cell groups schedulable by the downlink control information;
determining a first quantity sum of predetermined quantities of bits occupied by third information fields corresponding respectively to all cells of each of the cell groups; and
determining a third quantity sum of the bits occupied by the at least one third information field of the third type according to a maximum value among first quantity sums.

29. The method according to claim 21, wherein determining the quantity of the bits occupied by the information field in the downlink control information used to schedule the multiple cells comprises:
determining a cell set corresponding to the downlink control information; and
determining a third quantity sum of the bits occupied by the at least one third information field of the third type according to a second quantity sum of predetermined quantities of bits occupied by third information fields corresponding respectively to all cells in the cell set, wherein cells in the cell set are in a one-to-one correspondence with the at least one third information field, and the one-to-one correspondence is fixed.

30. The method according to claim 21, wherein determining the quantity of the bits occupied by the information field in the downlink control information used to schedule the multiple cells comprises:
determining cell groups schedulable by the downlink control information;
determining a fourth quantity sum of bits occupied by at least one information field corresponding respectively to all cells of each of the cell groups; and
determining a quantity of the bits occupied by the at least one information field according to a maximum value among fourth quantity sums.

31. The method according to claim 30, wherein the at least one information field comprises the third information field, and determining the quantity of the bits occupied by all the third information fields according to the maximum value among the fourth quantity sums comprises:
determining a fourth quantity sum of the bits occupied by all the third information fields corresponding respectively to all cells of each of the cell groups; and
determining a quantity of the bits occupied by all the third information fields of the third type according to the maximum value among the fourth quantity sums.

32. The method according to any one of claims 28 to 31, wherein generating the downlink control information according to the quantity of the bits comprises:
determining at least one scheduled cell scheduled by the downlink control information; and
determining the bits occupied by the at least one third information field corresponding to the at least one scheduled cell according to a correspondence between the bits occupied by the at least one third information field and an identifier of the at least one scheduled cell.

33. The method according to claim 32, wherein generating the downlink control information according to the quantity of bits further comprises:
determining a fifth quantity sum of the bits occupied by the at least one third information field corresponding to the at least one scheduled cell;
in response to the fifth quantity sum being less than the third quantity sum, determining a difference quantity according to the third quantity sum and the fifth quantity sum; and
determining that the terminal does not process the difference quantity of bits in the third quantity sum of bits.

34. The method according to claim 20, further comprising:
indicating the type of the information field to the terminal, wherein indicating the type of the information field to the terminal comprises at least one of the following:
indicating the type of the information field to the terminal through a signaling of a scheduling cell;
indicating the type of the information field to the terminal through a signaling of a reference cell; or
indicating the type of the information field to the terminal through the downlink control information.

35. The method according to any one of claims 19 to 34, further comprising:
indicating the quantity of the bits occupied by the downlink control information to the terminal through a signaling of a scheduling cell and/or a reference cell; and/or
determining the quantity of the bits occupied by the downlink control information according to the quantity of bits occupied by each information field in the downlink control information.

36. The method according to claim 34 or 35, wherein the reference cell comprises at least one of:
a cell used to calculate a size of the downlink control information;
a cell used to calculate a blind detection resource of the downlink control information; or
a cell configured with a search space corresponding to the downlink control information.

37. An apparatus for decoding downlink control information, comprising:
a processing module, configured to determine a quantity of bits occupied by an information field in downlink control information used to schedule multiple cells and decode the downlink control information according to the quantity of the bits.

38. An apparatus for generating downlink control information, comprising:
a processing module, configured to determine a quantity of bits occupied by an information field in downlink control information used to schedule multiple cells and generate the downlink control information according to the quantity of the bits; and
a sending module, configured to send the downlink control information to a terminal.

39. A system for processing downlink control information, comprising a terminal and a network device, wherein the terminal is configured to perform the method for decoding downlink control information according to any one of claims 1 to 18, and the network device is configured to perform the method for generating downlink control information according to any one of claims 19 to 36.

40. A communication apparatus, comprising:
a processor;
a memory used to store a computer program that, when executed by the processor, causes the method for decoding downlink control information according to any one of claims 1 to 18 to be implemented.

41. A communication apparatus, comprising:
a processor;
a memory used to store a computer program that, when executed by the processor, causes the method for generating downlink control information according to any one of claims 19 to 36 to be implemented.

42. A computer-readable storage medium having stored therein a computer program that, when executed by a processor, causes the method for decoding downlink control information according to any one of claims 1 to 18 to be implemented.

43. A computer-readable storage medium having stored therein a computer program that, when executed by a processor, causes the method for generating downlink control information according to any one of claims 19 to 36 to be implemented.
